# EUROPEAN PATENT APPLICATION

(11) **EP 4 768 228 A1**
(43) Date of publication of application: **01.07.2026**
(21) Application number: 24884754.3
(22) Date of filing: 29.10.2024
(51) Int. Cl.: B29C 64/307, B29C 64/357, B33Y 40/00

(54) **SYSTEM AND METHOD FOR THREE-DIMENSIONAL PRINTING**

(30) Priority: 01.11.2023 CN 202311442987; 01.11.2023 CN 202311443000; 19.02.2024 CN 202410185490; 31.05.2024 CN 202410701775; 31.05.2024 CN 202410701786
(71) Applicant: Guangzhou Heygears IMC. Inc, Guangzhou, Guangdong 510663 (CN)
(72) Inventor: WAN, Xin, Guangzhau, Guangdong 510663 (CN); LIANG, Yuhao, Guangzhau, Guangdong 510663 (CN); HUANG, Xianxin, Guangzhau, Guangdong 510663 (CN); HU, Jun, Guangzhau, Guangdong 510663 (CN); GUI, Jianbao, Guangzhau, Guangdong 510663 (CN); ZHANG, Haidong, Guangzhau, Guangdong 510663 (CN); YAO, Xiaoxia, Guangzhau, Guangdong 510663 (CN); LUO, Ming, Guangzhau, Guangdong 510663 (CN); LIU Qingshan, Guangzhau, Guangdong 510663 (CN); LUO, Jianxin, Guangzhau, Guangdong 510663 (CN); SU, Shutian, Guangzhau, Guangdong 510663 (CN)
(74) Representative: Herzog IP Patentanwalts GmbH
(86) International application number: PCT/CN2024/128261
(87) International publication number: WO 2025/092751

(57) **Abstract**

Provided in the present disclosure are a system and method for three-dimensional printing. The system comprises a post-processing apparatus. The post-processing apparatus comprises: an object receiving mechanism, comprising an object receiving body, the object receiving body is configured to carry a 3D printed object with residual printing materials; and a driving mechanism, configured to allow the object receiving mechanism to rotate from a first state to a second state such that the residual printing materials drip from the 3D printed object, wherein the 3D printed object has at least two different tilt angles. The technical solutions of the present disclosure effectively solve the problems of a poor separation effect of separating the residual printing materials from the 3D printed object and low efficiency in the related art.

## Description

### Cross-Reference to Related Application

The present disclosure claims priority to Chinese Patent Application No. CN202311442987.8 filed to the China National Intellectual Property Administration on November 01, 2023 and entitled "Post-Processing Apparatus, Method and 3D Printing System for 3D Printed Object"; Chinese Patent Application No. CN202311443000.4 filed to the China National Intellectual Property Administration on November 01, 2023 and entitled "Post-Processing Apparatus, and 3D Printing System and Method for 3D Printed Object"; Chinese Patent Application No. CN202410185490.0 filed to the China National Intellectual Property Administration on February 19, 2024 and entitled "Method, Apparatus, and System for Producing Three-Dimensional Object, and Storage Medium and Electronic Device"; Chinese Patent Application No. CN2024107017755 filed to the China National Intellectual Property Administration on May 31, 2024 and entitled "Post-Processing Apparatus, Three-Dimensional Printing Device, and System for Three-Dimensional Printing"; and Chinese Patent Application No. CN2024107017863 filed to the China National Intellectual Property Administration on May 31, 2024 and entitled "System and Method for Three-Dimensional Printing", the applications of which are hereby incorporated by reference in their entirety.

### Technical Field

The present disclosure relates to the technical field of three-dimensional printing, and specifically to a system and method for three-dimensional printing.

### Background

3D printing technologies are to create three-dimensional objects by using 3D printing devices in a layer-by-layer manner according to three-dimensional model data of the objects. The 3D printing technologies may overcome a problem that a special structure cannot be realized by existing conventional machining, thereby realizing simplified production of any complex structural component. Current 3D printing technologies include Stereo Lithography Appearance (SLA), Digital Light Processing (DLP), a Liquid Crystal Display (LCD) technology, Fused Deposition Modeling (FDM), Selective Laser Sintering (SLS), etc.

After 3D printing is completed, due to the performance of a printing material itself, for example, a resin material has certain viscosity, such that the resin material may adhere to a surface of a 3D printed object, causing the surface of the 3D printed object to be covered with liquid resin. The presence of these resins may cause significant material losses and increase subsequent processing difficulty. At present, a method of, after printing is completed, placing a 3D printed object on a platform for a period of time and then taking the 3D printed object out is used in the related art, facilitating the flowing back of the resin to a material tray.

However, since the 3D printed objects are of different shapes, the above method for separating residual printing materials in the related art is poor in separation effect and low in efficiency.

### Summary

The present disclosure is mainly intended to provide a system and method for three-dimensional printing, so as to solve the problems of a poor separation effect and low efficiency of a method for separating residual printing materials from a 3D printed object in the related art.

In order to implement the above objectives, a first aspect of the present disclosure provides a system for three-dimensional printing. The system comprises a post-processing apparatus. The post-processing apparatus comprises: an object receiving mechanism, comprising an object receiving body, wherein the object receiving body is configured to carry a 3D printed object with residual printing materials; and a driving mechanism, configured to allow the object receiving mechanism to rotate from a first state to a second state such that the residual printing materials drip from the 3D printed object, wherein the 3D printed object has at least two different tilt angles.

In some embodiments, the driving mechanism is configured to maintain the object receiving mechanism in the first state for a first time period.

In some embodiments, the post-processing apparatus further comprises at least one of a temperature regulation mechanism, an air outlet mechanism, or a vibration mechanism. The temperature regulation mechanism is configured to generate dynamic temperature distribution and/or regulate, based on a pre-configured temperature control strategy, a temperature of a region in which the 3D printed object is located; the air outlet mechanism is configured to generate a flowing gas such that the 3D printed object is placed in the flowing gas to accelerate a flowing of the residual printing materials; and the vibration mechanism is configured to vibrate the 3D printed object to accelerate the flowing of the residual printing materials.

In some embodiments, the system further comprises a 3D printing device. The 3D printing device comprises a forming platform, a material tray, and a separation apparatus, the forming platform has a forming surface, the forming surface is configured to adhere the 3D printed object, and the separation apparatus is configured to separate the 3D printed object from the forming surface.

In some embodiments, the object receiving body is configured to be moved between a first position and a second position, the object receiving body is configured to receive, in the first position, the 3D printed object with the residual printing materials separated from the forming surface, and the object receiving body is rotated from the first state to the second state in the second position.

In some embodiments, the system further comprises an object transferring assembly. The object transferring assembly is configured to be moved between a first position and a second position, in the first position, the object transferring assembly is configured to receive the 3D printed object separated from the forming surface, and in the second position, the object transferring assembly transfers the 3D printed object to the object receiving body.

In some embodiments, the object receiving body has an opening, a liquid outlet, and an accommodating cavity for accommodating the 3D printed object, and the opening and the liquid outlet are both in communication with the accommodating cavity.

In some embodiments, the driving mechanism further comprises a first transmission mechanism, and the first transmission mechanism is connected to the object receiving body in a driving manner, so as to drive the object receiving body to rotate around a transverse axis.

In some embodiments, the object receiving mechanism further comprises a material recycling container, and the material recycling container is configured to receive a printing material from the object receiving body.

In some embodiments, the object receiving mechanism further comprises: a first liquid receiving container and a second liquid receiving container. The first liquid receiving container is configured to receive the printing material from the object receiving body, and the second liquid receiving container separately communicates with the first liquid receiving container and the material recycling container.

Optionally, a liquid receiving track is provided between the second liquid receiving container and a 3D printing device.

In some embodiments, the object receiving mechanism further comprises a pipeline configured to convey the printing material to a material tray, one end of the pipeline communicates with the material recycling container, and the other end of the pipeline communicates with the material tray.

In some embodiments, the object receiving mechanism further comprises an object receiving container, the driving mechanism is able to rotate the object receiving body to move the 3D printed object out from the object receiving body and move the 3D printed object into the object receiving container through an opening of the object receiving container.

In some embodiments, the separation apparatus comprises a shoveling mechanism, the shoveling mechanism comprises: a mounting rack; a shoveling blade, movably provided on the mounting rack, wherein the shoveling blade has an initial position relative to the mounting rack; and a shoveling driving assembly, configured to drive at least one of the shoveling blade or the forming platform such that the shoveling blade and the forming platform move relative to each other, so as to separate the 3D printed object from the forming surface by the shoveling blade.

In some embodiments, the shoveling mechanism further comprises a cleaning member, the cleaning member is disposed on a side close to the shoveling blade, and in a process of the shoveling blade moving from the initial position, an end of the cleaning member abuts against a surface of the shoveling blade and slides along the surface of the shoveling blade.

In some embodiments, the shoveling mechanism further comprises a liquid receiving member, which is provided on the mounting rack; the liquid receiving member has a liquid receiving port; and the liquid receiving port corresponds to at least one position of the shoveling blade such that the liquid receiving member receives the printing material adhering to the shoveling blade.

In some embodiments, the object transferring assembly comprises a receiving component and an object transferring driving assembly; the receiving component is configured to receive, in the first position, the 3D printed object separated from the forming platform; the object transferring driving assembly is configured to drive the receiving component from the second position to the first position in a material receiving direction, and drive the receiving component from the first position to the second position in a material sending direction; and the receiving component is provided with a liquid discharging portion such that the printing material is able to be discharged from the receiving component through the liquid discharging portion during an object receiving process of the receiving component.

In some embodiments, the 3D printing device further comprises a locking mechanism for the forming platform, and the locking mechanism comprises: a locking assembly, comprising a fixed frame, a fixed plate, and a movable block, wherein the movable block is movably provided on the fixed frame, the fixed plate has a mounting groove, and the mounting groove has an opening; and a platform fixing member, configured to be connected to the forming platform, where the platform fixing member is able to extend into the mounting groove through the opening; the fixed plate has a first engagement element, a first end of the platform fixing member has a second engagement element mated with the first engagement element in an engagement manner, and the movable block has a locking position in which the movable block abuts against a second end of the platform fixing member and an unlocking position in which the movable block separates from the second end of the platform fixing member.

In some embodiments, the 3D printing device further comprises a floating material tray mechanism, and the floating material tray mechanism comprises: a base plate, having a material tray mounting groove, wherein the material tray mounting groove is provided on the base plate, and a side portion of the material tray mounting groove has an opening for inserting the material tray; a floating block, vertically disposed below the base plate in a floatable manner, when the floating block floats upward, an upper end of the floating block is able to extend into the material tray mounting groove, so as to push against the material tray; and a latching assembly, comprising a driving member and a latching member, wherein the driving member and the latching member are provided on a side of the base plate or the floating block, the driving member is able to drive the floating block to rise upward; and the latching member is able to maintain the floating block rising upward to lock the material tray, or the latching member is able to maintain the floating block descending lower such that the material tray is able to be taken and placed through the opening.

In some embodiments, the 3D printing device further comprises a liquid addition mechanism, and the liquid addition mechanism comprises: a liquid addition box, having an inner cavity, and a liquid inlet and a liquid outlet communicated with the inner cavity; a liquid inlet pump, wherein one end of the liquid inlet pump communicates with the liquid inlet, the other end of the liquid inlet pump communicates with a feeding container, and the liquid inlet pump is configured to convey the printing material from the feeding container to the liquid addition box; a liquid outlet pump, wherein one end of the liquid outlet pump communicates with the liquid outlet, the other end of the liquid outlet pump communicates with a material tray of the 3D printing device, and the liquid outlet pump is configured to convey the printing material from the liquid addition box to the material tray of the 3D printing device; and a controller, communicatively connected to the liquid inlet pump and the liquid outlet pump, where the controller is configured to start or stop the liquid inlet pump and the liquid outlet pump.

In some embodiments, the system further comprises a cloud. The cloud is configured to: acquire a plurality of three-dimensional models to be printed, and user case information corresponding to the plurality of three-dimensional models in the cloud, respectively; classify the plurality of three-dimensional models based on the user case information, so as to obtain a target three-dimensional model matching a target user case; and allocate the plurality of classified target three-dimensional models to the 3D printing device and/or a post-processing device according to a preset production strategy, so as to produce three-dimensional objects, the production strategy comprises setting the target three-dimensional models belonging to a same user case in a same production sequence.

In some embodiments, the cloud is further configured to: determine case information identifiers respectively corresponding to the plurality of three-dimensional models according to the user case information, uses a case identifier indicated by the target user case information as a target case identifier, and determine, from the case identifiers respectively corresponding to the plurality of three-dimensional models, a target three-dimensional model matching the target case identifier, so as to obtain the target three-dimensional model matching the target user case; or the cloud determine, according to the user case information, model uploading times respectively corresponding to the plurality of three-dimensional models; and determine the three-dimensional models uploaded within a same time interval as the target three-dimensional models of the same user case.

In some embodiments, after obtaining the target three-dimensional model matching the target user case, the cloud is further configured to: provide layout of the target three-dimensional models belonging to the target user case, so as to obtain a target layout result matching the target user case; and send the target layout result to the 3D printing device for three-dimensional printing.

In some embodiments, the production sequence comprises one or more printing tasks, and the production strategy is configured to: incorporate the target three-dimensional models belonging to a same user case to a same printing task for printing; or set the target three-dimensional models belonging to the same user case to a plurality of printing tasks, and send the plurality of printing tasks to the same 3D printing device for printing; or set the target three-dimensional models belonging to the same user case to a plurality of printing tasks, and send the plurality of printing tasks to different 3D printing devices for printing, respectively.

In some embodiments, the production sequence comprises one or more printing tasks, and the production strategy is configured to: acquire the number of models of the target three-dimensional models matching any user case, and when the number of models is greater than a first preset number, divide all the target three-dimensional models into a plurality of tasks and sends them to the same 3D printing device for printing; or acquire an estimated printing time matching any user case, and when the estimated printing time is longer than a preset time, send unprinted target three-dimensional models corresponding to the user case to other 3D printing devices for printing; or acquire operating states of all 3D printing devices, and when there is a 3D printing device in an idle state, send the unprinted target three-dimensional models in the 3D printing device with the largest number of tasks to the 3D printing device in the idle state for printing; or acquire the number of models of the target three-dimensional models matching any user case, and when the number of models is less than a second preset number, set the target three-dimensional models and target three-dimensional models of other user cases in the same layout and sends them to the 3D printing device for printing.

In some embodiments, the production strategy is configured to: determine production priorities corresponding to target user case information, and allocate the plurality of classified target three-dimensional models to the 3D printing device for three-dimensional object production according to a sequence of the production priorities; and/or adjust, in response to a priority setting operation triggered by a user, the production priorities corresponding to the target user case information, so as to obtain updated production priorities, and produce the three-dimensional objects based on the updated production priorities.

In some embodiments, the 3D printing device comprises: a first controller, configured to receive the plurality of classified target three-dimensional models sent by the cloud, and user case information respectively corresponding to the plurality of target three-dimensional models; a printing mechanism, configured to perform three-dimensional printing based on the plurality of target three-dimensional models, so as to form a plurality of 3D printed objects; and a pick-up apparatus, configured to, after the printing of each task is completed, pick up the plurality of 3D printed objects based on a preset pick-up strategy, where the pick-up strategy comprises setting the 3D printed objects belonging to the same user case to one or more storage members.

In some embodiments, the 3D printing device is further configured to: control a motion parameter of the pick-up apparatus of the 3D printing device according to layout information, when 3D printed objects respectively corresponding to more than two user cases are the same production sequence of the 3D printing device, and after completing the picking up of the 3D printed objects of one user case, pick up the 3D printed objects of the next user case, so as to realize the picking up of the 3D printed objects in a printing region in sequence.

In some embodiments, the pick-up apparatus comprises: an object receiving assembly, comprising one or more storage members, the storage member is configured to store the 3D printed object; and the object receiving assembly stores the 3D printed objects belonging to the same user case in one or more storage members.

In some embodiments, the object receiving assembly comprises a conveying mechanism, the conveying mechanism is configured to drive the storage member to move to an object receiving position, and when the storage member is located in the object receiving position, the 3D printed object enters into the storage member through an opening of the storage member.

In some embodiments, the system further comprises an object transferring assembly, where the object transferring assembly is configured to be moved between a first position and a second position, in the first position, the object transferring assembly is configured to receive the 3D printed object separated from the forming surface, in the second position, the object transferring assembly transfers the 3D printed object to the object receiving body, the driving mechanism is able to rotate the object receiving body to move the 3D printed object out from the object receiving body and enter the storage member through an opening of the storage member. Or,
the object receiving body is configured to be moved between the first position and the second position, the object receiving body is configured to receive, in the first position, the 3D printed object with the residual printing materials separated from the forming surface, and the object receiving body is rotated from the first state to the second state in the second position; and the driving mechanism is able to rotate the object receiving body to move the 3D printed object out from the object receiving body and move the 3D printed object into the storage member through the opening of the storage member.

In some embodiments, the 3D printing device further comprises a heat dissipation mechanism for dissipating heat from materials in the material tray, and the heat dissipation mechanism comprises at least one of: a fan, a cooling medium, or a scraper.

A second aspect of the present disclosure provides a method for three-dimensional printing. The method comprises the following operations.

An object receiving mechanism is controlled to carry a 3D printed object with residual printing materials; and the object receiving mechanism is rotated from a first state to a second state such that the residual printing materials drip from the 3D printed object, where the 3D printed object has at least two different tilt angles.

In some embodiments, the object receiving mechanism in the first state is maintained for a first time period.

A third aspect of the present disclosure provides a non-volatile storage medium. The non-volatile storage medium stores a plurality of instructions. The instructions are suitable for being loaded by a processor and executing the above method for three-dimensional printing.

By using the technical solutions of the present disclosure, the post-processing apparatus comprises: the object receiving mechanism, comprising an object receiving body, the object receiving body is configured to carry the 3D printed object with residual printing materials; and the driving mechanism, configured to allow the object receiving mechanism to rotate from the first state to the second state such that the residual printing materials drip from the 3D printed object, wherein the 3D printed object has at least two different tilt angles. By using the above method, by adjusting a dripping angle to cause an entire dripping process to be not fixed to a single dripping position, the residual printing materials on the 3D printed object can be better separated, and the efficiency of separating residual resins is improved. Furthermore, by the method provided in the present disclosure, a better resin separation effect can be achieved, solvent consumption and cleaning time during post cleaning are reduced, and the separated resins may also be recycled.

### Brief Description of the Drawings

The accompanying drawings constituting a part of the present disclosure are used to provide a further understanding of the present disclosure. The exemplary embodiments of the present disclosure and the description thereof are used to explain the present disclosure, but do not constitute improper limitations to the present disclosure. In the drawings:
Fig. 1 is a flowchart of an optional method for three-dimensional printing according to an embodiment of the present disclosure.
Fig. 2 is a schematic type diagram of an optional three-dimensional model according to an embodiment of the present disclosure.
Fig. 3 is a schematic layout diagram of an optional three-dimensional model according to an embodiment of the present disclosure.
Fig. 4 is a schematic diagram of an optional bounding box according to an embodiment of the present disclosure.
Fig. 5 is a schematic diagram of an optional connection structure according to an embodiment of the present disclosure.
Fig. 6 is a schematic layout diagram of another optional three-dimensional model according to an embodiment of the present disclosure.
Fig. 7 is a schematic structural diagram of a locking apparatus of a forming platform according to an embodiment of the present disclosure.
Fig. 8 is a schematic diagram of a locking assembly separated from a platform fixing member according to an embodiment of the present disclosure.
Fig. 9 is a front view of a locking apparatus of a forming platform according to an embodiment of the present disclosure.
Fig. 10 is a cross-sectional view at A-A in Fig. 9.
Fig. 11 is a schematic structural diagram of a locking assembly according to an embodiment of the present disclosure.
Fig. 12 is an exploded view of a movable block of a locking assembly according to an embodiment of the present disclosure.
Fig. 13 is a schematic structural diagram of a platform fixing member according to an embodiment of the present disclosure.
Fig. 14 is a schematic structural diagram of a fixed plate of a locking assembly according to an embodiment of the present disclosure.
Fig. 15 is a cross-sectional view of a floating material tray mechanism according to Embodiment I of the present disclosure.
Fig. 16 is another cross-sectional view of a floating material tray mechanism according to Embodiment I of the present disclosure.
Fig. 17 is an exploded view of a floating material tray mechanism according to Embodiment II of the present disclosure.
Fig. 18 is a cross-sectional view of a floating material tray mechanism according to Embodiment II of the present disclosure.
Fig. 19 is another cross-sectional view of a floating material tray mechanism according to Embodiment II of the present disclosure.
Fig. 20 is a schematic structural diagram of a floating material tray mechanism according to an embodiment of the present disclosure.
Fig. 21 is a simple structural diagram of a 3D printing device according to an embodiment of the present disclosure.
Fig. 22 is an exploded view of a liquid addition mechanism according to an embodiment of the present disclosure.
Fig. 23 is a schematic structural diagram of a liquid addition box of a liquid addition mechanism according to an embodiment of the present disclosure.
Fig. 24 is a cross-sectional view of a liquid addition box of a liquid addition mechanism according to an embodiment of the present disclosure.
Fig. 25 is a schematic structural diagram of a temperature regulation assembly of a liquid addition mechanism according to an embodiment of the present disclosure.
Fig. 26 is a front view of a shoveling blade mechanism according to an embodiment of the present disclosure.
Fig. 27 is a schematic structural diagram of a shoveling blade mechanism according to an embodiment of the present disclosure.
Fig. 28 is a schematic diagram of a shoveling blade of a shoveling blade mechanism during moving from an initial position to a moving-forward position according to an embodiment of the present disclosure.
Fig. 29 is a schematic diagram of a shoveling blade of a shoveling blade mechanism during moving from a moving-forward position to an initial position according to an embodiment of the present disclosure.
Fig. 30 is a schematic diagram of a three-dimensional structure of an embodiment of a 3D printing device according to the present disclosure.
Fig. 31 is a schematic diagram of a three-dimensional structure of a shoveling mechanism according to the present disclosure.
Fig. 32 is a schematic bottom view of a shoveling mechanism according to the present disclosure.
Fig. 33 is a schematic diagram of a three-dimensional structure of a fixed support of a shoveling mechanism according to the present disclosure.
Fig. 34 is a schematic diagram of a three-dimensional structure of a shoveling blade in a separation state and the shoveling blade in an initial state according to the present disclosure.
Fig. 35 is a schematic diagram of a three-dimensional structure of another viewing angle of a shoveling mechanism according to the present disclosure.
Fig. 36 is a partial cross-sectional view of a 3D printing device according to an embodiment of the present disclosure.
Fig. 37 is an exploded view of a receiving mechanism according to an embodiment of the present disclosure.
Fig. 38 is a partial enlarged view of a part IV in Fig. 36.
Fig. 39 is a cross-sectional view of a receiving component according to an embodiment of the present disclosure.
Fig. 40 is a cross-sectional view of a receiving component according to another embodiment of the present disclosure.
Fig. 41 is a flowchart of another optional method for three-dimensional printing according to an embodiment of the present disclosure.
Fig. 42 is a schematic structural diagram of an optional 3D printing device according to an embodiment of the present disclosure.
Fig. 43 is a schematic diagram of a three-dimensional structure of a storage member of an object receiving assembly in a closed state according to the present disclosure.
Fig. 44 is a schematic diagram of a three-dimensional structure of a storage member of an object receiving assembly in an open state according to the present disclosure.
Fig. 45 is a schematic diagram of a three-dimensional structure of another viewing angle of a pick-up apparatus according to the present disclosure.
Fig. 46 is a partial enlarged view of a part A of the pick-up apparatus in Fig. 45.
Fig. 47 is a partial enlarged view of a part B of the pick-up apparatus of Fig. 45.
Fig. 48 is a schematic diagram of a three-dimensional structure of a storage member in a closed state according to the present disclosure.
Fig. 49 is a schematic diagram of a three-dimensional structure of a storage member in an open state according to the present disclosure.
Fig. 50 is a schematic diagram of a three-dimensional structure of a skeleton structure of a storage member according to the present disclosure.
Fig. 51 is a schematic structural diagram of another embodiment of a pick-up apparatus of a 3D printing device according to the present disclosure.
Fig. 52 is a schematic diagram of a three-dimensional structure of a pick-up apparatus without mounting a base frame according to the present disclosure.
Fig. 53 is a schematic diagram of a three-dimensional structure of a guiding cylinder and a rolling member according to the present disclosure.
Fig. 54 is a schematic diagram of a three-dimensional structure of a wire feeding assembly of a pick-up apparatus according to the present disclosure.
Fig. 55 is a schematic diagram of a three-dimensional structure of a fastening assembly of a pick-up apparatus according to the present disclosure.
Fig. 56 is a schematic diagram of a three-dimensional structure of a cutting assembly of a pick-up apparatus according to the present disclosure.
Fig. 57 is a schematic diagram of a three-dimensional structure of a storage box of a post-processing apparatus according to the present disclosure.
Fig. 58 is a schematic diagram of a three-dimensional structure of a storage box in an open state according to the present disclosure.
Fig. 59 is a schematic structural diagram of a sliding assembly of a pick-up apparatus according to the present disclosure.
Fig. 60 is a schematic structural diagram of an elevated sliding assembly according to the present disclosure.
Fig. 61 is a schematic structural diagram of a fallen sliding assembly according to the present disclosure.
Fig. 62 is a schematic structural diagram of a manipulator of another optional embodiment of a pick-up apparatus of a 3D printing device according to the present disclosure.
Fig. 63 is a schematic structural diagram of a support frame of a pick-up apparatus according to the present disclosure.
Fig. 64 is a schematic structural diagram of a storage rack of another optional embodiment of a pick-up apparatus of a 3D printing device according to the present disclosure.
Fig. 65 is a schematic main view of a storage rack.
Fig. 66 is a schematic structural diagram of a post-processing apparatus according to an embodiment of the present disclosure.
Fig. 67 is a schematic structural diagram of a 3D printing device according to an embodiment of the present disclosure.
Fig. 68 is another schematic structural diagram of a post-processing apparatus according to an embodiment of the present disclosure.
Fig. 69 is a schematic structural diagram of an object receiving body of a post-processing apparatus according to an embodiment of the present disclosure.
Fig. 70 is another schematic structural diagram of an object receiving body of a post-processing apparatus according to an embodiment of the present disclosure.
Fig. 71 is yet another schematic structural diagram of an object receiving body of a post-processing apparatus according to an embodiment of the present disclosure.
Fig. 72 is a schematic diagram of yet another structure of an object receiving body of a post-processing apparatus in another use state according to an embodiment of the present disclosure.
Fig. 73 is another schematic structural diagram of a 3D printing device according to an embodiment of the present disclosure.
Fig. 74 is a front view of a post-processing apparatus according to an embodiment of the present disclosure.
Fig. 75 is a right view of an object receiving mechanism and a 3D printed object according to an embodiment of the present disclosure.
Fig. 76 is a schematic structural diagram of a 3D printed object according to the present disclosure.
Fig. 77 is a schematic diagram of residual resins cleaned through centrifugation in the related art.
Fig. 78 is another front view of a post-processing apparatus according to an embodiment of the present disclosure.
Fig. 79 is a schematic structural diagram of an object receiving mechanism according to an embodiment of the present disclosure.
Fig. 80 is a front view of a post-processing apparatus according to an embodiment of the present disclosure.
Fig. 81 is a schematic diagram of dynamic temperature distribution according to an embodiment of the present disclosure.
Fig. 82 is a front view of a post-processing apparatus according to an embodiment of the present disclosure.
Fig. 83 is a front view of a post-processing apparatus according to an embodiment of the present disclosure.
Fig. 84 is a front view of a post-processing apparatus according to an embodiment of the present disclosure.
Fig. 85 is a schematic diagram of a centrifugal force.

The above drawings include the following reference numerals:
100: 3D printing device;
11: Forming platform; 110: Locking assembly; 111: Fixed frame; 1111: Driving member; 1112: Rotary shaft; 1113: Handle; 1114: Rotating cam; 112: Fixed plate; 1121: First engagement element; 1122: Engagement groove; 1123: Movable block; 1131: First limiting slope; 1132: Base body; 1133: Pressure block; 1134: First spring; 1135: First screw; 1136: Second spring; 1137: First elevating block; 1138: Second elevating block; 114: Slidable guiding structure; 1141: First guiding slope; 1142: Second guiding slope; 115: Guiding block; 116: Second screw; 117: Third spring; 118: Platform fixing member; 1181: Second engagement element; 1182: Wedge-shaped block; 1183: Second limiting slope; 1184: First locking block; 1185: Second locking block; 119: Position detection member;
12: Material tray; 120: Base plate; 121: Guide post; 122: substrate; 123: Pressure block; 124: Communicating groove; 125: Floating block; 1251: First avoiding groove; 1252: Second avoiding groove; 1253: First rubber pad; 1254: Second rubber pad; 1255: Protrusion; 126: Latching assembly; 1261: Driving member; 1262: Latching member; 1271: Electromagnet; 1272: Rotary shaft; 1273: Cam; 1274: Magnetic plate; 128: Bearing seat; 1281: Bearing; 1282: Handle; 1283: Elastic member;
13: Separation apparatus; 130: Mounting rack; 131: Shoveling blade guide rail; 132: Shoveling blade; 1321: Cutter edge; 1322: Inclined plane; 1323: Shoveling blade seat; 133: liquid receiving member; 1331: Connecting flange; 1332: Limiting flange; 134: Cleaning member; 135: Second support; 136: Platform base plate; 137: First support; 1371: Top plate; 1372: Support beam; 1373: Movable support; 1381: Shoveling driving assembly; 1382: Transmission shaft; 1383: First transmission belt; 1384: First belt pulley; 1385: Second belt pulley; 1386: Second transmission belt; 1390: Fixed support; 1391: Connecting protrusion; 1392: Positioning protrusion; 1393: Positioning hole;
14: Object transferring assembly; 141: Receiving component; 142: Bottom plate; 1421: liquid discharging portion; 1422: First slope surface; 1423: Second slope surface; 143: Bearing plate; 1431: Liquid passing hole; 1433: First side plate; 1434: Second side plate; 144: Object pushing assembly; 1441: Object pushing member; 145: Liquid storage cavity; 146: Filtering assembly; 1461: Filter screen; 1462: Clamp plate; 147: Avoiding groove;
15: Liquid addition mechanism; 150: Liquid addition box; 151: Inner cavity; 152: Liquid inlet; 153: Liquid outlet; 154: Temperature regulation assembly; 1541: Temperature control plate; 1542: Heat sink; 1543: Communicating pipe; 1544: Support; 1545: Temperature detection member; 155: Control panel; 1551: Liquid level detection member; 1552: Capacitance liquid level meter; 1553: Ultrasonic liquid level meter; 156: Collection tank; 1561: Base; 1562: Baffle plate; 157: Liquid inlet pump; 158: Liquid outlet pump;
200: Pick-up apparatus; 20: Object receiving assembly; 21: Storage member; 211: Skeleton; 2111: First skeleton body portion; 2112: Second skeleton body portion; 2113: Elastic member; 212: Storage box; 2121: Box body; 2122: Lid; 2123: Stopper; 22: Conveying mechanism; 221: First transmission element; 222: Second transmission element; 223: Base frame; 224: Guiding cylinder; 225: Rolling member; 2251: Mounting rack; 2252: Rotary drum; 2253: First rolling member; 2254: Second rolling member; 226: Sliding assembly; 2261: Sliding table; 2262: Connecting rod; 23: Opening mechanism; 231: Fixed mechanism; 2311: Positioning frame; 2312: First telescoping member; 232: Mobile mechanism; 2321: Mobile member; 2322: Second telescoping member; 2323: Guiding structure; 2324: Fixed frame; 2325: First driving member; 2326: First transmission assembly; 23261: First transmission wheel; 23262: Second transmission wheel; 23263: First chain belt; 23264: Third transmission wheel; 23265: Second chain belt; 24: Sealing mechanism; 241: Wire feeding assembly; 242: Fastening assembly; 251: Second transmission assembly; 2511: First gear; 2512: Second gear; 2513: Rotating wheel; 2514: Third chain belt; 252: Second driving member; 253: Tightening assembly; 2531: First tightening member; 2532: Second tightening member; 26: Support frame; 261: Container; 27: Storage rack; 28: Cutting assembly; 281: Pedestal; 2811: First pedestal body; 2812: Second pedestal body; 28121: Strip-shaped hole; 282: First cutter body; 283: Second cutter body; 284: Third driving member; 285: Elastic support member; 29: Manipulator; 201: Connecting-rod-like connection structure; 202: Grid-like connection structure;
300: Post-processing apparatus; 3: Object receiving mechanism; 31: Object receiving body; 310: Opening; 311: Liquid outlet; 312: Accommodating cavity; 313: Side portion; 314: Bottom portion; 32: Cover plate; 321: Stopper; 33: First liquid receiving container; 34: Second transmission mechanism; 341: Fan-shaped gear; 342: Rack; 35: Object receiving container; 36: Second liquid receiving container; 37: Liquid receiving track; 38: Transfer receiving container; 391: Toggle mechanism; 392: Third transmission mechanism;
4: Movable mechanism; 41: Driving mechanism; 411: First transmission mechanism; 412: Sliding assembly; 4121: Sliding table; 4122: Connecting rod; 5: Temperature regulation mechanism; 51: Air outlet assembly; 52: Heat source; 53: Guide rail; 54: Temperature sensor; 6: Residual printing material; 7: Material recycling container; 8: 3D printed object; 81: Liquid accumulation region.

### Detailed Description of the Embodiments

The technical solutions in the embodiments of the present disclosure will be clearly and completely described below in combination with the drawings in the embodiments of the present disclosure. Obviously, the described embodiments are only part of the embodiments of the present disclosure, not all the embodiments. The following description of at least one exemplary embodiment is merely illustrative in nature and is not intended to limit the present disclosure and application or use thereof in any way. Based on the embodiments in the present disclosure, all other embodiments obtained by those of ordinary skill in the art without creative work shall fall within the protection scope of the present disclosure.

It is to be noted that, terms used herein are intended to describe specific implementations only and are not intended to limit exemplary embodiments according to the present disclosure. As used herein, unless the context clearly indicates otherwise, a singular form is also intended to include a plural form. In addition, it is further understood that when the terms "including" and/or "comprising" are used in this specification, the terms indicate the presence of features, steps, operations, devices, components, and/or combinations thereof.

Unless specifically stated otherwise, the relative arrangement, numerical expressions, and numerical values of the components and steps set forth in these embodiments do not limit the scope of the present disclosure. In addition, it is to be understood that the dimension of each portion shown in the drawings is not drawn to actual scale for ease of description. Techniques, methods, and devices known to those of ordinary skill in the relevant art may not be discussed in detail, but where appropriate, such techniques, methods, and devices should be considered as a part of the specification. In all examples shown and discussed herein, any specific value should be construed as illustrative merely and not as limitations. Accordingly, other examples of the exemplary embodiments may have different values. It is to be noted that similar numbers and letters indicate similar items in the following drawings, so once a certain item is defined in one drawing, no further discussions are required for same in the subsequent drawings.

The present disclosure provides a system for three-dimensional printing. In an implementation step, after a 3D printing device completes printing, a post-processing apparatus processes residual printing materials on a 3D printed object (e.g., causing the printing materials to drip for recycling), and then collects the materials. Or, in an implementation step, a cloud processes a three-dimensional model, the cloud allocates a plurality of classified target three-dimensional models to the 3D printing device according to a preset production strategy, so as to produce the three-dimensional object, and after the 3D printing device completes printing, the post-processing apparatus processes residual printing materials on the 3D printed object, and then collects the materials. Or, in an implementation step, the cloud processes a three-dimensional model, the cloud allocates a plurality of classified target three-dimensional models to the 3D printing device according to a preset production strategy, so as to produce the three-dimensional object, and after the 3D printing device completes printing, the post-processing apparatus first processes the residual printing materials on the 3D printed object, and then a pick-up apparatus picks up the plurality of 3D printed objects.

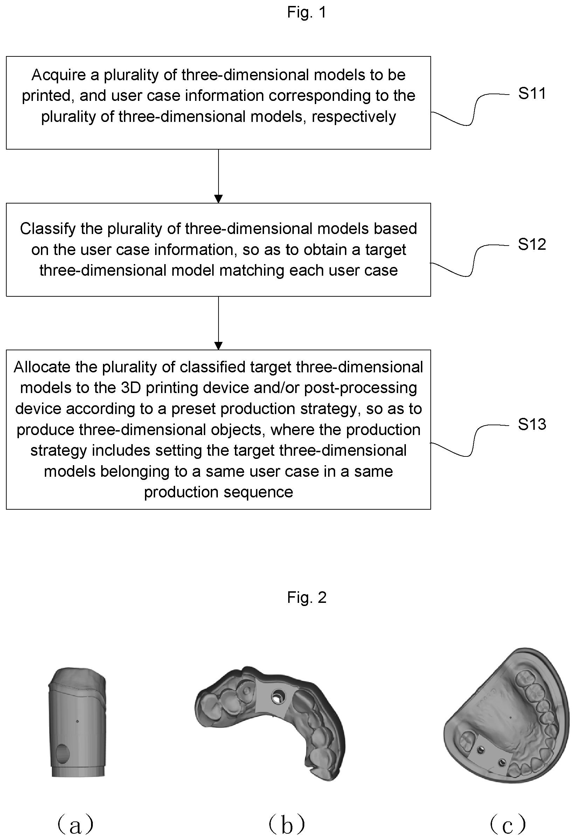

The present disclosure provides a system for three-dimensional printing. The system comprises a cloud, and the cloud is configured to execute a method for three-dimensional printing. As shown in Fig. 1, the method comprises the following steps.

Step S11: the cloud acquires a plurality of three-dimensional models to be printed, and user case information corresponding to the plurality of three-dimensional models in the cloud, respectively.

It can be appreciated that, the plurality of three-dimensional models in the cloud to be printed are a mix of a plurality of cases and are not classified according to the user case information, such that the cloud needs to acquire the user case information corresponding to the plurality of three-dimensional models respectively for subsequent classification and layout.

In an optional embodiment, the cloud acquires a plurality of three-dimensional models to be printed comprising: the cloud acquires a plurality of initial models to be printed (which have different three-dimensional configurations and dimensions); the cloud performs defect verification on the plurality of initial models, so as to obtain verification results respectively corresponding to the plurality of initial models; the cloud determines that the verification results respectively corresponding to the plurality of initial models indicate the presence of a defective abnormal model; and the abnormal model is repaired to obtain the plurality of three-dimensional models.

It can be appreciated that, the plurality of initial models is regarded as a mix of a plurality of cases. In order to ensure that the plurality of initial models used by the cloud are free of abnormal models, ensure that there are no missing or lost portions exist, so as to facilitate subsequent matching with the user case information, the cloud performs defect verification on the plurality of initial models to obtain the verification results respectively corresponding to the plurality of initial models. The abnormal models are repaired according to the verification results, so as to obtain the plurality of three-dimensional models.

Optionally, there are variety ways to perform verification process, for example, the initial model is a three-dimensional model consisting of triangular facets, and it is expected that all triangular facets form a closed region and normal vectors of all the triangular facets face outwards, thereby considering that the model is closed. When defects such as holes or inverted triangular facets in the initial model are detected, it is determined that the initial model is not closed. The inverted triangular facet is a collection defect in the three-dimensional model, and means that, in a triangular facet, its normal vector points to the inside of the model. Normal vectors of all triangular facets in a normal three-dimensional model are oriented toward an outer surface of the model. When the normal vector of the triangular facet faces inward, that is, pointing to the inside of the model, it is referred to as an inverted triangular facet. Such defect is cappble of causing errors in model operations, such as rendering or physical simulation.

Optionally, the cloud uses different repair methods for different defects, when the verification result indicates that there is a hole, determines a hole edge of the initial model with the hole, and automatically repairs the edge such that the model forms a closed region.

Optionally, when the verification result indicates that there is an inverted triangular facet, the cloud determines a normal vector of the inverted triangular facet, and performs reverse processing on the above normal vector such that the initial model forms a closed region. Finally, after automatic repairing, the plurality of repaired three-dimensional models are used for a subsequent operation.

Step S12: the cloud classifies the plurality of three-dimensional models based on the user case information, so as to obtain a target three-dimensional model matching each user case.

In an optional embodiment, the cloud classifies the plurality of three-dimensional models based on the user case information, so as to obtain the target three-dimensional model matching each user case comprising: the cloud determines the case identifiers respectively corresponding to the plurality of three-dimensional models according to the user case information,, uses case identifiers indicated by each piece of user case information as target case identifiers, and determines the target three-dimensional models matching the target case identifiers from the case identifiers respectively corresponding to the plurality of three-dimensional models, so as to obtain the target three-dimensional models matching each user case.

It can be appreciated that, after selecting one user case, the cloud uses the user case information as target case information. The target case information is used as a basis for model screening. In the user case information respectively corresponding to the plurality of above three-dimensional models respectively, models matching the target case information are determined as the target three-dimensional models. In other words, the target three-dimensional models having consistent target case information may use the same case or are models of the same user. Through the above processing, the cloud screens the target three-dimensional models of target case information from the plurality of three-dimensional models mixed with the plurality of cases. The above step of selecting the target case is repeated until classification of all models is completed, so as to obtain the target three-dimensional models matching each user case.

In an implementation, the case identifiers respectively corresponding to the plurality of three-dimensional models include a correspondence relationship between each three-dimensional model and a specific user case identifier. By finding the user case identifier of the target three-dimensional model, that is, the target case identifier, the target three-dimensional model is screened from the plurality of three-dimensional models.

Optionally, the above user case information respectively corresponding to the plurality of three-dimensional models is stored in a predetermined database, to achieve the process of matching the target case identifier involves comparison and matching processes, for example, operations such as database query, condition screening, comparison, matching, etc.

Optionally, each piece of user case information imported for processing has a corresponding naming rule, generally: XXX_XXX_XXX, during preliminary classification, for example, located in the same file, the same user case is determined based on each identical file naming prefix. For example, a user A continuously uploads models (e.g., orthodontic dental models) A1-A10 at a t1 time period, and a user B continuously uploads models (e.g., abutment tooth models) B1-B10 at a t2 time period. In this case, the models are named as "user A_orthodontic dental model_t1" and "user B_abutment tooth model_t2", respectively. The user case information comprises user A, orthodontic dental model, uploading time t1, user B, abutment tooth model, and uploading time t2, the case comprises the orthodontic dental model and the abutment tooth model, the cloud can first select the user A as the target case information to classify the plurality of three-dimensional models.

In an optional embodiment, classifying the plurality of three-dimensional models based on the user case information, so as to obtain the target three-dimensional model matching each user case comprises: the cloud determines, according to the user case information, model uploading time respectively corresponding to the plurality of three-dimensional models, and determines the three-dimensional models uploaded within a same time interval as the target three-dimensional models of the same user case.

In an implementation, each piece of user case information imported for processing has a corresponding model uploading time, and the cloud performs classification based on an import time of each model. For example, a model of a user case A is imported within the same time period during importing, the user clicks on a completion option after importing is completed, in this case, three-dimensional model data uploaded within the time interval is determined as a target three-dimensional model of the user case A, and then a user case B, a user case C, and others are uploaded according to the above manner, thereby obtaining the target three-dimensional model matching each user case.

Step S13: the cloud allocates the plurality of classified target three-dimensional models to the 3D printing device and/or a post-processing device according to a preset production strategy, so as to produce three-dimensional objects, wherein the production strategy comprises setting the target three-dimensional models belonging to a same user case in a same production sequence.

It is to be noted that, there is one or more 3D printing devices, and the number of the 3D printing devices is not limited in the present disclosure. The cloud comprises one of a cloud server, a local server, a central processing unit, or an LAN server. The term "cloud" in the present disclosure comprises a cloud, a central LAN controller, an external processor, or a local networking device, that is, indicating data storage or processing devices in addition to the 3D printing device. The above production method may be implemented on the cloud, such as a cloud platform, a cloud server, etc.. After the plurality of classified target three-dimensional models are obtained, the cloud performs task allocation and distribution according to the preset production strategy, and each production device performs three-dimensional printing according to received tasks. With respect to a printing operation, the production strategy is pre-configured, which is intended to set the target three-dimensional models belonging to the same user case to the same production sequence to realize centralized production, so as to improve subsequent sorting efficiency.

It is to be noted that, the production sequence comprises a task execution queue of the 3D printing device. The production sequence comprises one or more printing tasks. One production sequence correspond to the plurality of 3D printing devices. Exemplarily, a printing format of the 3D printing device is limited, and the number of models that can be printed in one task, such that, when the number of the target three-dimensional models corresponding to one user case are printed in one task, the target three-dimensional models are prioritized for printing in the same task. When more target three-dimensional models corresponding to the user case need to be printed in a plurality of tasks, the plurality of tasks may be arranged continuously in the same production sequence (e.g., the user A has 100 three-dimensional models to be printed, 50 three-dimensional models are allocated to the first 3D printing device among the 3D printing devices, the other 50 three-dimensional models are allocated to the second 3D printing device among the 3D printing devices, and the printing of these 100 three-dimensional models is in one production sequence) or the plurality of tasks are sented to the same 3D printing device for printing, facilitating subsequent sorting.

In an optional embodiment, after obtaining the target three-dimensional model matching each user case, the method further comprises: the cloud provides layout of the target three-dimensional models belonging to each user case, so as to obtain a target layout result matching each user case; and the cloud sends the target layout result to the 3D printing device for three-dimensional printing.

It can be appreciated that, the target three-dimensional model belongs to one piece of user case information, and the layout of the target three-dimensional model by the cloud is regarded as centralized layout of models of the same case, so as to obtain the target layout result matching each user case. Through the target layout result obtained by the above processing, the target three-dimensional models included in each piece of user case information improved three-dimensional printing efficiency, thereby reduced sorting workloads.

In an optional embodiment, the cloud provides layout of the target three-dimensional models belonging to each user case, so as to obtain the target layout result matching each user case comprising: the cloud classifies the target three-dimensional models belonging to each user case, respectively, so as to obtain three-dimensional model types corresponding to the target three-dimensional models; and the cloud layout the plurality of target three-dimensional models based on the three-dimensional model types respectively corresponding to the target three-dimensional models, so as to obtain the target layout result matching each user case.

It can be appreciated that, the cloud classifies the target three-dimensional models belonging to each user case, respectively, so as to obtain the three-dimensional model types corresponding to the target three-dimensional models. For example, one piece of the user case information is determined as the target user case information, and when the same user case matches the plurality of target three-dimensional models, centralized layout processing is performed on the three-dimensional model types respectively corresponding to the plurality of target three-dimensional models, so as to obtain the target layout result matching the user case. The above processing is repeated until the layout of all user cases is completed. Centralized layout is performed on the target three-dimensional models of the same user case information. Three-dimensional printing efficiency is improved by using the above method to obtain the target layout result. The cloud may allocate to print the plurality of target three-dimensional models together in a centralized manner according to the three-dimensional model types respectively corresponding to the plurality of target three-dimensional models, such that errors generated during sorting are also reduced.

Optionally, the three-dimensional model types formed by photocuring are divided into broad categories: dental types, rehabilitation braces, earphones, toys and garage kits, mechanical parts and accessories, and so on. Then for the corresponding broad categories are further subdivided into: dental types are divided into abutment teeth, full jaw, dies, orthodontic dental models, occlusal splints, etc.; and earphones are divided into earphone shells, etc. Since dental application scenarios are particularly dependent on same-case model classification, the present disclosure preferably uses dental application as examples, but is not limited to dental application scenarios.

By using the dental application as an example, a plurality of target three-dimensional models are matched to the same user case, and the plurality of target three-dimensional models respectively correspond to their respective three-dimensional model types, that is, there are a plurality of types of models in the same case. Specifically, in the dental application, the three-dimensional model type includes at least an abutment tooth model and an oral cavity model. It can be appreciated that, the oral cavity model has gum modeling, in which, for example, position modeling of an implanting hole is set. The abutment tooth model is configured to indicate dental implant modeling of a single tooth, and the two models match up with each other to constitute all three-dimensional modeling of the user case.

It is to be noted that, in the example of the dental application, a die model is a model that is configured to simulate oral cavity situations of a patient, is generally fabricated by an artificial material or 3D printing technology, and may be used for diagnosis, treatment planning, teaching, the fabrication of braces and dental implants, etc. Through a dental die model enables a better understanding of the patient's oral cavity structure and problem, such that the model has an auxiliary treatment function. The abutment tooth model is a dental model that is reproduced according to shapes of abutment teeth in the oral cavity of the patient for the purpose of fabricating restorations such as dental implants in dentistry. The oral cavity model comprises a full-jaw model and a half-jaw model. The full-jaw model refers to a model that is fabricated according to a shape of an entire lower jaw or upper jaw of the patient, and is configured to simulate a structure and shape of the entire maxillofacial region. The half-jaw model refers to a model that is fabricated according to the shape of half lower jaw or upper jaw of the patient, and is configured to simulate the structure and shape of half maxillofacial region. The oral cavity model of a half or quarter opening is also generated according to requirements.

Optionally, the above oral cavity model include the full-jaw model and the half-jaw model (also be referred to as the die model). The full-jaw model comprises digital models of both sides of the oral cavity, and the half-jaw model comprises a digital model of the single side (or half of one side, or one quarter of one side) of one side of the oral cavity.

Fig. 2 is a schematic type diagram of an optional three-dimensional model according to an embodiment of the present disclosure. Fig. 2 comprises a plurality of sub-figures, that is, comprising Fig. 2a, Fig. 2b, and Fig. 2c. Fig. 2a shows the abutment tooth model, an upper portion of the abutment tooth model is a dental crown, and a lower portion inserted in an implanting hole. Fig. 2b shows the oral cavity model, which is a half mouth (half-jaw) model, and there is an implanting hole in the middle of unilateral teeth for the mounting of a dental implant. Fig. 2c shows another oral cavity model, which indicating a full-jaw model which is an overall modeling of an upper gum or lower gum, two implanting holes are included and are configured to mount the dental implants.

It is to be noted that, the above example of the target three-dimensional model and the example of the three-dimensional model type are only schematic, and are not limited to dental applications.

In an optional embodiment, that the cloud classifies the target three-dimensional models belonging to each user case, so as to obtain the three-dimensional model types corresponding to the target three-dimensional models comprising: for one of the plurality of target three-dimensional models, the cloud determines the three-dimensional model type corresponding to the target three-dimensional model by using at least one of the following manners: a model volume of the target three-dimensional model is determined; based on a preset volume threshold and the model volume, the three-dimensional model type corresponding to the target three-dimensional model is determined; or a model shape of the target three-dimensional model is determined; based on the model shape, the three-dimensional model type corresponding to the target three-dimensional model is determined; or a maximum plane area of the target three-dimensional model is determined, and the three-dimensional model type corresponding to the target three-dimensional model is determined based on a preset area threshold and the maximum plane area; or the target three-dimensional model is projected in a preset direction to obtain a projection feature of the target three-dimensional model; based on the projection feature, the three-dimensional model type corresponding to the target three-dimensional model is obtained; and the manner of determining the three-dimensional model type corresponding to the target three-dimensional model is used to obtain the three-dimensional model types respectively corresponding to the plurality of target three-dimensional models.

It can be appreciated that, since there are a variety of three-dimensional model types in the plurality of target three-dimensional models, classification needs to be performed according to the three-dimensional model types. For one target three-dimensional model, the cloud selects a variety of manners to determine the corresponding three-dimensional model type. A selection range of the manner comprises at least any one of the following.

One manner is to determine the model volume of the target three-dimensional model, and based on the preset volume threshold and the model volume, determine the three-dimensional model type corresponding to the target three-dimensional model.

One manner is to determine the model shape of the target three-dimensional model, and based on the model shape, determine the three-dimensional model type corresponding to the target three-dimensional model.

One manner is to determine the maximum plane area of the target three-dimensional model, and determine the three-dimensional model type corresponding to the target three-dimensional model based on the preset area threshold and the maximum plane area.

And one manner is to project the target three-dimensional model in the preset direction to obtain the projection feature of the target three-dimensional model, and based on the projection feature, obtain the three-dimensional model type corresponding to the target three-dimensional model.

It is to be noted that, the types are determined by using one or a combination of several manners described above, so as to improve the accuracy of classification of the three-dimensional model types. Through the above processing, automatic identification may be realized, and the plurality of target three-dimensional models may be classified.

Optionally, using the dental application as an example, the above manner of determining the three-dimensional model type corresponding to the target three-dimensional model by using the model volume is specifically described, assuming that the oral cavity model include the full-jaw model and the half-jaw model. The manner of determining the model volume is that, the volume calculation shown is a normal formula calculation V=L*W*H (length, width and height), where V represents the model volume, L represents a length of the model, W represents a width of the model, and H represents a height of the model. By setting the volume threshold, it is determined, for example, as the oral cavity model if it is greater than the volume threshold, as the abutment tooth model if it is less than the volume threshold, and the like, so as to perform similar classification, such that different three-dimensional model types of target three-dimensional models matching the same user case are obtained. For the application scenario, since the difference in volume between a single tooth and one modeled with a gum is relatively significant, the abutment tooth model is determined by using the model volume threshold, and an oral cavity threshold greater than the volume threshold is also divided into the full-jaw model and the half-jaw model.

Optionally, using the dental application as an example, for the maximum plane area of the target three-dimensional model, the abutment tooth model has the smallest maximum plane area, the half-jaw model has the medium maximum plane area, and the full-jaw model has the largest maximum plane area among the three, such that different three-dimensional model types may be distinguished and classified by setting the area threshold.

Optionally, using the dental application as an example, for a projection shape of the target three-dimensional model, a shape of the abutment tooth model is cylindrical, a shape of the die model is arc-shaped (C-shaped), and a shape of the full-jaw model is D-shaped. The target three-dimensional model is projected in a set direction (e.g., a z-axis direction, that is, an axial direction from a tooth root to a dental crown). The target three-dimensional model is classified according to the projection shape or size. In order to further distinguish the half-jaw model and the full-jaw model, the target three-dimensional model needs to be projected to obtain a projection drawing, and a bounding box of the target three-dimensional model is calculated and distinguished from a proportion of a projection drawing actually obtained.

It is to be noted that, since there is a large difference between the abutment tooth model and the full-jaw model/half-jaw model, determination is preferably performed by using at least one of the above manners of the model volumes, plane areas, or projection shapes. The difference between the full-jaw model and the half-jaw model is smaller compared to the abutment tooth model, such that the abutment tooth model is first screened by using the model volume, and then further classification is performed by using at least one of the manners of plane areas or projection shapes.

For other three-dimensional model applications, such as rehabilitation braces, earphones, toys and garage kits, mechanical parts and accessories, etc., for example, there are also differences in volume, shape, maximum plane area, and projection feature of arms, trunks, heads, etc. of character garage kits and dummies, the above similar manner of dental application may be used, distinguishing is performed by using the model volume, shape, maximum plane area, and projection feature, and details are not described herein again.

In an optional embodiment, the cloud performs layout processing on the plurality of target three-dimensional models based on the three-dimensional model types respectively corresponding to the plurality of target three-dimensional models, so as to obtain the target layout result matching each user case comprising: the cloud performs layout processing on the plurality of target three-dimensional models according to layout parameters, so as to obtain the target layout result matching each user case. The layout parameters include at least one of the following: a preset model spacing parameter, a platform spacing parameter, or the number of times for angle adjustment; the platform spacing parameter is a spacing between each of the plurality of target three-dimensional models and a forming platform; and the number of times for angle adjustment is the number of times that a placement angle is allowed to be adjusted during the layout processing of the corresponding target three-dimensional model.

It can be appreciated that, the cloud performs layout processing on the plurality of target three-dimensional models according to the predetermined layout parameters, so as to realize a centralized printing layout of the models matched to the same user case. The layout parameters comprise at least one of the following: the preset model spacing parameter, the platform spacing parameter, or the number of times for angle adjustment. The model spacing parameter is configured to control a distance between the models to ensure that the models are not overcrowded or scattered during layout processing. The platform spacing parameter is the spacing between the plurality of target three-dimensional models and the forming platform, so as to ensure that the models can be correctly aligned with the surface of the forming platform during printing. The number of times for angle adjustment is the number of times that the placement angle of the target three-dimensional model is allowed to be adjusted during layout processing, so as to prevent a cycle of repeated rearrangements, thereby guaranteeing layout efficiency. Through adjustment and optimization of the above layout parameters, the cloud obtains the target layout result matching the user case, so as to meet different layout requirements and conditions. Therefore, the layout efficiency and accuracy of the same case are improved, and supports are provided for subsequent formation or processing processes.

In an optional embodiment, the cloud performs layout processing on the plurality of target three-dimensional models based on the three-dimensional model types respectively corresponding to the plurality of target three-dimensional models, so as to obtain the target layout result matching each user case comprising: the cloud determines a three-dimensional model type as a first three-dimensional model and a three-dimensional model type as a second three-dimensional model among the plurality of target three-dimensional models; the cloud, when there are a plurality of first three-dimensional models, performs layout processing on the plurality of first three-dimensional models by using a predetermined first distance interval, so as to obtain a first layout result, wherein the first distance interval belongs to the model spacing parameter; and the cloud performs the first layout result and the second three-dimensional model by using a predetermined second distance interval, so as to obtain the target layout result, wherein the second distance interval belongs to the model spacing parameter.

It can be appreciated that, the cloud processes the layout of the plurality of target three-dimensional models based on their corresponding three-dimensional model types. First, the three-dimensional model types is classified into the first three-dimensional models and the second three-dimensional models. The above classification is only an example, and may not be only limited to two categories. The cloud performs layout processing on the plurality of first three-dimensional models by using a predetermined first distance interval, so as to obtain the first layout results. On the basis of the completed first layout result, layout is performed with the second three-dimensional model again. In this process, the cloud uses the predetermined second distance interval to maintain appropriate spacings between the first layout result and the second three-dimensional model, so as to obtain a finalized target layout result. Through the above manner, characteristics and requirements of different types of models are taken into consideration. The cloud achieves a more optimized layout effect by adjusting spacings and layout modes, thereby guaranteeing the accuracy and reasonability of layout, and satisfying the requirements of different types of models.

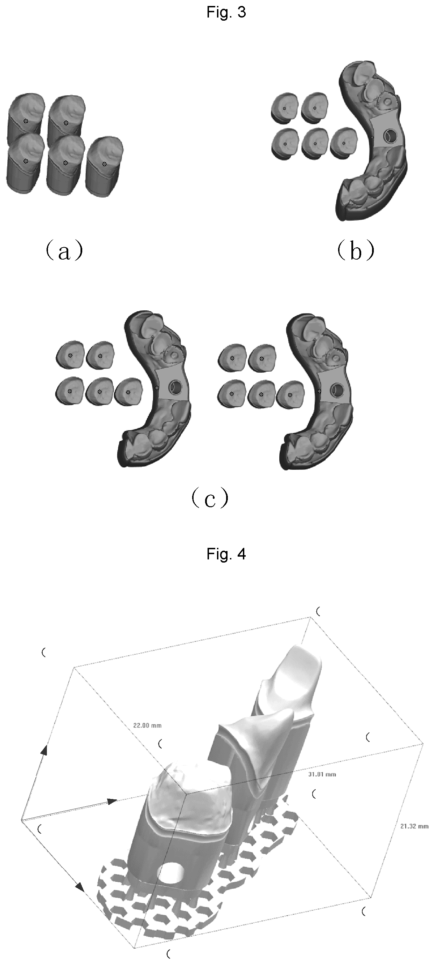

Optionally, using the dental application as an example, an example of the layout of the plurality of target three-dimensional models is provided. Fig. 3 is a schematic layout diagram of an optional three-dimensional model according to an embodiment of the present disclosure. Fig. 3 comprises a plurality of sub-figures, namely Fig. 3a, Fig. 3b, and Fig. 3c. Fig. 3a shows a layout of three-dimensional models. Five abutment tooth models are matched to a target user case in each user case. The above abutment tooth models are of a model type, that is, the above first three-dimensional models; models among the five abutment tooth models, as well as distance intervals between the abutment tooth models and the forming platform, are set according to the first distance interval; and the five well-layout abutment tooth models are used as the first layout results.

Fig. 3b shows the target layout result. Centralized layout is performed on the first layout result and the oral cavity model (e.g., the half-jaw model), and layout is also performed according to the preset second distance interval, so as to obtain the target layout result.

Optionally, when the above first layout result and the second three-dimensional model are performed layout. The cloud obtains a plurality of candidate layout results by using an enumeration method. The Layout areas respectively corresponding to the above plurality of candidate layout results are different. A minimum layout area is determined among the plurality of candidate layout results as the target layout result. The number of times for angle adjustment (not exceeding the number of times for angle adjustment set by the layout parameters) of one model is adjusted by using the enumeration method. Preferably, under the limitation of parameters of 0.1 mm (millimeter) of the model spacing and 0.1 mm of a platform spacing, the target three-dimensional models are layout at maximum efficiency by continuously adjusting and placing the models.

Optionally, the target layout result of the same case is generated for the target three-dimensional models. When there are a plurality of predetermined user cases, target layout results are respectively generated for the plurality of predetermined user cases. According to platform sizes of different 3D printing devices, the target layout results may be respectively generated for the plurality of predetermined user cases and layout on the forming platform of the 3D printing device in a centralized manner. Fig. 3c shows a multi-case layout mode for three-dimensional printing, indicating that the target layout results of two cases are distributed on the forming platform for centralized layout and printing process.

In an optional embodiment, after performing layout processing on the plurality of target three-dimensional models, the method further comprises: the cloud, when there are the plurality of target three-dimensional models belonging to the same user case, adds predetermined connection structures among the plurality of target three-dimensional models belonging to the same user case, so as to form a connection relationship between the plurality of target three-dimensional models of the same user case.

It can be appreciated that, when there are a plurality of target three-dimensional models belonging to the same user case, in order to form the connection relationship between the plurality of target three-dimensional models of the same user case, the addition of the predetermined connection structures among the plurality of target three-dimensional models belonging to the same user case and obtained through matching is taken into consideration. In this manner, the cloud connect the plurality of target three-dimensional models together for subsequent sorting after printing, and clarify which target three-dimensional models described above belong to the same user case.

Optionally, the above predetermined connection structure is a rigid connection or a flexible connection.

In an optional embodiment, the method further comprises: the cloud generates the predetermined connection structure based on a shortest distance path, and the shortest distance path is a connection line between two points with the closest distance among all points between the two target three-dimensional models; and/or the cloud identifies a feature hole in the target three-dimensional model, and generates the predetermined connection structure based on a strategy of avoiding the feature hole.

It can be appreciated that, when generating the predetermined connection structure, the cloud generate a connection structure based on the shortest distance path, and the shortest distance path refers to the connection line between two points with the closest distance among all points between the above two target three-dimensional models. By generating the connection structure based on the shortest distance path, the effectiveness of the connection structure may be ensured, thereby reducing unnecessary connection costs. Furthermore, the feature hole in the target three-dimensional model may also be identified, and the predetermined connection structure is generated based on the strategy of avoiding the feature hole. The feature hole refers to a hole or hollow portion with a specific shape and size in the target three-dimensional model. By avoiding the feature hole, conflict or interference with these feature holes in the connection structure may be avoided to ensure the feasibility and correctness of the connection structure. Through the above two optional methods for generating the connection structure, the accuracy and reliability of the cloud generating the predetermined connection structure are realized, and better support and assurance are provided for subsequent fabrication and processing processes.

Optionally, the above two target three-dimensional models are an example, the number may be set to a predetermined number, and for the predetermined number of target three-dimensional models to be added with the predetermined connection structures among the plurality of target three-dimensional models, the shortest distance path between the predetermined number of target three-dimensional models is determined; based on the predetermined number of target three-dimensional models, the predetermined connection structures are added to the predetermined number of target three-dimensional models; and by using the method of predetermining the connection structures for the predetermined number of target three-dimensional models, the predetermined connection structures are added among the plurality of target three-dimensional models.

It can be appreciated that, for the predetermined number of target three-dimensional models to be added with the predetermined connection structures among the plurality of target three-dimensional models, the shortest distance path between these models is determined first. Then, the predetermined connection structures are added, and the predetermined number of target three-dimensional models may be connected together to form an intact structure or case distribution.

Optionally, the feature holes respectively included in the plurality of target three-dimensional models are identified to obtain feature hole distribution information; based on the feature hole distribution information, an avoidance connection strategy (i.e., the strategy of avoiding the feature hole) is generated, where the avoidance connection strategy comprises: the addition of the predetermined connection structures is prohibited in positions of the feature holes respectively included in the plurality of target three-dimensional models; and the avoidance connection strategy is used to add the predetermined connection structures among the plurality of target three-dimensional models.

It can be appreciated that, the use of the avoidance connection strategy may include prohibiting the addition of the predetermined connection structures is prohibited in the positions of the feature holes respectively included in the plurality of target three-dimensional models, such that conflict or interference with these feature holes in the connection structure may be avoided.

In an optional embodiment, the addition of the predetermined connection structures among the plurality of target three-dimensional models belonging to the same user case comprises: the cloud generates a bounding box for a first target three-dimensional model in the two target three-dimensional models; a geometric center point in the bounding box is determined, and a nearest connection point in distance between the geometric center point and the second target three-dimensional model in the two target three-dimensional models is determined; a connection line between the geometric center point and the connection point is used as the shortest distance path between the two target three-dimensional models; and/or the cloud, when the predetermined connection structure intersects the feature hole, reduces the predetermined connection structure until the predetermined connection structure does not intersect the feature hole.

It can be appreciated that, the cloud generates the bounding box for the first target three-dimensional model in the two target three-dimensional models; the bounding box is a geometric shape for approximately representing the target three-dimensional model; the geometric center point in the bounding box is determined, which may be a central point of the bounding box; and the nearest connection point in distance between the geometric center point and the second target three-dimensional model is determined, which is determined by calculating the shortest distance between the geometric center point and a surface of the second target three-dimensional model. The connection line between the geometric center point and the connection point is used as the shortest distance path between the two target three-dimensional models. This path is configured to generate the connection structure to connect the two target three-dimensional models together.

Optionally, the predetermined number (e.g., two) of target three-dimensional models are divided to obtain the first target three-dimensional model and the second target three-dimensional model; the bounding box is generated for the first target three-dimensional model; the geometric center point in the bounding box is determined, and the nearest connection point in distance between the geometric center point and the second target three-dimensional model is determined; and the connection line between the geometric center point and the connection point is used as the shortest distance path between the predetermined number of target three-dimensional models.

Optionally, the above first target three-dimensional model is the abutment tooth model. For the specificity of centralized layout of the abutment tooth model, bounding boxes are generated for the plurality of abutment tooth models. Fig. 4 is a schematic diagram of a bounding box of an optional method for three-dimensional printing according to an embodiment of the present disclosure. As shown in Fig. 4, the bounding box is to frame the first target three-dimensional model by using a stereoscopic rectangle, and calculates a center point of the stereoscopic rectangle. XYZ is a schematic representation of a spatial coordinate system. For coordinate illustration of eight corner points of a packaging box, the geometric center point may be represented as (x1+x2)/2, (y1+y2)/2, and (z1+z2)/2. Since the first layout result and the second target three-dimensional model need to be connected on a bottom surface, a center point on an XY plane is simply determined as the geometric center point based on (x1+x2)/2 and (y1+y2)/2.

Optionally, the cloud generates connection structure prediction information based on the plurality of target three-dimensional models; when the connection structure prediction information and the feature hole distribution information indicate that the predetermined connection structure intersects the feature hole, it is determined that there is an abnormal connection structure in which the predetermined connection structure intersects the feature hole; the abnormal connection structure is reduced and adjusted until the connection structure prediction information and the feature hole distribution information indicate that the predetermined connection structure does not intersect the feature hole, the predetermined connection structures are added among the plurality of target three-dimensional models.

Optionally, using the dental application as an example, since the full-jaw model and the half-jaw model both have implanting holes, the above implanting holes are used as the feature holes, the predetermined connection structure may not penetrate into the hole and needs to avoid the hole, and once the predetermined connection structure touches the hole, the predetermined connection structure needs to be automatically reduced, until the predetermined connection structure does not penetrate into the hole. The size of the predetermined connection structure may be adjusted, that is, a width and a thickness both may be set, and specific parameter values need to be integrated with a printing material and process level, and are preferably set to a height of 2 mm (millimeter) and a width of 5 mm.

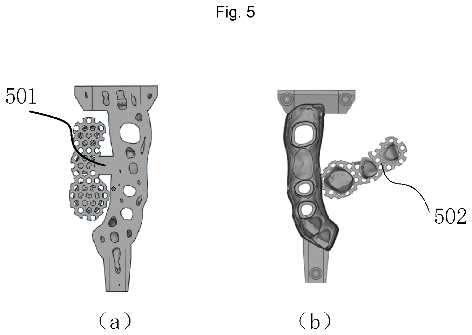

Fig. 5 is a schematic diagram of a connection structure of an optional method for three-dimensional printing according to an embodiment of the present disclosure. Fig. 5 comprises a plurality of sub-figures, that is, comprising Fig. 5a and Fig. 5b. As shown in Fig. 5a, the target layout result is indicated from a bottom surface direction, where the predetermined connection structure on the bottom surface is marked as 201, and 201 is a connecting-rod-like connection structure. As shown in Fig. 5b, the predetermined connection structure on the bottom surface is a grid-like connection structure 202.

In an optional embodiment, the method further comprises: the cloud performs a pre-processing operation on the target three-dimensional model, so as to obtain a pre-processed target three-dimensional model. The pre-processing operation comprises one or more of slicing, righting, hollowing, support structure addition, marking, undercut filling, and gum line identification.

It can be appreciated that, the target three-dimensional model in the optional embodiment is digitized data and stored in the cloud, and the pre-processing operation for 3D printing is performed in the cloud, which is also referred to as a pretreatment operation. Through the pretreatment operation, sliced data is generated according to the target three-dimensional model, and the sliced data (e.g., a stl format, Stereo Lithography is a common 3D model file format) is sent to the 3D printing device for printing.

It can be appreciated that, in order to ensure that the target three-dimensional model is not deformed while saving materials, the plurality of target three-dimensional models are respectively pre-processed to obtain the plurality of pre-processed target three-dimensional models for layout, so as to generate the target layout result. The above pre-processing method may be hollowing and/or support structure addition.

Optionally, after the target three-dimensional model is placed, the corresponding required target three-dimensional model is hollowed according to the identified three-dimensional model type of the target three-dimensional model. The hollowing of the three-dimensional model means that the bottom surface of the model that has a solid bottom surface as its input is hollowed, a hollowing algorithm is based on a set hollowed wall thickness and an accuracy value (preset value), the same model is reduced and then overlapped, and the bottom surface is emptied, so as to form the hollowed target three-dimensional model. Since the processing of the target three-dimensional model is hollowing, a bottom plate needs to be added in a hollowing region. In order to prevent the problems of deformation and reduction of the three-dimensional object, the bottom plate needs to be added to a printed three-dimensional object to overcome deformation, and since factors such as liquid leakage, material saving, processing, etc. need to be taken into consideration, the bottom plate needs to be added to the printed three-dimensional object, and is preferentially made into a honeycomb shape.

Optionally, using the dental application as an example, for example, the target three-dimensional model is the abutment tooth model and the half-jaw model. Fig. 5b is a schematic diagram of the bottom plate. The abutment tooth model and the half-jaw model are connected through the generated honeycomb-shaped bottom plate.

Optionally, a support is added to the target three-dimensional model. The cloud determines, according to the identified three-dimensional model type, whether a support structure needs to be added. The support addition processing is to add a mechanism such as a post for a suspended model (which may be set in a layout phase) such that the suspended model is printed in a supporting manner, or a support is added to the hollowed target three-dimensional model to ensure that the model with inside hollowed does not fall during printing.

Optionally, the method for adding the support structure may be at least one of the following: for the target three-dimensional model to be supported, a lowest point may be found, that is, there is a support at the lowest point.

Using the dental application as an example, according to special requirements for the dental application, for example, an upper surface of an abutment tooth and a die hole does not need to be supported, such that a region that does not need to be supported is automatically avoided, for example, the support is not added to an outer surface of the target three-dimensional model, and for another example, the support is not added to a designed hole of the target three-dimensional model, and the hole is a region for wearing or operation. It is to be noted that, since the added support structure needs to be removed ultimately, and a support strategy may be set in a support contact point region, such that the support may be easily disassembled when it is ensured that the model does not fall during printing.

Optionally, the target three-dimensional model is marked. An identifier is generated on a digital three-dimensional model according to a preset identifier or an identifier outputted by a user, thereby facilitating subsequent sorting.

Optionally, undercut filling is performed on the target three-dimensional model, and this step is used for producing a dental orthodontic product. Undercut filling is performed on the digital three-dimensional model according to an undercut region on the identified digital three-dimensional model, so as to avoid subsequent production of a dental model that cannot be used to fabricate an orthodontic brace.

Optionally, gum line identification is performed on the target three-dimensional model, and this step is used for producing a dental orthodontic product. According to a gum line on the identified digital three-dimensional model, the gum line obtained through identification is sent to a cutting device. Film pressing is performed on the printed three-dimensional object, and a diaphragm is cut according to the gum line, so as to obtain the dental orthodontic brace.

In the present disclosure, the cloud acquires a plurality of three-dimensional models to be printed, and user case information corresponding to the plurality of three-dimensional models, respectively; the cloud classifies the plurality of three-dimensional models based on the user case information, so as to obtain a target three-dimensional model matching each user case; and the cloud allocates the plurality of classified target three-dimensional models to the 3D printing device and/or post-processing device according to a preset production strategy, so as to produce three-dimensional objects, wherein the production strategy comprises setting the target three-dimensional models belonging to the same user case in the same production sequence, and/or sending the target three-dimensional models belonging to the same user case to the same 3D printing device for printing. By printing the target three-dimensional models belonging to the same user case in the same production sequence or in the same 3D printing device, the purpose of centralized production of the three-dimensional objects of the same user case is achieved, such that sorting efficiency after printing is improved, the production and production scheduling efficiency of the three-dimensional objects is greatly improved, and processing time is shortened; and the technical effect of improving the printing efficiency of the three-dimensional objects is achieved, thereby solving the technical problem of time-consuming and labor-intensive sorting during 3D printing production, resulting in poor 3D printing production efficiency in the related art.

In an optional embodiment, the production sequence comprises one or more printing tasks, and the production strategy is further configured to: incorporate the target three-dimensional models belonging to the same user case to a same printing task for printing; or incorporate the target three-dimensional models belonging to the same user case to a plurality of printing tasks, and send the plurality of printing tasks to the same 3D printing device for printing; or incorporate the target three-dimensional models belonging to the same user case to a plurality of printing tasks, and send the plurality of printing tasks to different 3D printing devices for printing, respectively.

It is to be noted that, when the target three-dimensional models of the same user case can be printed in the same printing task, the target three-dimensional models belonging to the same user case may be set to the same printing task for printing, and after the current task is printed, the three-dimensional objects of the current user case may be picked up, for example, material discharging, material collection, packaging, etc.; and when the target three-dimensional models of the same user case cannot be printed in the same printing task, the target three-dimensional models belonging to the same user case may be set to a plurality of printing tasks for printing, and these tasks are sent to the same 3D printing device for printing. After each task is printed or all models of the user case are printed, the three-dimensional objects of the current user case may be picked up, for example, material discharging, material collection, packaging, etc., and printing in the same 3D printing device can also save subsequent sorting step, thereby improving production efficiency.

In other embodiments, in order to improving printing efficiency or utilization of the 3D printing device, the target three-dimensional models belonging to the same user case may also be set to the plurality of printing tasks, and the plurality of printing tasks are respectively sent to different 3D printing devices for printing. For example, when there are a particularly-high number of printing tasks of the same user case, in order to improve printing efficiency to save printing time, the plurality of tasks are respectively sent to the plurality of 3D printing devices for printing. In this case, for the target three-dimensional models belonging to the same user case in each printing task, the three-dimensional objects of the user case may be picked up after the printing of each printing task, for example, material discharging, material collection, packaging, etc.

In an optional embodiment, the production sequence comprises one or more printing tasks, and the production strategy is further configured to: acquire the number of models of the target three-dimensional models matching any user case, and when the number of models is greater than a first preset number, divides all the target three-dimensional models into a plurality of tasks and send them to the same 3D printing device for printing; or acquire an estimated printing time matching any user case, and when the estimated printing time is longer than a preset time, send unprinted target three-dimensional models corresponding to the user case to other 3D printing devices for printing; or acquire operating states of all 3D printing devices, and when there is a 3D printing device in an idle state, send the unprinted target three-dimensional models in the 3D printing device with the largest number of tasks to the 3D printing device in the idle state for printing; or acquire the number of models of the target three-dimensional models matching any user case, and when the number of models is less than a second preset number, set the target three-dimensional models and target three-dimensional models of other user cases in the same task and send them to the same 3D printing device for printing.

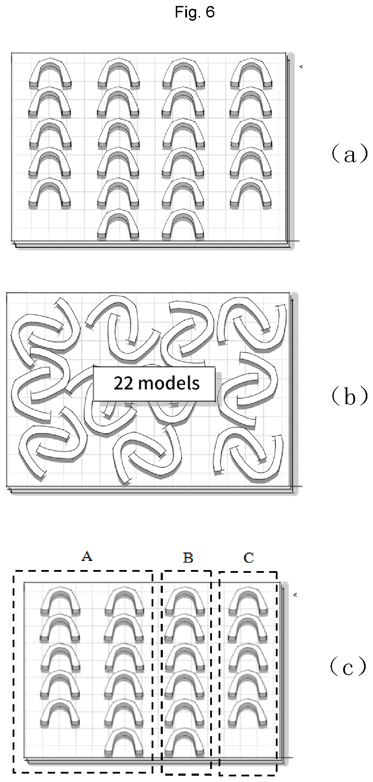

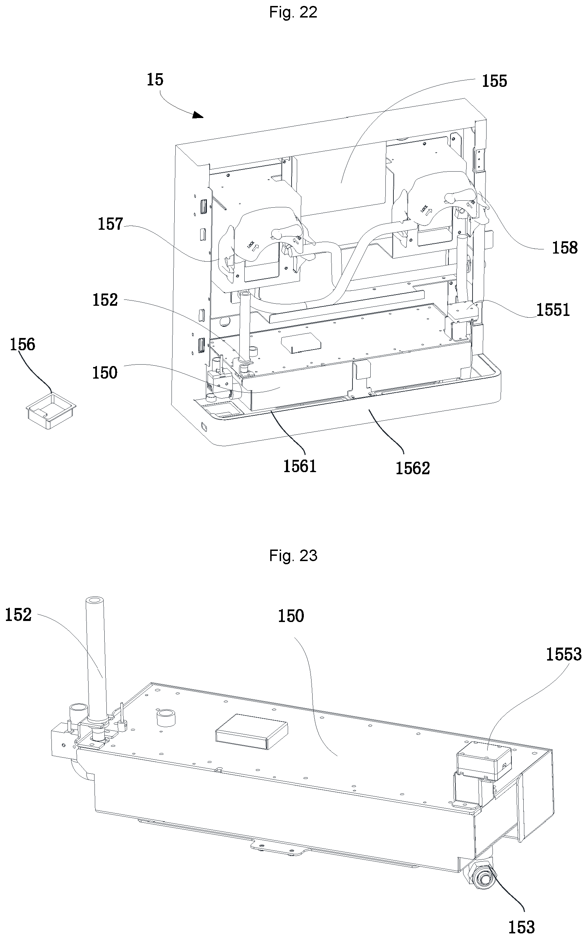

It is to be noted that, the cloud allocates the 3D printing devices according to the number of models in a user case. Fig. 6 is a schematic layout diagram of another optional three-dimensional model according to an embodiment of the present disclosure. Fig. 6 comprises a plurality of sub-figures, namely Fig. 6a, Fig. 6b, and Fig. 6c. Referring to Fig. 6a, exemplarily, 22 target three-dimensional models may be printed in one task in a format of the 3D printing device. A first preset number is set to 22. When the number of models in a user case is greater than 22, all the target three-dimensional models are divided into the plurality of tasks and sent to the same 3D printing device for printing. Optionally, the printing mode is shown in Fig. 6b, and 22 target three-dimensional models (i.e., 22 models) may reduce the occupied format. Definitely, the first preset number may also be set to 5/10/15, and the like, and is set based on the format of the 3D printing device.

Exemplarily, a second preset number is set to 5 or 10 or 15, and the like. When the number of models is less than the second preset number, in this case, there are fewer models in one task, such that the target three-dimensional models and target three-dimensional models of other user cases may be layout in the same task, so as to avoid a large remaining space in one task, thereby improving the utilization of the printed format.

Exemplarily, after allocating a task, the cloud may acquire the estimated printing time matching any user case. The preset time may be automatically set by the user, for example, 1 day, 2 days, 3 days, etc. The estimated printing time may be calculated by establishing a calculation model according to the sliced data of the three-dimensional model and processing parameters of the 3D printing device. It can be appreciated that, when a user case matches more models with longer production times, and the estimated printing time exceeds the preset time, unprinted target three-dimensional models corresponding to the user case may be sent to other 3D printing devices for printing, for example, the 3D printing devices that are idle or have printing tasks less than the preset number, thereby improving printing efficiency and saving printing time.

Exemplarily, after allocating the tasks, the cloud may acquire operating states of all 3D printing devices, and when there is a 3D printing device in an idle state, sends the unprinted target three-dimensional models in the 3D printing device with the largest number of tasks to the 3D printing device in the idle state for printing, so as to improve printing efficiency and utilization of the 3D printing device, thereby saving the printing time.

In an optional embodiment, the production strategy is further configured to: determine production priorities corresponding to each piece of user case information, and allocate the plurality of classified target three-dimensional models to the 3D printing device for three-dimensional model production according to a sequence of the production priorities; and/or adjust, in response to a priority setting operation triggered by a user, the production priorities corresponding to each piece of user case information, so as to obtain updated production priorities, and produce the three-dimensional objects based on the updated production priorities.

Exemplarily, after the three-dimensional models are imported in the cloud, the production priorities corresponding to the user case may be determined according to the sequence of the importing time, and production is performed according to the priorities. In other embodiments, the automatically-generated priorities may also be adjusted manually. For example, some user cases need to be processed in an expedited manner, such that in this case, the priorities may be re-adjusted, and the three-dimensional objects are produced according to the re-adjusted production priorities.

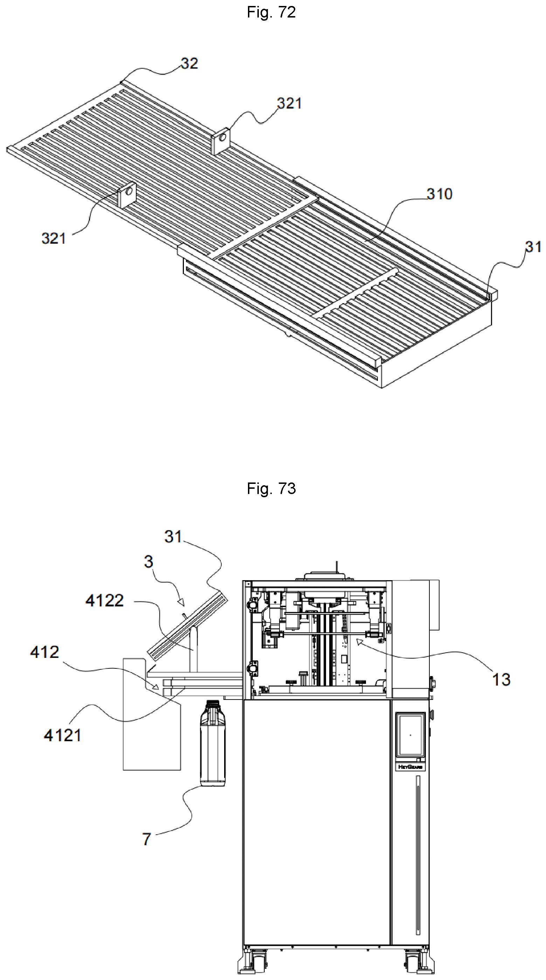

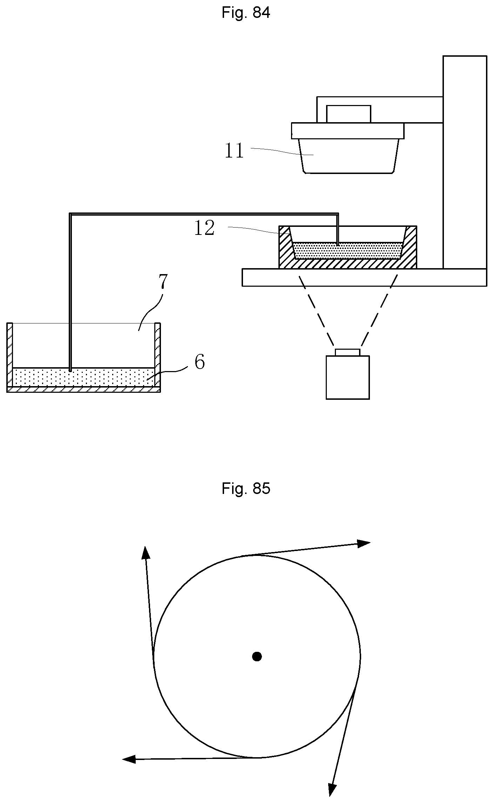

In an optional embodiment of the present disclosure, the system for three-dimensional printing further comprises a 3D printing device 100. The 3D printing device 100 is communicatively connected to the cloud, and configured to receive a production task sequence and performs printing according to the three-dimensional models to form a 3D printed object. As shown in Fig. 73 and Fig. 84, the 3D printing device 100 comprises a material tray 12, a forming platform 11, and a separation apparatus 13. The material tray 12 is configured to hold a printing material. The forming platform 11 has a forming surface, and is configured to adhere the printing material to the forming surface layer by layer, so as to obtain a 3D printed object 8. The separation apparatus 13 is configured to separate the 3D printed object 8 from the forming surface. The separation apparatus 13 comprises one of a shoveling mechanism, an extrusion mechanism, an ejection mechanism, or a laser cutting mechanism.

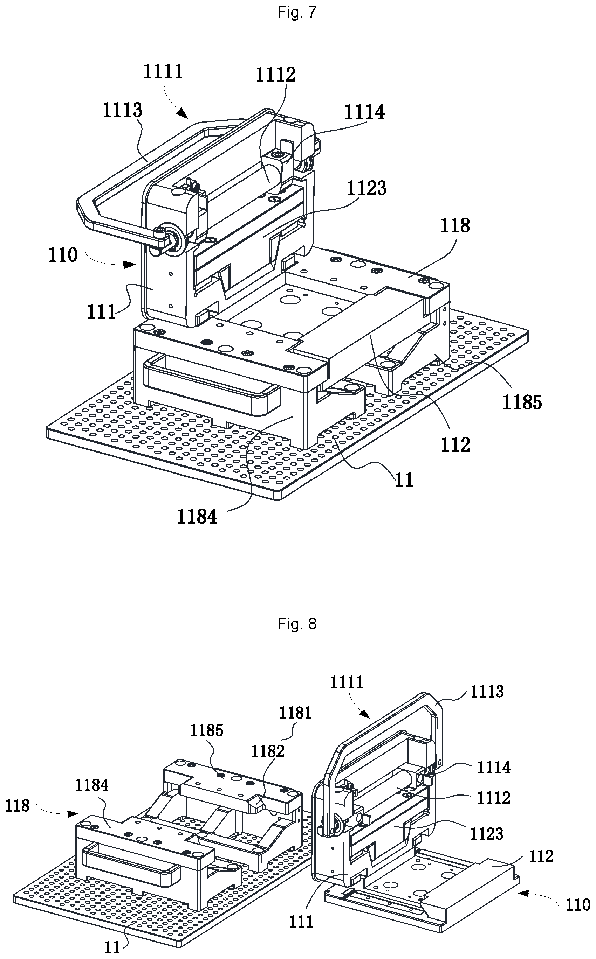

Referring to Fig. 7-Fig. 14, in an optional embodiment of the present disclosure, the forming platform 11 is mounted on the 3D printing device 100 through a locking mechanism. The locking mechanism of the forming platform 11 comprises a locking assembly 110 and a platform fixing member 118. The locking assembly 110 comprises a fixed frame 111, a fixed plate 112, and a movable block 1123. The movable block 1123 is movably provided on the fixed frame 111, the fixed plate 112 has a mounting groove, and the mounting groove has an opening. The platform fixing member 118 is configured to be connected to the forming platform 11. The platform fixing member 118 is able to extend into the mounting groove through the opening. The fixed plate 112 has a first engagement element 1121, a first end of the platform fixing member 118 has a second engagement element 1181 mated with the first engagement element 1121 in an engagement manner. The movable block 1123 has a locking position in which the movable block abuts against a second end of the platform fixing member 118 and an unlocking position in which the movable block separates from the second end of the platform fixing member 118.

By using the locking mechanism of the forming platform 11 provided in this embodiment, the locking mechanism of the forming platform 11 comprises the locking assembly 110 and the platform fixing member 118. The fixed frame 111 on the locking assembly 110 is connected to the fixed plate 112. The movable block 1123 is movably disposed on the fixed frame 111. The platform fixing member 118 is connected to the forming platform 11. The fixed plate 112 is provided with the mounting groove, and the mounting groove has the opening, such that the platform fixing member 118 can extend into the mounting groove through the opening. The fixed plate 112 has the first engagement element 1121, and the first end of the locking assembly 110 has the second engagement element 1181. When the platform fixing member 118 extends into the mounting groove, the first engagement element 1121 is mated with the second engagement element 1181 in an engagement manner, causing the fixed plate 112 to be engaged with the platform fixing member 118, such that, when the movable block 1123 moves to the locking position, the movable block 1123 abuts against the second end of the platform fixing member 118. Furthermore, since the movable block 1123 has a mutual abutment force to the platform fixing member 118 when the fixed plate 112 is engaged with the platform fixing member 118, the platform fixing member 118 and the fixed plate 112 are engaged with each other and fixed under the action of force, so as to prevent the forming platform 11 from shaking, thereby ensuring the locking assembly 110 is locked against the platform fixing member 118. When the movable block 1123 is switched from the locking position to the unlocking position, the movable block 1123 is separated from the platform fixing member 118, thereby separating the locking assembly 110 from the platform fixing member 118. By using the above structure, the first engagement element 1121 of the fixed plate 112 is engaged and fixed with the second engagement element 1181 of the platform fixing member 118, such that, when the movable block 1123 moves to the locking position, the problem of warping of the forming platform 11 can be avoided, and the forming platform 11 can be prevented from shaking, thereby ensuring the printing quality of a printed object, and improving the structure reliability of the locking mechanism of the forming platform 11.

As shown in Fig. 8, Fig. 10, Fig. 13, and Fig. 14, the first engagement element 1121 comprises an engagement groove 1122. The second engagement element 1181 comprises a wedge-shaped block 1182. The wedge-shaped block 1182 extends into the engagement groove 1122 and is mated with the engagement groove 1122 in an engagement manner. By using the above structure, the first engagement element 1121 is designed as the engagement groove 1122, and the second engagement element 1181 is the wedge-shaped block 1182 provided on the platform fixing member 118. In this way, when the fixed plate 112 extends into the mounting groove, the engagement groove 1122 in the fixed plate 112 is engaged with the wedge-shaped block 1182 on the platform fixing member 118, such that the platform fixing member 118 is prevented from falling off the fixed plate 112, thereby facilitating the mounting of the locking assembly 110 and the platform fixing member 118. Furthermore, when the movable block 1123 moves downward, the movable block 1123 abuts against the second end of the platform fixing member 118, and then the movable block 1123 applies an acting force to the platform fixing member 118, and since the fixed plate 112 is engaged with the platform fixing member 118, it can be ensured that, under the action of the movable block 1123, there is also an abutment force when the fixed plate 112 is engaged with the platform fixing member 118, such that stable engagement of the locking assembly 110 and the platform fixing member 118 is ensured, the locking assembly 110 and the platform fixing member 118 is prevented from separating from each other, so as to ensure firm engagement, thereby ensuring the stability of the forming platform 11 while preventing the platform fixing member 118 from shaking.

It is to be noted that, a third limiting slope is provided on the fixed plate 112; a fourth limiting slope is provided on the first end of the platform fixing member 118; and when the fixed plate 112 extends into the mounting groove of the platform fixing member 118, the third limiting slope of the fixed plate 112 is attached to the fourth limiting slope of the platform fixing member 118, and an included angle between the third limiting slope and a horizontal plane and an included angle between the fourth limiting slope and the horizontal plane both are obtuse angles, such that the platform fixing member 118 can be prevented from separating from the fixed plate 112, thereby ensuring mutual engagement and fixation of the fixed plate 112 and the platform fixing member 118.

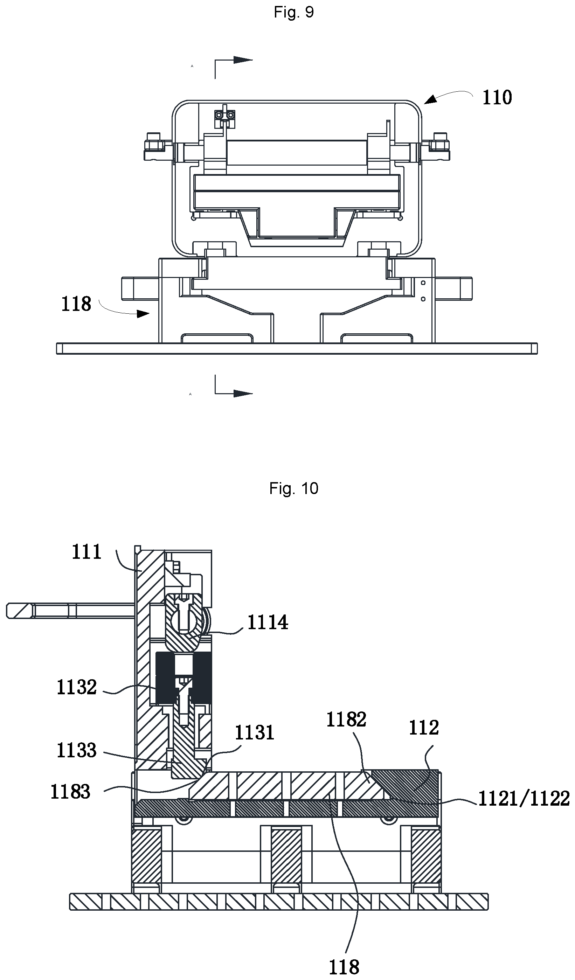

As shown in Fig. 10, the movable block 1123 has a first limiting slope 1131; the second end of the platform fixing member 118 has a second limiting slope 1183; when the movable block 1123 is located in the locking position, the first limiting slope 1131 abuts against the second limiting slope 1183; and when the movable block 1123 is located in the unlocking position, the first limiting slope 1131 is separated from the second limiting slope 1183. By using the above structure, the first limiting slope 1131 is provided on the movable block 1123, the second end of the platform fixing member 118 has the second limiting slope 1183, and then when the movable block 1123 moves downward, the movable block 1123 abuts against the second end of the platform fixing member 118, such that the first limiting slope 1131 can abut against the second limiting slope 1183, and the acting force of the movable block 1123 to the platform fixing member 118 is decomposed into a vertically downward force and a horizontally horizontal force under the action of the first limiting slope 1131 and the second limiting slope 1183. In this way, the decomposed vertically downward force can ensure abutment fixation between the platform fixing member 118 and the fixed plate 112, the decomposed horizontally horizontal force is able to ensure engagement fixation between the wedge-shaped block 1182 of the platform fixing member 118 and the engagement groove 1122 of the fixed plate 112, such that the platform fixing member 118 is prevented from warping, and the stability of the forming platform 11 connected to the platform fixing member 118 can be ensured.

It is to be noted that, in this embodiment, an included angle between the first limiting slope 1131 and the horizontal plane and an included angle between the second limiting slope 1183 and the horizontal plane are both designed as acute angles. In this way, it is able to ensure that the movable block 1123 abuts against the platform fixing member 118, and the first limiting slope 1131 is mated with the second limiting slope 1183 in an abutment manner, thereby achieving the function of fixing the platform fixing member 118.

As shown in Fig. 8, Fig. 10, and Fig. 11, the movable block 1123 comprises a base 1132 and a pressure block 1133 disposed on the base 1132. The pressure block 1133 penetrates through the fixed frame 111 and is slidably connected to the fixed frame 111. A lower end of the pressure block 1133 passes through the fixed frame 111. When the movable block 1123 is located in the locking position, a lower end of the pressure block 1133 abuts against the second end of the platform fixing member 118; and when the movable block 1123 is located in the unlocking position, the lower end of the pressure block 1133 is separated from the second end of the platform fixing member 118. By using the above structure, by disposing the base body 1132 and the pressure block 1133, the pressure block 1133 is able to penetrate through the fixed frame 111 and is slidably connected to the fixed frame 111. When the movable block 1123 vertically moves downward and the movable block 1123 is in the locking position, the lower end of the pressure block 1133 passes through the fixed frame 111 and enables to slide relative to the fixed frame 111, such that the lower end of the pressure block 1133 enables to abut against the second end of the platform fixing member 118. When the movable block 1123 vertically moves upward and the movable block 1123 is switched from the locking position to the unlocking position, the lower end of the pressure block 1133 is separated from the second end of the platform fixing member 118, thereby ensuring that the movable block 1123 enables to abut against and be fixed with the platform fixing member 118 under the action of the pressure block 1133.

It is to be noted that, an upper end of the pressure block 1133 penetrates through the movable block 1123, a third screw is disposed on the movable block 1123, and the third screw penetrates through the movable block 1123 and is in threaded connection with the pressure block 1133, such that the pressure block 1133 is fixed on the movable block 1123, and the pressure block 1133 moves with the movable block 1123.

In this embodiment, the first limiting slope 1131 is provided on the lower end of the pressure block 1133, and the second limiting slope 1183 is provided on the second end of the platform fixing member 118, such that, when the pressure block 1133 moves downward and abuts against the second end of the platform fixing member 118, the first limiting slope 1131 abuts against the second limiting slope 1183.

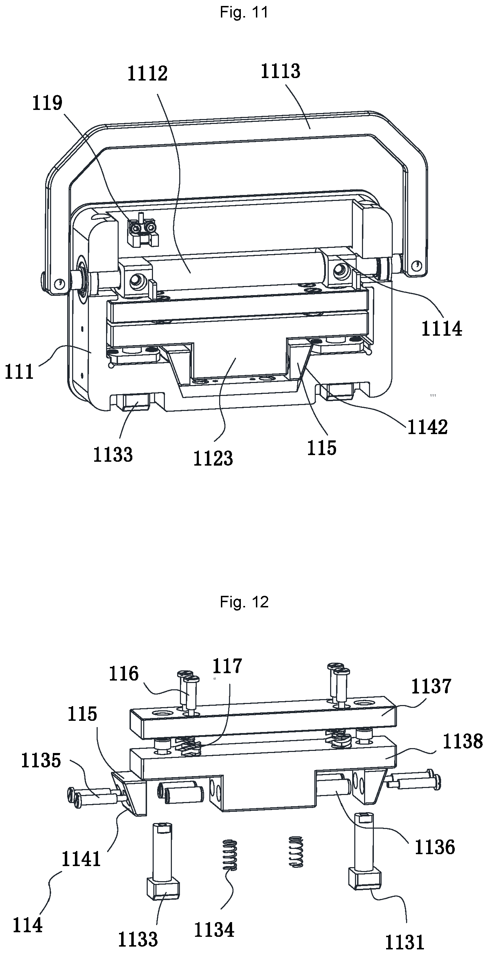

As shown in Fig. 11 and Fig. 12, a first spring 1134 is disposed between the fixed frame 111 and the movable block 1123, a first end of the first spring 1134 abuts against a lower end of the movable block 1123, and a second end of the first spring 1134 abuts against the fixed frame 111. By using the above structure, by disposing the first spring 1134 between the fixed frame 111 and the movable block 1123, the movable block 1123 can be reset under the action of the first spring 1134, such that, when the movable block 1123 is in the locking position, the movable block 1123 moves downward and compresses the first spring 1134, and when the movable block 1123 is in the unlocking position, the movable block 1123 is reset under the action of the first spring 1134.

In this embodiment, the fixed plate 112 has an elevating mechanism connection portion, the fixed frame 111 extends vertically, and the fixed plate 112 extends horizontally and is connected to a lower end of the fixed frame 111. By using the above structure, the elevating mechanism connection portion is provided on the fixed plate 112, and the platform fixing member 118 extends into the mounting groove of the locking assembly 110. In this way, the platform fixing member 118 can be locked and fixed, and under the action of the elevating mechanism connection portion, the locking mechanism is connected to an elevating mechanism of the 3D printing device, such that the forming platform 11 can be driven to lift and lower, thereby facilitating a 3D printing operation.

As shown in Fig. 11 and Fig. 12, a slidable guiding structure 114 is disposed between the movable block 1123 and the fixed frame 111. By using the above structure, through the arrangement of the slidable guiding structure 114, when the movable block 1123 moves, the problem of the movable block 1123 being stuck can be avoided, and it ensures that the movable block 1123 enable to move along the fixed frame 111 under the action of the slidable guiding structure 114. A guiding block 115 is disposed on the movable block 1123, the guiding block 115 is horizontally slidably disposed on the movable block 1123, and the slidable guiding structure 114 is disposed between the guiding block 115 and the fixed frame 111. By using the above structure, by disposing the guiding block 115 on the movable block 1123, the guiding block 115 can horizontally movably disposed on the movable block 1123, and in this way, thus ensuring that the movable block 1123 plays a role in sliding and guiding under the action of the guiding block 115.

As shown in Fig. 11 and Fig. 12, the slidable guiding structure 114 comprises a first guiding slope 1141 and a second guiding slope 1142; the first guiding slope 1141 is provided on a side wall of the guiding block 115 facing toward the fixed frame 111; the second guiding slope 1142 is provided on a side wall of the fixed frame 111 facing toward the guiding block 115; and the first guiding slope 1141 is attached to the second guiding slope 1142. By using the above structure, the first guiding slope 1141 is provided on the side wall of the guiding block 115 facing toward the fixed frame 111, and the second guiding slope 1142 is provided on the side wall of the fixed frame 111 facing toward the guiding block 115, such that the first guiding slope 1141 plays a role in sliding and guiding under the action of the second guiding slope 1142, and when the movable block 1123 moves downward, the guiding block 115 also moves downward. Furthermore, the first guiding slope 1141 is in sliding fit with the second guiding slope 1142, causing the guiding block 115 to move in a horizontal direction close to the movable block 1123, and when the movable block 1123 moves upward, the guiding block 115 moves in a horizontal direction away from the movable block 1123, such that the movable block 1123 can be prevented from be stuck.

As shown in Fig. 12, a first screw 1135 and a second spring 1136 are disposed on the movable block 1123; the first screw 1135 penetrates through the guiding block 115 and is in threaded connection to the movable block 1123; and the second spring 1136 is located between the guiding block 115 and the movable block 1123. By using the above structure, the first screw 1135 penetrates through the guiding block 115 and is in threaded connection to the movable block 1123, and the second spring 1136 is sleeved on the first screw 1135 and located between the guiding block 115 and the movable block 1123, such that, when the guiding block 115 moves in the horizontal direction away from the movable block 1123, the second spring 1136 plays a role in resetting the guiding block 115, thereby ensuring that the guiding block 115 can be in sliding fit with the fixed frame 111.

As shown in Fig. 12, the movable block 1123 comprises a first elevating block 1137 and a second elevating block 1138; the first elevating block 1137 is disposed above the second elevating block 1138; the movable block 1123 further comprises a second screw 116 and a third spring 117; the second screw 116 penetrates through the first elevating block 1137 and is in threaded connection with the second elevating block 1138; the third spring 117 is sleeved on the second screw 116, a first end of the third spring 117 abuts against the first elevating block 1137, and a second end of the third spring 117 abuts against the second elevating block 1138; a driving member 1111 is disposed on the fixed frame 111; and the driving member 1111 is connected to the first elevating block 1137 in a driving manner to drive the first elevating block 1137 to elevate relative to the fixed frame 111. By using the above structure, through the arrangement of the first elevating block 1137 and the second elevating block 1138, the second screw 116 and the third spring 117 are disposed between the first elevating block 1137 and the second elevating block 1138; the second screw 116 sequentially penetrates through the first elevating block 1137 and the second elevating block 1138 and is in threaded connection to the second elevating block 1138; the third spring 117 can play a role in elastic buffering, and the driving member 1111 is disposed on the fixed frame 111; and the driving member 1111 enable to drive the first elevating block 1137 to move downward, and under the action of the third spring 117, the second elevating block 1138 moves downward at the same time, such that ensuring that the locking assembly 110 and the platform fixing member 118 are locked, and the movable block 1123 can be driven to move under the action of the driving member 1111.

As shown in Fig. 7 to Fig. 11, the locking mechanism of the forming platform 11 further comprises the driving member 1111; the driving member 1111 comprises a rotary shaft 1112, a handle 1113, and a rotating cam 1114; the rotary shaft 1112 horizontally penetrates through the fixed frame 111; the handle 1113 is connected to the rotary shaft 1112; the rotating cam 1114 is disposed on the rotary shaft 1112 and abuts against the upper end of the movable block 1123; the handle 1113 drives the rotary shaft 1112 to rotate; and the rotary shaft 1112 uses the rotating cam 1114 to drive the movable block 1123 to move from the unlocking position to the locking position. By using the above structure, the rotary shaft 1112 is horizontally rotatably disposed on the fixed frame 111, and the handle 1113 is connected to the rotary shaft 1112, such that the rotary shaft 1112 is driven to rotate by controlling the handle 1113. Furthermore, the rotating cam 1114 is disposed on the rotary shaft 1112, when the rotary shaft 1112 rotates, the rotating cam 1114 enable to abut against the movable block 1123, in this way, when the rotating cam 1114 rotates, the movable block 1123 is driven to vertically move downward to cause the movable block 1123 to be in the locking position, and the locking assembly 110 and the platform fixing member 118 are locked, such that the driving method is simple and convenient for controlling.

It is to be noted that, in other embodiments, the driving member 1111 may also be a slider-crank mechanism, such that the effect of rapid locking and rapid disassembly is achieved through a crank; or the rotating cam 1114 is replaced with a knob threaded handle 1113, such that the movable block 1123 can be driven to elevate without disposing the rotating cam 1114 and the first spring 1134.

As shown in Fig. 11, the locking mechanism of the forming platform 11 further comprises a position detection member 119 for detecting a position of the handle 1113. By using this structure, through the arrangement of the position detection member 119, the position of the handle 1113 can be conveniently detected, so as to detect that the locking is in place. It is to be noted that, in other embodiments, a grating sensor such as a coded disc is used to record the number of rotations, thereby realizing mechanical and electrical locking reminders.

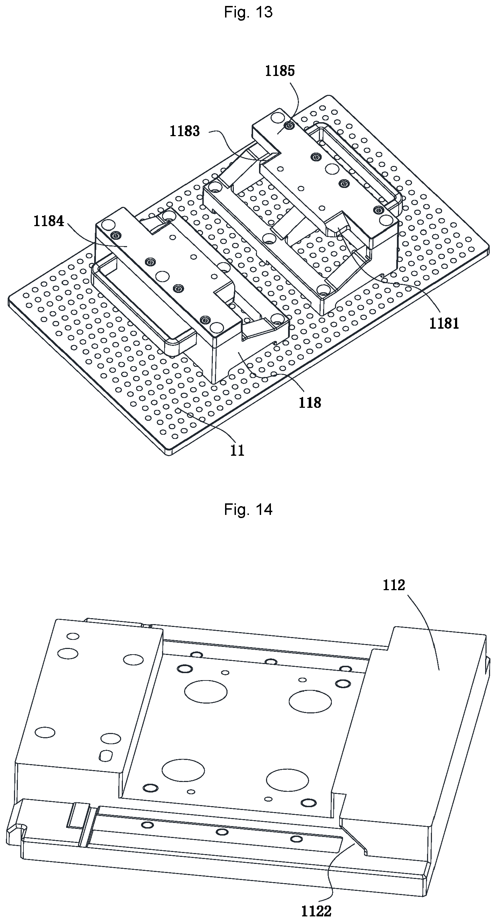

As shown in Fig. 13, the platform fixing member 118 comprises a first locking block 1184 and a second locking block 1185, which are arranged at intervals; and the first locking block 1184 and the second locking block 1185 are configured to extend into the mounting groove. By using this structure, through the arrangement of the first locking block 1184 and the second locking block 1185, the first locking block 1184 and the second locking block 1185 conveniently extend into the mounting groove of the fixed plate 112.

Another embodiment of the present disclosure provides a 3D printing device. The 3D printing device comprises an elevating mechanism, a forming platform 11, and a locking mechanism. The forming platform 11 is disposed on the locking mechanism. The elevating mechanism is connected to an elevating mechanism connection portion of the locking mechanism. The locking mechanism is the locking mechanism provided above. By using this structure, the forming platform 11 is connected to the locking mechanism, and the elevating mechanism is connected to the elevating mechanism connection portion of the locking mechanism, such that the forming platform 11 is locked, and the forming platform 11 is driven to lift and lower.

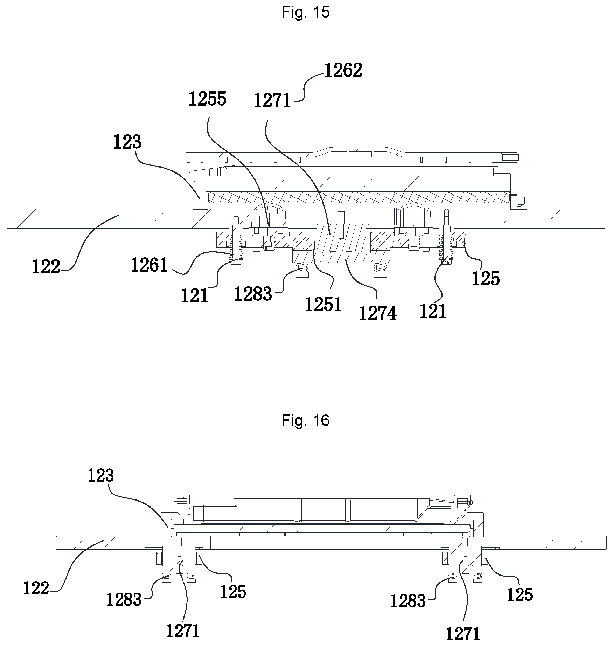

Referring to Fig. 15-Fig. 21, in an optional embodiment of the present disclosure, a material tray 12 is mounted on a base plate 120 of the 3D printing device through a floating material tray mechanism. The floating material tray mechanism comprises the base plate 120, a floating block 125, and a latching assembly 126. The base plate 120 has a material tray mounting groove. The material tray mounting groove is provided on the base plate 120, and a side portion of the material tray mounting groove has an opening for inserting the material tray 12; the floating block 125 is vertically disposed below the base plate 120 in a floatable manner, when the floating block 125 floats upward, an upper end of the floating block 125 is able to extend into the material tray mounting groove, so as to push against the material tray 12; and the latching assembly 126 comprises a driving member 1261 and a latching assembly 126, the driving member 1261 and the latching assembly 126 are provided on a side of the base plate 120 or the floating block 125, the driving member 1261 is able to drive the floating block 125 to rise upward; and the latching assembly 126 can maintain the floating block 125 rising upward to lock the material tray 12, or the latching assembly 126 can maintain the floating block 125 descending lower such that the material tray 12 can be taken and placed through the opening.

By using the technical solutions of the present disclosure, the floating material tray mechanism comprises the base plate 120, the floating block 125, and the latching assembly 126. A driving member 1261 is used to drive the floating block 125 to rise upward. The material tray 12 is mounted in the material tray mounting groove in the base plate 120, so as to cause an upper end of the floating block 125 to extend into the material tray mounting groove and abut against the material tray 12. In this case, an abutment force of the floating block 125 to the material tray 12 is small, and the latching assembly 126 is used to maintain the floating block 125 floating upward and a compression force is provided to the material tray 12 to lock the material tray 12, such that the material tray 12 may be locked in the material tray mounting groove. Or, the latching assembly 126 is used to maintain the floating block 125 descending lower, so as to provide a space for the taking and placing of the material tray 12. The material tray 12 is inserted into the material tray mounting groove through the opening, then the latching assembly 126 is separated from the floating block 125, and the driving member 1261 is used to drive the floating block 125 to rise upward. Therefore, an upper end of the floating block 125 extends into the material tray mounting groove and abuts against the material tray 12. In this case, the abutment force of the floating block 125 to the material tray 12 is large, such that the material tray 12 can be locked, thereby realizing the locking of the material tray 12 in the material tray mounting groove. By using the above solutions, the material tray 12 is freely taken and placed on the base plate 120, and the material tray 12 can be stably locked on the base plate 120.

It is to be noted that, the latching assembly 126 enable to lock the floating block 125 in a descending lower state, such that the material tray 12 is taken and placed in the material tray mounting groove. In another case, the latching assembly 126 may also be used to provide the compression force to the floating block 125, so as to lock the material tray 12 in the material tray mounting groove. Definitely, in the two cases, a driving force provided by the driving member 1261 is different. Only a portion of the floating block 125 into the material tray mounting groove, that is, the upper end of the floating block 125.

As shown in Fig. 15 to Fig. 19, a guide post 121 is disposed on a lower surface of the base plate 120; a circular flange is provided on a lower end of the guide post 121; the floating block 125 penetrates through the guide post 121 in a floatable manner; the driving member 1261 comprises a reset spring penetrating through the guide post 121; and two ends of the reset spring respectively abut against the circular flange and a lower surface of the floating block 125. The reset spring and the floating block 125 both can be arranged on the base plate 120 by using the guide post 121. A driving force can be provided to the floating block 125 by using the reset spring, so as to cause the floating block 125 to automatically rise upward to abut against the material tray 12.

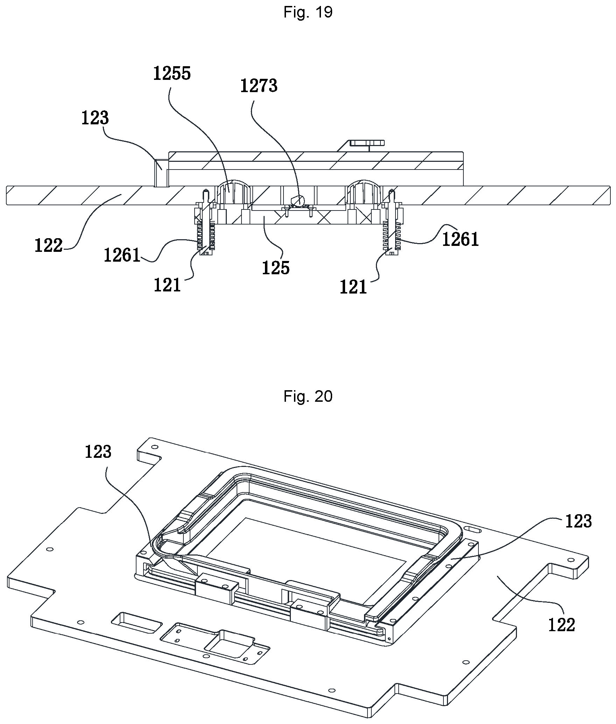

As shown in Fig. 20, the base plate 120 comprises a substrate 122 and two pressure blocks 123 arranged on an upper surface of the substrate 122; the two pressure blocks 123 are arranged opposite to each other in a length direction of the substrate 122; the two pressure blocks 123 and the upper surface of the substrate 122 jointly form the material tray mounting groove; and by using the base plate 120 with the above structure, the substrate 122 and the two pressure blocks 123 are used to form the material tray mounting groove, which has the advantages of being simple in structure and convenient for assembly. The pressure block 123 is of an L-shaped structure.

Specifically, two small pressure blocks 123 are also arranged on the upper surface of the substrate 122. The two small pressure blocks 123 are located between the two pressure blocks 123, and configured to press on the material tray 12. The base plate 120 has a communicating groove 124 that is vertically arranged in a penetrating manner. The communicating groove 124 communicates with the material tray mounting groove. A protrusion 1255 is provided on the upper surface of the floating block 125. The protrusion 1255 penetrates through the communicating groove 124 and can abut against the material tray 12. By using the above arrangement, the protrusion 1255 penetrates through the communicating groove 124, so as to abut against the material tray 12, and arrangement and processing are facilitated while structural strength of the base plate 120 is ensured.

It is to be noted that, the floating block 125, the guide post 121, and the reset spring are correspondingly arranged below each pressure block 123. When the material tray 12 is inserted into the material tray mounting groove, two floating blocks 125 can be respectively used to form abutment on both sides of the material tray 12, so as to cause a positioning effect of the material tray 12 to be better.

As shown in Fig. 15 and Fig. 16, in Embodiment I of the present disclosure, the latching assembly 126 comprises an electromagnet 1271 and a magnetic plate 1274. One of the electromagnet 1271 and the magnetic plate 1274 is arranged on the base plate 120, and the other one of the electromagnet 1271 and the magnetic plate 1274 is arranged on a side of the floating block 125 away from the base plate 120. When the electromagnet 1271 is in a power-off state, the driving member 1261 drives the floating block 125 to rise upward, and the material tray 12 is able to be taken and placed through the opening. When the electromagnet 1271 is in a power-on state, the electromagnet 1271is able to be in magnetic fit with the magnetic plate 1274 such that the floating block 125 locks the material tray 12. The electromagnet 1271 enable to form magnetic fit with the magnetic plate 1274 when being in the power-on state, so as to provide the compression force to the floating block 125, so as to lock the material tray 12. When the electromagnet 1271 is in the power-off state, the electromagnet 1271 has no magnetic force on the magnetic plate 1274. In this case, the driving force provided by the driving member 1261 is relatively small, such that the material tray 12 is able to be conveniently taken and placed in the material tray mounting groove. Definitely, the electromagnets 1271 may also be disposed on the lower surface of the base plate 120 and the upper surface of the floating block 125, and the magnetic plate 1274 does not need to be disposed.

In other embodiments, when the electromagnets 1271 are disposed on the lower surface of the base plate 120 and the upper surface of the floating block 125, a repulsive force may also be generated between the two electromagnets 1271 such that the floating block 125 is maintained descending lower, and the material tray 12 is able to be conveniently taken and placed in the material tray mounting groove. When the two electromagnets 1271 are powered off, the floating block 125 rises upward to lock the material tray 12 by using the driving force of the driving member 1261. Definitely, the magnetic plate 1274 may also be disposed on the floating block 125, and the electromagnet 1271 is disposed on the base plate 120.

As shown in Fig. 15, the magnetic plate 1274 is arranged on the lower surface of the floating block 125, the floating block 125 has a first avoiding groove 1251 that is arranged in a penetrating manner, and the electromagnet 1271 is located in the first avoiding groove 1251. Through the above arrangement, the first avoiding groove 1251 can be used to avoid the electromagnet 1271, so as to save space, thereby reducing space occupation. An elastic member 1283 is also disposed on a side of the magnetic plate 1274 away from the floating block 125, the magnetic plate 1274 is connected to the lower surface of the floating block 125 through a connecting member, and two ends of the elastic member 1283 respectively abut against the magnetic plate 1274 and the connecting member. A motion space can be provided for the magnetic plate 1274 by using the elastic member 1283, so as to achieve a buffering effect. The elastic member 1283 is a buffer spring.

The above operating principle of Embodiment I is as follows: the latching assembly 126 comprises the electromagnet 1271 and the magnetic plate 1274, the electromagnet 1271 is fixed on the lower surface of the base plate 120, the floating block 125 has the first avoiding groove 1251 that is arranged in a penetrating manner, and the magnetic plate 1274 is arranged on the lower surface of the floating block 125 and located in the first avoiding groove 1251. The elastic member 1283 is also disposed on the side of the magnetic plate 1274 away from the floating block 125. When the electromagnet 1271 is in the power-off state, the reset spring drives the floating block 125 to rise upward, and the material tray 12 can be taken and placed through the opening, in this case, the magnetic plate 1274 is in contact with a lower surface of the electromagnet 1271 under the action of the elastic member 1283. A displacement stroke that can be provided by the elastic member 1283 is less than a displacement stroke that is provided by the reset spring of the floating block 125, and there is a spacing between the floating block 125 and the magnetic plate 1274. When the material tray 12 is inserted into the material tray mounting groove, the material tray 12 is in contact with the protrusion 1255 and presses the protrusion 1255; and during this process, the floating block 125 moves downward and drives the magnetic plate 1274 to move downward, such that the magnetic plate 1274 is separated from the electromagnet 1271, so as to generate a small spacing between the magnetic plate and the electromagnet. After the electromagnet 1271 is in the power-on state, the electromagnet 1271 can be in magnetic fit with the magnetic plate 1274, and the magnetic plate 1274 provides an upward force to the floating block 125, such that the magnetic plate 1274 pushes the floating block 125 to upward abut against the material tray 12, so as to cause the floating block 125 to lock the material tray 12. It is to be noted that, during the insertion of the material tray 12 into the material tray mounting groove, and after the floating block 125 sinks, the electromagnet 1271 may be immediately controlled to be in the power-on state, energizing may also be started by waiting for a 3D printing device to print for a period of time, for example, after printing several layers, so as to cause the floating block 125 to lock the material tray 12.

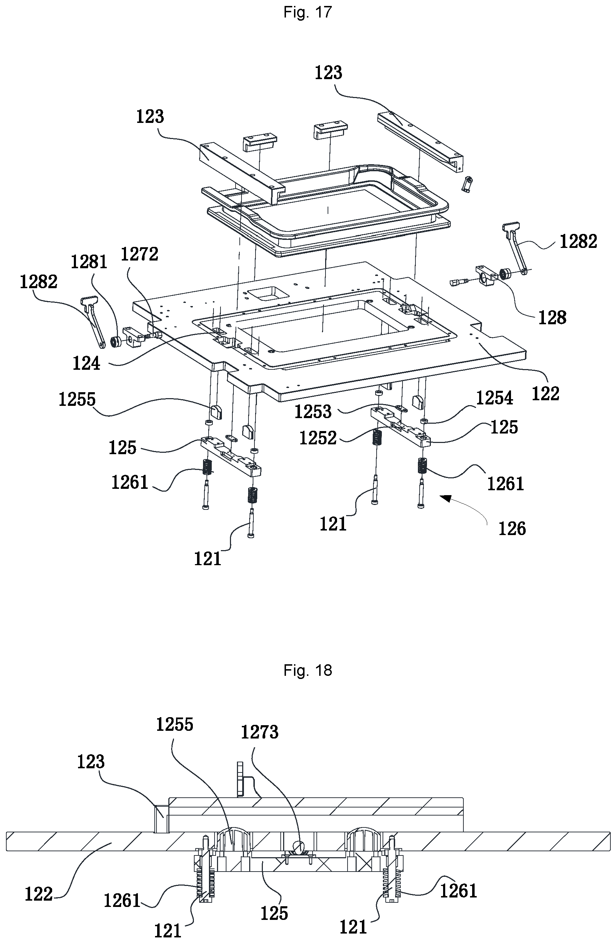

As shown in Fig. 17 to Fig. 19, the present disclosure provides Embodiment II. Differences between Embodiment II and Embodiment I lies in that, in Embodiment II, the floating block 125 has an upper position and a lower position. When the floating block 125 is located in the upper position, the floating block 125 extends into the material tray 12 mounting groove, so as to push against and lock the material tray 12; and when the floating block 125 moves from the upper position to the lower position, the floating block 125 is separated from the material tray 12.

The latching assembly 126 comprises a moving member; the moving member is movably provided on the base plate 120; the moving member has a contact state in which it is in contact with the floating block 125 and a separation state in which it is in separated from the floating block 125; when the moving member is in the contact state, the floating block 125 maintains in the lower position; and when the moving member is in the separation state, the driving member 1261 drives the floating block 125 to move from the lower position to the upper position. By causing the moving member to be in contact with the floating block 125, the floating block 125 can be driven to rise vertically, such that the floating block 125 is located in the lower position, and the material tray 12 can be conveniently taken and placed in the material tray mounting groove.

The moving member may directly move in a vertical direction, and a locking structure is provided to cause the moving member to maintain in contact with the floating block 125, so as to cause the floating block 125 to maintain in the lower position. Definitely, the moving member may also be designed as a rotary shaft 1272, and a cam 1273 is disposed on the rotary shaft 1272. The moving member comprises the rotary shaft 1272 that is rotatably disposed on the base plate 120. The rotary shaft 1272 extends in a horizontal direction. The cam 1273 is disposed on a side wall of the rotary shaft 1272. During the rotation of the rotary shaft 1272, the cam 1273 can drive the floating block 125 to move. The rotary shaft 1272 rotates to drive the cam 1273 to rotate, so as to lock the floating block 125, such that the present disclosure has the advantages of being simple in structure and convenient in operation. A distance between a center line of the cam 1273 and a center line of the rotary shaft 1272 may be set according to actual situations, generally <10 mm.

As shown in Fig. 17, the latching assembly 126 further comprises a bearing seat 128 and a bearing 1281. The bearing seat 128 is disposed on the base plate 120; the bearing seat 128 has a hole, and the bearing 1281 is disposed in the hole; and the rotary shaft 1272 penetrates in an inner hole of the bearing 1281. By using the above structure, the rotary shaft 1272 can be conveniently fixed on the base plate 120 by using the bearing seat 128. A friction force between the rotary shaft 1272 and the bearing seat 128 during rotation can be reduced by using the bearing 1281, thereby reducing abrasion.

In Embodiment II, the latching assembly 126 further comprises a handle 1282, the handle 1282 is connected to an end of the rotary shaft 1272 away from the cam 1273, and the handle 1282 is located at a side portion of the base plate 120. By using the handle 1282, an operator conveniently rotates the rotary shaft 1272. The handle 1282, the rotary shaft 1272, and the cam 1273 form a labor-saving lever structure.

As shown in Fig. 17, a second avoiding groove 1252 is provided in the upper surface of the floating block 125, a first rubber pad 1253 is disposed on a bottom wall of the second avoiding groove 1252, and the cam 1273 is located in the second avoiding groove 1252. The cam 1273 can abut against the first rubber pad 1253, and the use of the second avoiding groove 1252 can avoid the cam 1273, so as to reduce space occupation of the cam 1273, thereby facilitating miniaturization of an apparatus. By using the first rubber pad 1253, abrasion of the cam 1273 to the floating block 125 can be reduced, thereby prolonging the service life of the apparatus. A second rubber pad 1254 is disposed on the floating block 125, and when the floating block 125 is in the upper position, the second rubber pad 1254 is attached to the lower surface of the base plate 120. The use of the second rubber pad 1254 can reduce an impact force of the floating block 125 to the base plate 120 during rising upward, so as to prolong the service life of the base plate 120. It is to be noted that, the driving force provided by the reset spring in Embodiment II is greater than the driving force provided by the reset spring in Embodiment I.

In Embodiment II, each floating block 125 is correspondingly provided with the rotary shaft 1272, so as to cause the corresponding floating blocks 125 to maintain in the lower position, respectively. When the floating block 125 is in the upper position, a distance between the protrusion 1255 and the pressure block 123 is less than a thickness size of an edge of the material tray 12, and in this case, the material tray 12 is difficult to put in, and the interchangeability of the material tray 12 may be ensured, and the material tray 12 with slight differences in thickness can be pushed by the protrusion 1255 after being put in. When the floating block 125 is in the lower position, the distance between the protrusion 1255 and the pressure block 123 is greater than the thickness size of the edge of the material tray 12, and in this case, the material tray 12 is extremely easy to place. The floating block 125 can rise to the upper position by using the cam 1273, so as to cause the protrusion 1255 to compress the material tray 12.

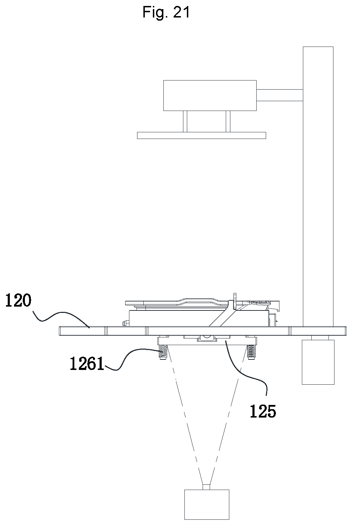

As shown in Fig. 21, yet another embodiment of the present disclosure provides a 3D printing device. The 3D printing device comprises a material tray 12 and a floating material tray mechanism. The material tray 12 is disposed in a material tray mounting groove of the floating material tray mechanism in a taking and placing manner. The floating material tray mechanism is the floating material tray mechanism provided above. By using the 3D printing device, a driving member 1261 is used to drive the floating block 125 to rise upward. The material tray 12 is mounted in the material tray mounting groove in the base plate 120, so as to cause an upper end of the floating block 125 to extend into the material tray mounting groove and abut against the material tray 12. In this case, an abutment force of the floating block 125 to the material tray 12 is small, and the latching assembly 126 is used to maintain the floating block 125 rising upward and a compression force is provided to the material tray 12 to lock the material tray 12, such that the material tray 12 may be locked in the material tray 12 mounting groove. Or, the latching assembly 126 is used to maintain the floating block 125 descending lower, so as to provide a space for the taking and placing of the material tray 12. The material tray 12 is inserted into the material tray 12 mounting groove through the opening, then the latching assembly 126 is separated from the floating block 125, and the driving member 1261 is used to drive the floating block 125 to rise upward. Therefore, an upper end of the floating block 125 extends into the material tray 12 mounting groove and abuts against the material tray 12. In this case, the abutment force of the floating block 125 to the material tray 12 is large, such that the material tray 12 can be locked, thereby realizing the locking of the material tray 12 in the material tray mounting groove. The material tray 12 is freely taken and placed on the base plate 120, and the material tray 12 can be stably locked on the base plate 120.

In this embodiment, the 3D printing device comprises an optical machine, a forming platform, an elevating mechanism, and the floating material tray mechanism. The forming platform is located above the floating material tray mechanism; the forming platform is vertically movably disposed on the elevating mechanism; the elevating mechanism drives the forming platform to vertically move to close or away from the material tray 12; and the optical machine is located under the floating material tray mechanism to expose the material tray 12, so as to cure photosensitive resin on the forming platform, and ultimately form a 3D printed object.

Referring to Fig. 22-Fig. 25, in an optional embodiment of the present disclosure, the 3D printing device further comprises a liquid addition mechanism 15, and the liquid addition mechanism 15 comprises: a liquid addition box 150, having an inner cavity 151, and a liquid inlet 152 and a liquid outlet 153 communicated with the inner cavity 151; a liquid inlet pump 157, wherein one end of the liquid inlet pump 157 communicates with the liquid inlet 152, the other end of the liquid inlet pump 157 communicates with a feeding container, and the liquid inlet pump 157 is configured to convey the printing material from the feeding container to the liquid addition box 150; a liquid outlet pump 158, wherein one end of the liquid outlet pump 158 communicates with the liquid outlet 153, the other end of the liquid outlet pump 158 communicates with a material tray of the 3D printing device, and the liquid outlet pump 158 is configured to convey the printing material from the liquid addition box 150 to the material tray of the 3D printing device; and a controller, communicatively connected to the liquid inlet pump 157 and the liquid outlet pump 158, where the controller is configured to start or stop the liquid inlet pump 157 and the liquid outlet pump 158.

By using the technical solutions of the present disclosure, the liquid addition mechanism comprises the liquid addition box 150, the liquid inlet pump 157, the liquid outlet pump 158, and the controller. During use, the controller is used to turn on the liquid inlet pump 157, the printing material in the feeding container is pumped into the liquid addition box 150 by using the liquid inlet pump 157, the printing material is stored by using the inner cavity 151 of the liquid addition box 150, and then the controller is used to turn on the liquid outlet pump 158, so as to pump the printing material from the liquid addition box 150 into the material tray of the 3D printing device. Compared to a method of directly adding liquid to a material tray by a supply mechanism and replacing the supply mechanism, through the transferring of the liquid addition box 150, continuous operation of the 3D printing device is realized, and inconvenience caused by the liquid addition operation is also avoided at the same time. It is to be noted that, the liquid addition mechanism in the present disclosure uses either pumping or gravity liquid addition, and the liquid addition mechanism may realize the transferring of liquid addition 15, which can realize low liquid level printing, thereby facilitating the addition of the printing material without causing additional waste of the printing material.

As shown in Fig. 22, the liquid addition mechanism further comprises a liquid level detection member 1551 communicatively connected to the controller. The liquid level detection member 1551 is disposed on the liquid addition box 150; and the liquid level detection member 1551 is configured to detect a liquid level of the inner cavity 151. Through the above arrangement, a liquid inlet amount and a liquid outlet amount in the liquid addition box 150 can be controlled such that a liquid amount in the liquid addition box 150 meets requirements.

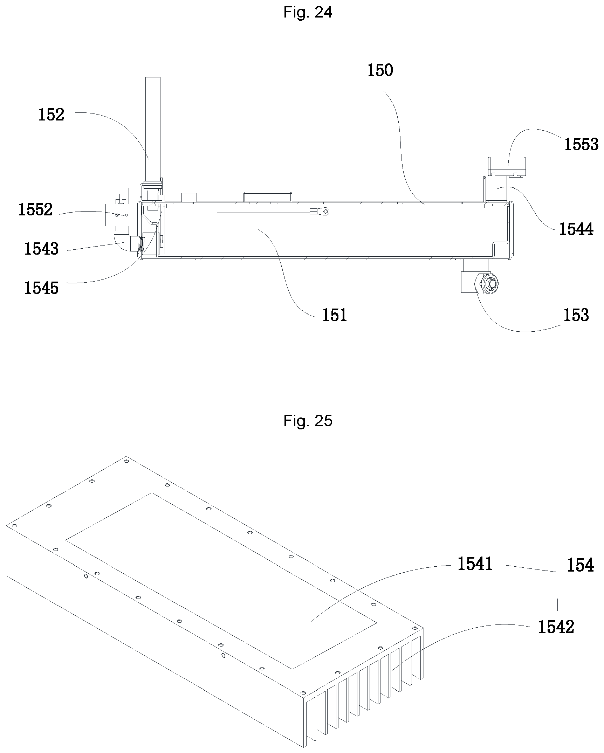

As shown in Fig. 24, the liquid level detection member 1551 comprises a capacitance liquid level meter 1552. The liquid addition mechanism further comprises a communicating pipe 1543 disposed on an outer wall of the liquid addition box 150. The communicating pipe 1543 communicates with the inner cavity 151. The capacitance liquid level meter 1552 is disposed on the communicating pipe 1543, and can detect a highest liquid level of the communicating pipe 1543. By using the capacitance liquid level meter 1552 to detect the highest liquid level of the liquid addition box 150, a maximum liquid amount in the liquid addition box 150 can be controlled.

Specifically, when the liquid level in the communicating pipe 1543 reaches the capacitance liquid level meter 1552, a dielectric constant of a sensor of the capacitance liquid level meter 1552 changes, and an electrical signal is formed for output, thereby displaying the liquid level of the communicating pipe 1543.

As shown in Fig. 24, the liquid level detection member 1551 further comprises an ultrasonic liquid level meter 1553. The liquid addition mechanism further comprises a support 1544 disposed on a top wall of the liquid addition box 150. A detection opening is provided in the top wall of the liquid addition box 150. The support 1544 has a detection channel communicating with the detection opening. The ultrasonic liquid level meter 1553 is disposed on the support 1544, and an ultrasonic transmission end of the ultrasonic liquid level meter 1553 is arranged opposite to the detection channel. The liquid level in the liquid addition box 150 can be detected in real time by using the ultrasonic liquid level meter 1553, thereby controlling a liquid outlet amount of the liquid outlet 153.

Specifically, the ultrasonic liquid level meter 1553 uses the principle of ultrasonic reflection, and an ultrasonic wave enters into the liquid addition box 150 through the detection channel and the detection opening, and forms a reflection after being in contact with the liquid level, so as to measure a height of the liquid level.

A temperature regulation assembly 154 and a temperature detection member 1545 are disposed in the inner cavity 151, and the temperature detection member 1545 is disposed at the liquid inlet 152 or the liquid outlet 153; and the temperature regulation assembly 154 is communicatively connected to the controller, and the controller is configured to control an operating state of the temperature regulation assembly 154. When resin liquid enters the inner cavity 151 of the liquid addition box 150 through the liquid inlet 152 of the liquid addition box 150, a temperature of the liquid can be detected by using the temperature detection member 1545. When the temperature of the liquid does not meet requirements, a control panel 155 is used to control, according to the detected liquid temperature, the temperature regulation assembly 154 to switch to the operating state, and control output power and heating time of the temperature regulation assembly 154 such that the liquid temperature in the liquid addition box 150 meets the requirements.

In this embodiment, the temperature detection member 1545 is a thermoprobe that is disposed on the top wall of the liquid addition box 150. By using the control panel 155 to control the temperature regulation assembly 154, the resin in the liquid addition box 150 may be rapidly and uniformly heated to a target temperature 20 °C to 25 °C.

As shown in Fig. 25, the temperature regulation assembly 154 comprises a temperature control plate 1541 and a plurality of heat sinks 1542. The temperature control plate 1541 and the heat sinks 1542 are arranged in the liquid addition box 150. The temperature control plate 1541 is configured to heat or cool the liquid in the liquid addition box 150. By using the temperature regulation assembly 154 with the above structure, the present disclosure has the advantages of being simple in structure and convenient in arrangement. The heat sinks 1542 extend in a length direction of the temperature control plate 1541. The plurality of heat sinks 1542 are arranged at intervals on a lower surface of the temperature control plate 1541 in a width direction of the temperature control plate 1541. Exemplarily, the temperature regulation assembly 154 has heating and cooling functions. Furthermore, the heat sinks 1542 are configured to conduct heat to accelerate a heating or cooling rate of the liquid.

As shown in Fig. 22, the liquid addition mechanism further comprises a collection tank 156, an overflow port is provided on a side wall of the liquid addition box 150, and the collection tank 156 is located on a side of the liquid addition box 150 and is disposed corresponding to the overflow port. The liquid overflowing from the overflow port can be collected by using the collection tank 156, so as to avoid arbitrary flowing of the liquid, which is not easy to clean up. In this embodiment, the collection tank 156 has a handle for the operator to take or place and clean the liquid therein.

As shown in Fig. 22, the liquid addition mechanism further comprises a base 1561, the liquid addition box 150 and the collection tank 156 both are disposed on the base 1561, a baffle plate 1562 extending upward is provided on an edge of the base 1561, and an upper edge of the baffle plate 1562 is higher than a notch of the collection tank 156. The liquid addition box 150 and the collection tank 156 can be carried by using the base 1561. Furthermore, the liquid overflowing to the collection tank 156 and to the base 1561 is blocked by using the baffle plate 1562, so as to avoid arbitrary flowing of the liquid, which is not easy to clean up.

In this embodiment, the base 1561 is provided with a groove, and the collection tank 156 is provided in the groove. A liquid leakage sensor configured to detect liquid leakage is disposed in the collection tank 156. The liquid overflowing in the collection tank 156 can be detected by using the liquid leakage sensor, so as to alert the user to a liquid state of the collection tank 156. Specifically, the liquid leakage sensor may be a capacitive sensor. The liquid collected in the collection tank 156 is detected by using changes in an electrical signal of the capacitive sensor.

In this embodiment, the base 1561 comprises a horizontal frame and a vertical frame. The vertical frame is connected to a side of the horizontal frame. The liquid inlet pump 157 and the liquid outlet pump 158 both are disposed on the vertical frame, and the liquid addition box 150 and the collection tank 156 both are disposed on the horizontal frame. The baffle plate 1562 is disposed on the horizontal frame and circumferentially extends along the horizontal frame. Two ends of the baffle plate 1562 are respectively connected to the vertical frame. By using the above base 1561, the present disclosure has the advantages of being simple in structure and convenient in processing.

The liquid inlet 152 is provided in the top wall of the liquid addition box 150, such that siphon can be avoided to prevent the liquid from flowing from the liquid inlet 152. Specifically, the liquid outlet 153 is provided in a bottom wall of the liquid addition box 150, such that air can be prevented from entering the liquid addition box 150, so as to avoid generation of air bubbles to enter the material tray, thereby achieving a better printing effect.

Yet another embodiment of the present disclosure provides a 3D printing device. The 3D printing device comprises a feeding container, a machine body, and a liquid addition mechanism. The feeding container is configured to store a printing material; the feeding container and a material tray are disposed on the machine body; the liquid addition mechanism is disposed on the machine body; the feeding container communicates with a liquid inlet 152 of the liquid addition mechanism, and the material tray communicates with a liquid outlet 153 of the liquid addition mechanism; and the liquid addition mechanism is the liquid addition mechanism provided above. By using the above 3D printing device, a controller is used to turn on a liquid inlet pump 157, the printing material in the feeding container is pumped into a liquid addition box 150 by using the liquid inlet pump 157, the printing material is stored by using an inner cavity 151 of the liquid addition box 150, and then the controller is used to turn on a liquid outlet pump 158, so as to pump the printing material in the liquid addition box 150 into the material tray of the 3D printing device. Compared to a method of directly adding liquid to a material tray by a supply mechanism and replacing the supply mechanism, through the transferring of the liquid addition box 150, continuous operation of the 3D printing device is realized, and inconvenience caused by the liquid addition operation is also avoided at the same time.

In this embodiment, the feeding container is located under the liquid addition box 150 of the liquid addition mechanism. Through the above arrangement, a siphon effect can be avoided to prevent the liquid from flowing from the liquid inlet 152.

In an optional embodiment of the present disclosure, a separation apparatus comprises a shoveling mechanism; the shoveling mechanism may be located between a forming platform and the material tray, and may be configured to automatically separate a 3D printed object from a forming surface after printing is completed, such that the forming platform may be continuously configured to cooperatively print a next 3D printed object, and an operator does not need to pick up the forming platform from the printer for a shoveling operation. For example, the shoveling mechanism may include a shoveling blade assembly and a shoveling driving assembly. The shoveling blade assembly may include a shoveling blade. The shoveling driving assembly may be configured to drive at least one of the shoveling blade or the forming platform such that relative movement can occur between the shoveling blade and the forming platform, so as to separate the 3D printed object from the forming surface through the shoveling blade. For example, the shoveling driving assembly may specifically be configured to drive the shoveling blade to move, such that the shoveling blade slides on the forming surface of the forming platform, thereby separating the 3D printed object that has been printed from the forming surface.

In an optional embodiment of the present disclosure, the separation apparatus may include an ejection mechanism; the ejection mechanism comprises a base plate and an ejection element, the ejection element is disposed on the base plate, a through hole is provided in the forming platform, and the ejection element corresponds to the hole; and an ejection driving assembly is configured to drive the forming platform and the separation apparatus to move from a first position to a second position in a first direction, and drive the forming platform to move from the second position to a third position in the first direction. In the second position, the base plate of the separation apparatus is in contact with a limiting apparatus, and during the movement of the forming platform from the second position to the third position, the forming platform moves relative to the base plate, so as to cause the ejection element to gradually extend out of the hole of the forming platform. The ejection element is disposed on the base plate, the through hole is provided in the forming platform, and the cooperation of the ejection driving assembly and the limiting apparatus causes the ejection element to pass through the hole so as to separate the 3D printed object from the forming platform, such that the purpose of automatically separating the 3D printed object from the forming platform is achieved, thereby improving the separation convenience of the 3D printed object from the forming platform in a three-dimensional printing technology.

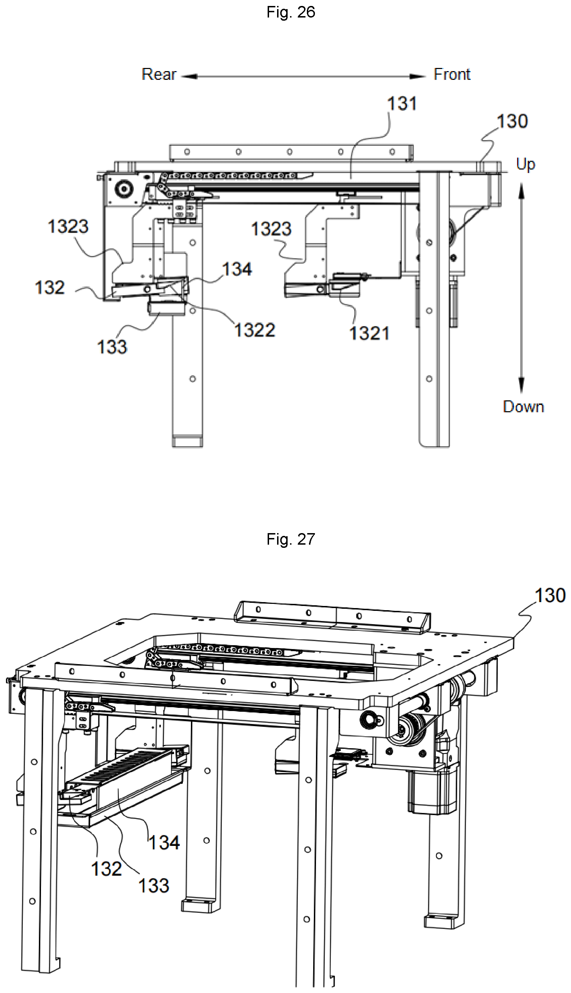

As shown in Fig. 26 to Fig. 29, in an optional embodiment of the present disclosure, the shoveling mechanism comprises a mounting rack 130, a shoveling blade 132, and a cleaning member 134. The shoveling blade 132 is movably disposed on the mounting rack 130; and the shoveling blade 132 has an initial position and a moving-forward position relative to the mounting rack 130. The cleaning member 134 is disposed on a side close to the shoveling blade 132, and in a process of the shoveling blade 132 moving from the initial position, one end of the cleaning member 134 abuts against a surface of the shoveling blade 132 and slides along the surface of the shoveling blade 132. It is to be noted that, positions of two shoveling blades 132 in the figure respectively are the initial position and the moving-forward position. The two shoveling blades 132 in the figure are shown for illustrative purposes only, and the shoveling mechanism in this embodiment comprises one shoveling blade 132.

By using the shoveling mechanism provided in this embodiment, during the movement of the shoveling blade 132 from the initial position to the moving-forward position relative to the mounting rack 130, the shoveling blade 132 can separate the printed three-dimensional printed object from the forming platform. During the movement of the shoveling blade 132 out the initial position, the upper end of the cleaning member 134 abuts against the surface of the shoveling blade 132 and slides along the surface of the shoveling blade 132, and the cleaning member 134 can be used to clean residual resin on the shoveling blade 132, such that the resin on the shoveling blade 132 does not remain on the shoveling blade 132 for a long time, and an effect of the shoveling can be improved. Furthermore, an operation of manually cleaning the shoveling blade 132 can also be saved by disposing the cleaning member 134, such that operation efficiency may be improved.

In this embodiment, since the cleaning member 134 is made of a flexible material, in the process that the upper end of the cleaning member 134 abuts against the surface of the shoveling blade 132 and slides along the surface of the shoveling blade 132, the cleaning member 134 is elastically deformed, causing one end of the cleaning member 134 to always abut against the surface of the shoveling blade 132, such that a cleaning effect of the cleaning member 134 to the shoveling blade 132 can be improved. When the shoveling blade 132 moves until being separated from the cleaning member 134, the cleaning member 134 is restored to a state in which no deformation has occurred.

It is to be noted that, the cleaning member 134 is made of a flexible material. The "flexible material" here means that the cleaning member 134 is capable of elastic deformation. In this embodiment, the cleaning member 134 is made of a rubber material, which has the advantages of being low in cost and long in service life. When the shoveling blade 132 moves from the initial position to the moving-forward position, the shoveling blade 132 comes into contact with the cleaning member 134, and the shoveling blade 132 pushes the cleaning member 134 in an upright state forward, causing the cleaning member 134 to elastically deform, such that the resin is cleaned by using the cleaning member 134, until the shoveling blade 132 completely crosses the cleaning member 134, and then the cleaning member 134 is restored to the initial upright state. When the shoveling blade 132 moves back from the moving-forward position to the initial position, a rear side of the shoveling blade 132 comes into contact with the cleaning member 134 such that the cleaning member 134 is pressed; and when the shoveling blade 132 moves back to the initial position to completely cross the cleaning member 134, the cleaning member 134 is restored to the initial upright state to prepare for next shoveling.

It is to be noted that, in this embodiment, the shoveling blade 132 is horizontally movably disposed on the mounting rack 130. In an implementation, a shoveling blade guide rail 131 is disposed on the mounting rack 130. The shoveling mechanism further comprises a shoveling blade seat 1323. The shoveling blade 132 is disposed on an end of the shoveling blade seat 1323. The shoveling blade seat 1323 is horizontally movably disposed on the shoveling blade guide rail 131, so as to realize the movement of the shoveling blade 132 relative to the mounting rack 130.

Specifically, the shoveling blade 132 is provided with a shoveling blade driving assembly; the shoveling blade driving assembly comprises a power module, a transmission module, the shoveling blade guide rail 131, and the shoveling blade seat 1323; the shoveling blade 132 is mounted on the shoveling blade seat 1323, and the shoveling blade seat 1323 is slidably connected to the shoveling blade guide rail 131; and the shoveling blade driving assembly is in transmission connection to the shoveling blade seat 1323, and is configured to drive the shoveling blade seat 1323 to drive the shoveling blade 132 to move along the shoveling blade guide rail 131. Exemplarily, the shoveling blade driving assembly comprises two shoveling blade guide rails 131 and two shoveling blade seats 1323; the two shoveling blade seats 1323 are parallelly arranged at intervals; the two shoveling blade seats 1323 are respectively slidably connected to the two shoveling blade guide rails 131; and two ends of the shoveling blade 132 are respectively mounted on the two shoveling blade seats 1323. The power module may be a driving member such as a motor; and the transmission module comprises mechanisms such as a track, a synchronous belt, a conveyor belt, etc.

In this embodiment, when the shoveling blade 132 is located in the initial position, an end of the cleaning member 134 protrudes or is flush with the surface of the shoveling blade 132. Since the shoveling blade 132 itself is very sharp, by causing the end of the cleaning member 134 to protrude or to be flush with the surface of the shoveling blade 132, when the shoveling blade 132 is located in the initial position, the shoveling blade 132 can be covered by using the cleaning member 134. Specifically, when the printer does not operate, the cleaning member 134 can play a role in covering the shoveling blade 132, so as to prevent an operator from touching the shoveling blade 132 by mistake to lead to personnel injury.

When the shoveling blade 132 is located in the initial position, one end of the cleaning member 134 tilts towards a direction close to the shoveling blade 132. The cleaning effect can be improved when the shoveling blade 132 moves from the initial position to the moving-forward position, and some resistance is reduced when the shoveling blade 132 moves back, thereby facilitating the moving back of the shoveling blade 132.

In this embodiment, the shoveling blade 132 has a cutter edge 1321, and when the shoveling blade 132 is located in the initial position, the cutter edge 1321 abuts against the side wall of the cleaning member 134. When the shoveling blade 132 is in a stationary state in the initial position, the cleaning member 134 can also plays a certain role in limiting, such that the shoveling blade 132 is not easy to slide. A side surface of the shoveling blade 132 has an inclined plane 1322, the inclined plane 1322 extends to an end portion of the shoveling blade 132, and in the process of the shoveling blade 132 moving from the initial position, an upper end of the cleaning member 134 abuts against the inclined plane 1322 and slides along the inclined plane 1322. The resin on the shoveling blade 132 is mainly concentrated on the inclined plane 1322 of the shoveling blade 132, such that one end of the cleaning member 134 slides along the inclined plane 1322, so as to use the cleaning member 134 to clean the residual resin.

Specifically, the shoveling blade 132 has a first surface and a second surface disposed opposite to each other, and the inclined plane 1322 connecting the first surface and the second surface; an included angle between the inclined plane 1322 and the first surface is an acute angle; and the inclined plane 1322 region forms the cutter edge 1321 of the shoveling blade 132. The cutter edge 1321 is configured to come into contact with the forming surface when the shoveling blade 132 slides on the forming surface of the forming platform; the first surface is configured to face toward the forming surface when the shoveling blade 132 slides on the forming surface; and the second surface is configured to face away from the forming surface when the shoveling blade 132 slides on the forming surface. The shoveling blade 132 comprises two end portions arranged in a length direction, and the cutter edge 1321 of the shoveling blade 132 is disposed between the two ends portions.

In this embodiment, in a direction pointing from the initial position to the moving-forward position (the direction of the shoveling blade 132 moving from the initial position), the shoveling blade 132 tilts upward. When the shoveling blade 132 moves forward from the initial position, since the shoveling blade 132 tilts upward, the shoveling blade 132 is less likely to scratch the cleaning member 134.

A thickness size of the cleaning member 134 is between 2 mm and 6 mm. By setting the thickness size of the cleaning member 134 within the above range, the cleaning member 134 has sufficient elasticity to clean the residual resin, and the cleaning member 134 is not too thick; and the cleaning member 134 is restored to the initial upright state after being separated from the shoveling blade 132. Specifically, the thickness size of the cleaning member 134 may be 2 mm, 4 mm, 6 mm, or any other value between 2 mm and 6 mm.

In this embodiment, the shoveling mechanism further comprises a liquid receiving member 133; the liquid receiving member 133 is disposed on the mounting rack 130; and when the shoveling blade 132 is located in the initial position, the shoveling blade 132 is located above the liquid receiving member 133. Since, when the shoveling blade 132 is located in the initial position, the shoveling blade 132 is located above the liquid receiving member 133, the resin dropping on the shoveling blade 132 can be received by using the liquid receiving member 133. In this embodiment, the liquid receiving member 133 comprises a liquid receiving groove, and the liquid receiving groove has an opening facing upward, and has the advantages of being simple in structure and convenient in liquid receiving.

For ease of understanding the shoveling mechanism provided in this embodiment, explanation is performed below with reference to the drawings and use processes.

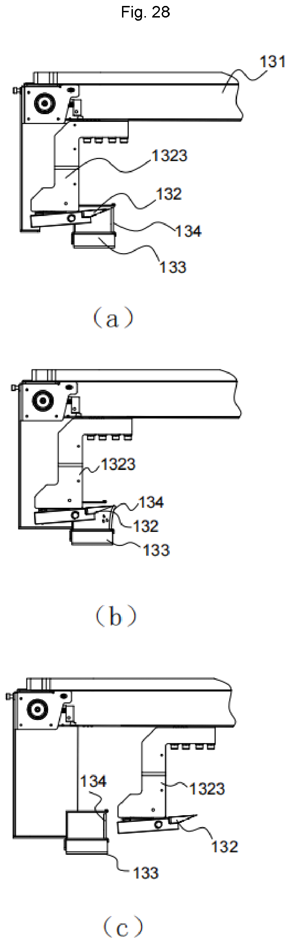

As shown in Fig. 28, since the shoveling blade 132 has an upward inclination angle in the right front of the initial position of the shoveling blade 132, the resin on the shoveling blade 132 is mainly concentrated on the inclined plane 1322 on the lower side of the shoveling blade 132. When the shoveling blade 132 moves from the initial position to the moving-forward position, the shoveling blade 132 is in contact with the cleaning member 134; as the shoveling blade 132 is mounted at an inclined angle that does not scratch the cleaning member 134, the elastic cleaning member 134 is pushed forward, then the cleaning member 134 moves along the inclined plane 1322 on the lower side of the shoveling blade 132, so as to scrape the residual resin thereon; and the scraped resin falls in the liquid receiving member 133, the shoveling blade 132 continuously moves forward, the cleaning member 134 is continuously pressed, until the shoveling blade 132 completely crosses the cleaning member 134, and the cleaning member 134 is restored in the initial upright state.

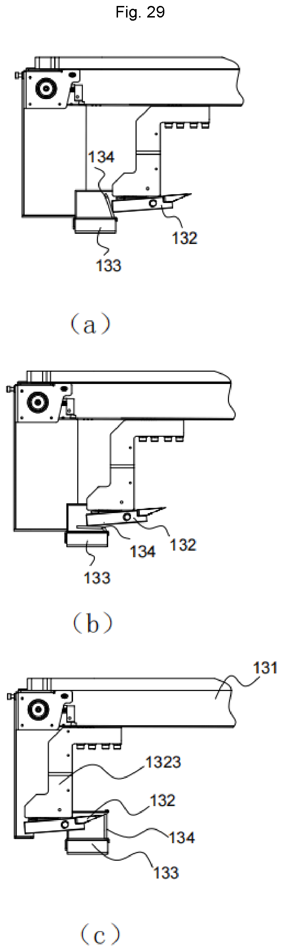

As shown in Fig. 29, when the shoveling blade 132 moves back from the moving-forward position to the initial position, a rear side of the shoveling blade 132 comes into contact with the cleaning member 134, and when the shoveling blade 132 continuously moves backward, the cleaning member 134 is pressed at a larger angle; and when the shoveling blade 132 moves back to the initial position to completely cross the cleaning member 134, the cleaning member 134 is restored to the initial upright state to prepare for next shoveling.

It is to be noted that, the cleaning member 134 provided in this embodiment is not limited to be mounted to the top-mounted shoveling mechanism shown in the drawing, or may also be mounted in other shoveling mechanisms. For example, a shoveling blade 132 in Patent CN114734639B may also be adapted to mount the cleaning member 134.

Through the shoveling mechanism provided in the embodiments, the present disclosure has the following beneficial effects: (1) the residual resin on the shoveling blade 132 is cleaned by using the cleaning member 134, such that the resin on the shoveling blade 132 does not remain on the shoveling blade 132 for a long time, and the effect of the shoveling can be improved; (2) when the printer does not operate, the cleaning member 134 can play a role in covering the shoveling blade 132, so as to prevent an operator from touching the shoveling blade 132 by mistake to lead to personnel injury; (3) one end of the cleaning member 134 tilts towards a direction close to the shoveling blade 132, the cleaning effect can be improved when the shoveling blade 132 moves from the initial position to the moving-forward position, and some resistance is reduced when the shoveling blade 132 moves back, thereby facilitating the moving back of the shoveling blade 132; (4) when the shoveling blade 132 is in a stationary state in the initial position, the shoveling blade 132 abuts against the side wall of the cleaning member 134, and the cleaning member 134 can also plays a certain role in limiting, such that the shoveling blade 132 is not easy to slide; and (5) when the shoveling blade 132 moves forward from the initial position, since the shoveling blade 132 tilts upward, the shoveling blade 132 is less likely to scratch the cleaning member 134.

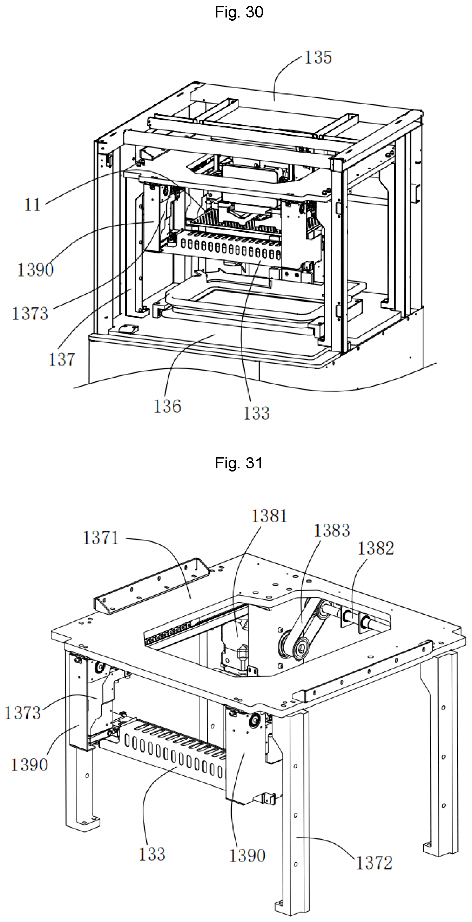

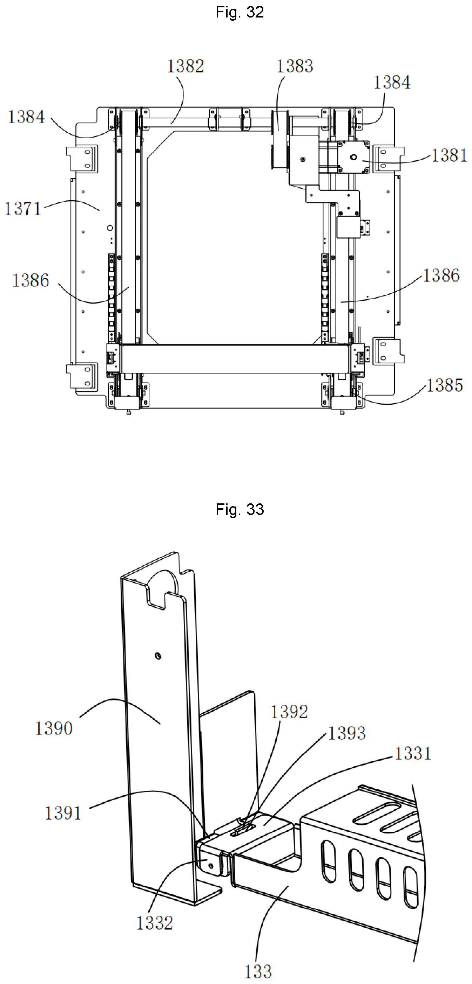

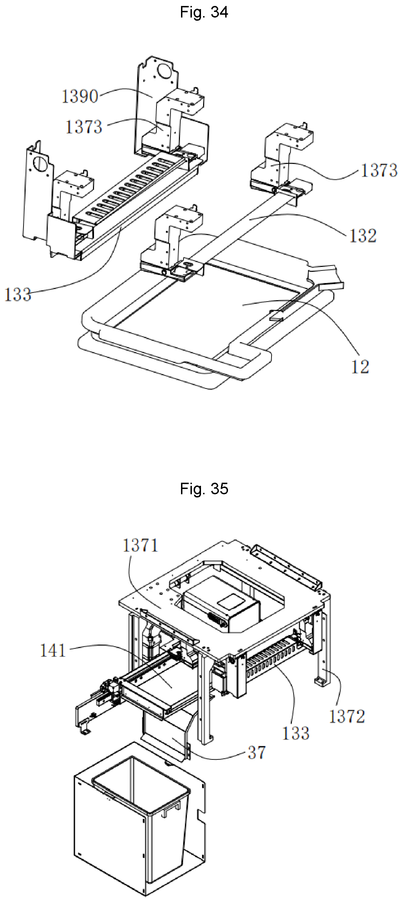

As shown in Fig. 30 to Fig. 35, in an optional embodiment of the present disclosure, the shoveling mechanism comprises a liquid receiving member 133, which is disposed on the mounting rack 130; the liquid receiving member 133 has a liquid receiving port; and the liquid receiving port corresponds to at least one position of the shoveling blade 132 such that the liquid receiving member 133 receives the printing material adhering to the shoveling blade 132. In this way, under the action of gravity, an uncured liquid printing material drops downward, the arrangement of the liquid receiving member 133 can receive the uncured liquid printing material adhering to the 3D printed object during the shoveling of the shoveling blade 132, such that the possibility of pollution to the device caused by the dripping of the uncured liquid printing material adhering to the shoveling blade 132 is reduced. Therefore, the technical solutions of the present disclosure effectively solve the problem of pollution to the device caused by the easy dripping of the liquid printing material adhering to the shoveling blade 132 in the related art.

In this embodiment, the liquid receiving member 133 is disposed below the initial position of the shoveling blade 132, such that the liquid receiving member 133 can receive the uncured liquid printing material on the shoveling blade 132 when the shoveling blade 132 is at rest. The shoveling blade 132 is still located on a side of the forming surface when being in the initial position, so as to avoid the printing of the 3D printed object.

The mounting rack 130 comprises a first support 137, a movable support 1373, the shoveling blade 132, and the shoveling driving assembly 1381. The first support 137 is disposed on the 3D printing device. The movable support 1373 is movably disposed on the first support 137. The shoveling blade 132 is connected to the movable support 1373, and can move with the movable support 1373. The shoveling driving assembly 1381 is disposed on the first support 137, and the shoveling driving assembly 1381 drives the movable support 1373 to drive the shoveling blade 132 to move relative to the forming surface, so as to separate the 3D printed object from the forming surface. In this way, the arrangement of the first support 137 facilitates the mounting and processing of the movable support 1373, the shoveling blade 132, and the shoveling driving assembly 1381.

Since the shoveling blade 132 is hung on the first support 137 through the movable support 1373, such that occupation of a lower space of the shoveling blade 132 when the shoveling blade 132 moves is avoided, and the 3D printing device conveniently arranges a structure abutting against other external devices in the lower space when the shoveling blade 132 moves, for example, a structure that the 3D printing device abuts against subsequent drainage, cleaning, and curing devices. By using the movable support 1373 to drive the shoveling blade 132 to move relative to the forming surface, the 3D printed object can be separated from the forming surface, thereby improving shoveling efficiency. Furthermore, since a moving trajectory of the shoveling blade 132 is unchanged, the moving trajectory of the shoveling blade 132 relative to the forming surface does not change, such that the consistency of the 3D printed objects separated from the forming surface is improved, thereby improving the stability of finished products. In other embodiments, the shoveling driving assembly 1381 drives the forming platform to move, and the shoveling blade 132 is still to cause the forming platform to move relative to the shoveling blade 132, so as to separate the 3D printed object from the forming surface.

The mounting rack 130 further comprises a fixed support 1390 disposed on the first support 137, and the liquid receiving member 133 is connected to the fixed support 1390. The liquid receiving member 133 is conveniently fixed through the arrangement of the fixed support 1390. Furthermore, since the fixed support 1390 is hung on the first support 137, occupation of a lower space of the liquid receiving member 133 is avoided, such that the 3D printing device conveniently arranges a structure abutting against other external devices in the lower space when the shoveling blade 132 moves.

In this embodiment, the shoveling blade 132 comprises two end portions arranged in a length direction, and the cutter edge 1321 of the shoveling blade 132 is disposed between the two ends portions. The shoveling mechanism further comprises a liquid-blocking assembly; and the liquid-blocking assembly is disposed on the shoveling blade 132, and is configured to block the printing material on the shoveling blade 132 from flowing to the two end portions. The liquid-blocking assembly can block the uncured printing material from flowing to the two end portions of the shoveling blade 132, so as to reduce the possibility of the dripping of the uncured printing material along the two end portions of the shoveling blade 132.

Two fixed supports 1390 are arranged on two sides of the liquid receiving member 133 at intervals; and one fixed support 1390 is provided with a connecting protrusion 1391 facing toward the other fixed support 1390. A connecting flange 1331 is disposed on an end of the liquid receiving member 133; and the connecting flange 1331 is in lap joint with the connecting protrusion 1391 such that the liquid receiving member 133 is connected to the fixed support 1390. The connecting protrusion 1391 and the connecting flange 1331 are simple in structure and convenient in processing. Furthermore, the lap-joint fit of the connecting protrusion 1391 and the connecting flange 1331 facilitates the replacing and mounting of the liquid receiving member 133. In this embodiment, the liquid receiving member 133 is detachably connected to the fixed support 1390, so as to clean the uncured printing material received in the liquid receiving member 133.

A positioning structure is disposed between the connecting protrusion 1391 and the connecting flange 1331. The positioning structure comprises a positioning protrusion 1392 and a positioning hole 1393 in positioning fit with the positioning protrusion 1392. The positioning protrusion 1392 is disposed on the connecting protrusion 1391, and the positioning hole 1393 is provided in the connecting flange 1331. The arrangement of the positioning structure facilitates the positioning when the connecting flange 1331 is in lap joint with the connecting protrusion 1391, such that the mounting of the liquid receiving member 133 on the fixed support 1390 is more stable and reliable. Furthermore, the positioning protrusion 1392 and the positioning hole 1393 are simple in structure and convenient in processing. In other embodiments, the positioning hole 1393 is provided in the connecting protrusion 1391, and the positioning protrusion 1392 is disposed on the connecting flange 1331.

A limiting flange 1332 designed in a downward folded manner is provided on an end of the connecting flange 1331, and the limiting flange 1332 is in limiting fit with the connecting protrusion 1391. The arrangement of the limiting flange 1332 can limit the movement of the connecting flange 1331 relative to the connecting protrusion 1391, such that the mounting of the liquid receiving member 133 on the fixed support 1390 is more stable and reliable. The limiting flange 1332 is simple in structure and convenient in processing. In this embodiment, the limiting flange 1332 is located on a side of the connecting protrusion 1391 away from the forming surface.

A magnet is disposed on a side of the limiting flange 1332 facing toward the connecting protrusion 1391, and the connecting protrusion 1391 can be in magnetic fit with the magnet. The arrangement of the magnet facilitates fixation of the liquid receiving member 133 on the fixed support 1390, such that the liquid receiving member 133 is mounted more conveniently and fixed more reliably. In this embodiment, the liquid receiving member 133 is disposed on the mounting rack 130 in a magnetic and snapping manner, such that pull-type taking and placement can be realized, facilitating liquid accumulation cleaning.

The shoveling mechanism further comprises a receiving component 141 and a receiving component driving assembly, and the receiving component 141 is movably disposed on the first support 137. The receiving component 141 has an object receiving position located under the forming surface and a material-discharging position located on a side of the forming surface, and the receiving component driving assembly drives the receiving component 141 to move between the object receiving position and the material-discharging position. The arrangement of the receiving component 141 can receive the 3D printed object shoveled by the shoveling blade 132, and move the 3D printed object to the material-discharging position, thereby further improving shoveling efficiency.

The mounting rack 130 further comprises a second support 135, and the shoveling mechanism further comprises a liquid receiving track 37 disposed on the second support 135. When the receiving component 141 is in the material-discharging position, a box opening of the receiving component 141 is located above the liquid receiving track 37. The arrangement of the liquid receiving track 37 can guide the uncured printing material on the 3D printed object flowing from the box opening of the receiving component 141, thereby further reducing the possibility of pollution to the device or environment caused by the dripping of the uncured printing material on the device or outside the device.

It is to be noted that, the first support 137 and the second support 135 may be an integrated structure, or the first support 137 and the second support 135 are two independent components. In this embodiment, the mounting rack 130 further comprises the second support 135, and the liquid receiving track 37 can guide the uncured printing material into a recycling container, such that the uncured printing material can be recycled, so as to filter and re-use the recycled uncured printing material, or to use after being mixed with a new printing material in proportion. The printing material is resin.

In this embodiment, when the receiving component 141 is in the material-discharging position, a material-receiving component is disposed under the box opening of the receiving component 141, and the 3D printed object in the receiving component 141 can fall in the material-receiving component for collection. A full material sensor is disposed at the box opening of the material-receiving component, so as to detect whether the material-receiving component is full.

In this embodiment, a paddle that can move in a direction close to the box opening of the receiving component 141 or away from the box opening of the receiving component 141 is disposed in the receiving component 141, and the paddle moves to push the 3D printed object in the receiving component 141 out of the box opening, such that the 3D printed object can fall in the material-receiving component.

The second support 135 comprises a platform base plate 136 located under the forming surface. The first support 137 comprises a top plate 1371 and a support beam 1372 for supporting the top plate 1371, and the support beam 1372 is connected to the platform base plate 136. The top plate 1371 and the forming surface are parallelly arranged, and the movable support 1373 is disposed under the top plate 1371. In this way, the top plate 1371 connected to the movable support 1373 and the forming surface are parallelly arranged to cause a movable plane of the shoveling blade 132 to be parallel to the forming surface, such that a parallelism degree between the shoveling blade 132 and the forming platform is better ensured to conveniently control a gap between the shoveling blade 132 and the forming platform, thereby reducing residual 3D printed object on the forming plane after shoveling. Furthermore, such arrangement can improve the consistency of the 3D printed objects separated, thereby further improving the stability of finished products.

In this embodiment, a material tray for holding the printing material is disposed on the platform base plate 136, and the forming surface is located upward the material tray. The 3D printed object is formed on a lower surface of the forming surface. In projections in the vertical direction, the projection of the forming surface is located in the projection of the material tray.

As shown in Fig. 30 to Fig. 35, the shoveling driving assembly 1381 is connected to a lower part of the platform base plate 136. The shoveling driving assembly 1381 comprises the shoveling driving assembly 1381, a transmission shaft 1382 arranged spaced apart from a motor shaft of the shoveling driving assembly 1381, a first transmission belt 1383 connecting the motor shaft and the transmission shaft 1382 in a driving manner, a first belt pulley 1384 disposed on an end of the transmission shaft 1382, a second belt pulley 1385 disposed on the top plate 1371, and a second transmission belt 1386 sleeved on the first belt pulley 1384 and the second belt pulley 1385. The shoveling driving assembly 1381 drives the transmission shaft 1382 to rotate through the first transmission belt 1383, so as to drive the shoveling blade 132 on the movable support 1373 to move through the second transmission belt 1386. In this way, the shoveling driving assembly 1381 is compact in structure, space occupation of the shoveling driving assembly 1381 is reduced, and convenient processing is achieved, causing the moving of the shoveling blade 132 to be more stable and reliable.

In this embodiment, the shoveling driving assembly 1381 further comprises a speed reducer disposed between the shoveling driving assembly 1381 and the transmission shaft 1382. The second transmission belt 1386 is connected to the movable support 1373 through a screw. A sliding rail is disposed on the top plate 1371, and an end of the movable support 1373 is slidably disposed in the sliding rail. In this embodiment, there are two first belt pulleys 1384 and two second belt pulleys 1385, there are two second transmission belts 1386, there is one transmission shaft 1382, and the transmission shaft 1382 drives the two first belt pulleys 1384 to rotate synchronously. One second transmission belt 1386 is sleeved on one first belt pulley 1384 and one second belt pulley 1385.

As shown in Fig. 30 to Fig. 35, the shoveling mechanism further comprises a first position detection member disposed on the liquid receiving member 133, a second position detection member disposed on the side of the forming surface away from the liquid receiving member 133, and a controller in signal connection with the first position detection member and the second position detection member; and the controller is in control connection with the shoveling driving assembly 1381. In this way, through the arrangement of the first position detection member, the second position detection member, and the controller, the shoveling blade 132 can be limited between the liquid receiving member 133 and the side of the forming surface away from the liquid receiving member 133, so as to limit a moving range of the shoveling blade 132, thereby improving accuracy when the shoveling blade 132 moves, and further improving the shoveling efficiency. In this embodiment, the shoveling mechanism further comprises a detection module, and the detection module is configured to detect the number of times that the shoveling blade 132 shovels. For example, an NFC detection module is disposed on the shoveling blade 132, and may record the number of times for shoveling.

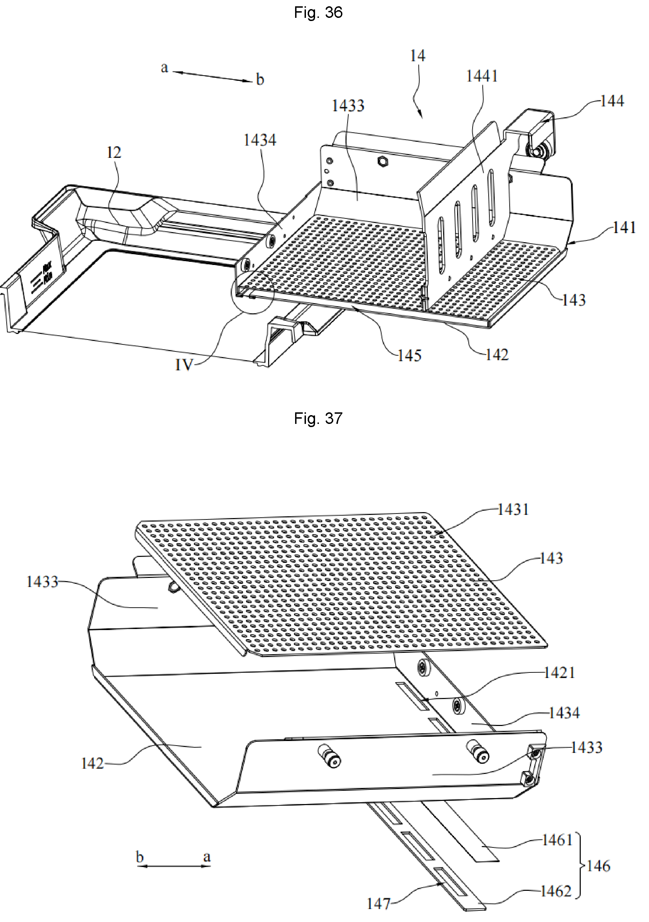

Referring to Fig. 36, in this embodiment, during the printing of the 3D printed object, the receiving component 141 is located in the material-discharging position of a side of the forming surface, and the shoveling blade 132 is in an initial state above the liquid receiving port of the liquid receiving member 133, so as to avoid a printing operation of the 3D printed object. After the 3D printed object is printed, the receiving component 141 moves to the object receiving position, and the shoveling blade 132 is in a separation state of moving relative to the forming surface, such that the 3D printed object can be separated from the forming surface by the shoveling blade 132 and fall in the receiving component 141.

In an optional embodiment of the present disclosure, the system for three-dimensional printing further comprises an object transferring assembly 14. The object transferring assembly 14 is configured to be moved between a first position and a second position, in the first position, the object transferring assembly 14 is configured to receive the 3D printed object 8 separated from the forming surface of the forming platform 11, and in the second position, the object transferring assembly transfers the 3D printed object 8 to the object receiving body 31. The object transferring assembly 14 may be integrated in the 3D printing device, or may be disposed separately, or may also be integrated with a post-processing apparatus.

In some optional embodiments, the object transferring assembly 14 has the object receiving position that moves upward the material tray 12, so as to transfer the 3D printed object 8. The object transferring assembly 14 comprises an object transferring driving assembly and the receiving component 141. The object transferring driving assembly is configured to drive the receiving component 141 to move between the object receiving position and the material-discharging position to be mated with the shoveling mechanism to automatically shoveling and transfer the printed 3D printed object adhering to the forming platform 11, thereby realizing unattended fully-automated shoveling and receiving of the printer. In this embodiment, the receiving component 141 has a material-receiving space configured to accommodate the 3D printed object, and thus may be basket-shaped or box-shaped; and a discharging port communicating with the material-receiving space is provided in a side of the receiving component 141, and the discharging port may allow the 3D printed object to move out from the receiving component 141. Definitely, in optional other embodiments of the present disclosure, the receiving component 141 may have different structure forms, for example, being plate-shaped, as long as an effect of receiving the 3D printed object can be achieved.

Further, the object transferring assembly 14 may further include a object pushing member 1441, and the object pushing member 1441 may be configured to push the 3D printed object in the receiving component 141 to the object receiving body 31, so as to release the material-receiving space, such that the receiving component 141 may continuously carry other 3D printed objects. The object pushing member 1441 may include a material pushing portion, and the material pushing portion is configured to push the 3D printed object in the material-receiving space in a pushing phase, so as to push the 3D printed object out of the discharging port.

Further, a liquid discharging portion 1421 is provided at the bottom of the receiving component 141. By providing the liquid discharging portion 1421 at the bottom of the receiving component 141, the printing material in the receiving component 141 during receiving can be directly discharged from the receiving component 141 through the liquid discharging portion 1421, so as to be recycled, such that the problem of the printing material adhering to the 3D printed object being wasted as it is sent away with the 3D printed object can be alleviated.

Referring to Fig. 36, the 3D printing device provided in this embodiment comprises the forming platform (not shown in the figure), the material tray 12, and the object transferring assembly 14. The forming platform 11 is spaced above the material tray 12; the material tray 12 is configured to accommodate the printing material; and the forming platform 11 is configured to allow the 3D printed object to adhere thereon. The lower surface of the forming platform 11 is the forming surface; the forming surface faces toward the material tray 12; and the forming surface is configured to adhere the 3D printed object. Further, the 3D printing device further comprises an optical-mechanical system (not shown in the figure) and a discharging driving mechanism (not shown in the figure). The optical-mechanical system may irradiate the printing material in the material tray 12, causing the printing material to cure under light, so as to form a solid-state printing layer. A height position in which a pattern projected by the optical-mechanical system is essentially unchanged, such that a position of the printing material curing and forming remains essentially unchanged. The driving mechanism is configured to drive the forming platform 11 to move vertically. After one printing layer is cured and formed, the printing layer that has been cured and formed is moved upward by moving the forming platform 11 upward, and then the printing of a next layer may be performed, such that printing is performed layer by layer to form the 3D printed object. In this embodiment, the optical-mechanical system is located under the material tray 12, and the material tray 12 is transparent at the bottom and may allow a light to pass through.

The 3D printed object adheres to the forming surface of the forming platform 11 upside down after being printed. Optionally, the 3D printing device further comprises a shoveling blade 132 assembly (not shown in the figure), and the shoveling blade 132 assembly can separate the 3D printed object from the forming platform 11 after the 3D printed object is printed, such that the 3D printed object can fall on the object transferring assembly 14, and be carried away from the lower part of the forming platform 11. In other optional embodiments, the 3D printing device may not include the shoveling blade 132 assembly, and the 3D printed object may be manually separated from the forming platform 11.

In the embodiments of the present disclosure, the object transferring assembly 14 comprises the receiving component 141 and the driving assembly (not shown in the figure). The receiving component 141 has an object receiving position and a material-discharging position. The receiving component 141 is configured to receive the 3D printed object separate from the forming platform 11 of the 3D printing device in the object receiving position. In this embodiment, the object receiving position of the receiving component 141 is located between the material tray 12 and the forming platform 11. When the receiving component 141 is in the material-discharging position, at least most of the receiving component 141 is moved out between the forming platform 11 and the material tray 12. In this embodiment, the material-discharging position is a position in which the 3D printed object is removed from the receiving component 141. The specific manner of removing the 3D printed object comprises manually taking out the 3D printed object from the receiving component 141, or taking out the 3D printed object from the receiving component 141 by using an automated mechanical structure. The driving assembly is configured to drive the receiving component 141 to move between the object receiving position and the material-discharging position.

Further, in an optional implementation, the object receiving position is spaced horizontally from the material-discharging position. The driving assembly is configured to drive the receiving component 141 from the material-discharging position to the object receiving position in a material receiving direction (i.e., a direction a in the figure), and drive the receiving component 141 from the object receiving position to the material-discharging position in a material sending direction (i.e., a direction b in the figure). In this embodiment, the material receiving direction is opposite to the material sending direction. In the figure, the receiving component 141 is in the material-discharging position.

In the embodiments of the present disclosure, the liquid discharging portion 1421 is provided at the bottom of the receiving component 141. By providing the liquid discharging portion 1421, when the receiving component 141 receives the 3D printed object, the uncured printing material adhering to the surface of the 3D printed object may be discharged from the receiving component 141 through the liquid discharging portion 1421 and collected. Further, the liquid discharging portion 1421 has an outlet, and the outlet is opposite to at least a portion of the opening of the material tray 12 in the vertical direction, such that the printing material on the surface of the 3D printed object received by the receiving component 141 can flow back to the material tray 12, so as to realize the recycling of this portion of the printing material, thereby saving a material cost. Since the liquid printing material naturally flows back to the material tray 12 during receiving, an additional recycling process does not need to be particularly added in the processing flow by using the object transferring assembly 14 provided in the embodiments of the present disclosure.

Specifically, in this embodiment, the receiving component 141 is a basket-shaped; the liquid discharging portion 1421 comprises a hole; the liquid discharging portion 1421 is provided at the bottom of the receiving component 141; the printing material may flow to the bottom of the receiving component 141, and then flows out from the liquid discharging portion 1421.

In other optional embodiments, the liquid discharging portion 1421 may also be a combination of the hole and a catheter, and the printing material may be guided toward other directions by using the catheter. In other optional embodiments, a temporary storage container may also be disposed particularly, so as to collect the printing material discharged from the liquid discharging portion 1421. The temporary storage container may communicate with the liquid discharging portion 1421, or may also be spaced under the liquid discharging portion 1421, so as to receive the printing material flowing from the liquid discharging portion 1421. The printing material in the temporary storage container may subsequently return to the material tray 12 for recycling.

Further, the liquid discharging portion 1421 nears a rear end of the bottom of the receiving component 141 in the material sending direction. In other words, the liquid discharging portion 1421 is close to an end of the receiving component 141 facing toward the direction a. Since the receiving component 141 moves in the material sending direction after receiving the 3D printed object, the position of the liquid discharging portion 1421 is also moved. By disposing the liquid discharging portion 1421 near the rear end of the bottom of the receiving component 141 in the material sending direction, the liquid discharging portion 1421 can be maintained above the material tray 12 for a long time (even always) during the moving of the receiving component 141 from the object receiving position to the material-discharging position, such that the printing material flowing from the liquid discharging portion 1421 can successfully fall in the material tray 12. Optionally, the liquid discharging portion 1421 is opposite to the opening of the material tray 12 in the vertical direction when the receiving component 141 is in any position between the object receiving position and the material-discharging position, such that the printing material flowing from the liquid discharging portion 1421 can always flow into the material tray 12. In this embodiment, a plurality of holes are provided in the bottom of the receiving component 141, and the plurality of holes are arranged in a motion direction perpendicular to the receiving component 141, so as to form the liquid discharging portion 1421.

In other optional embodiments, an arrangement position of the liquid discharging portion 1421 may be adjusted, which is not limited to nears the rear end of the bottom of the receiving component 141 in the material sending direction. For example, the plurality of liquid discharging portions 1421 may be the plurality of holes that are arranged at the entire bottom of the receiving component 141. In this case, the receiving component 141 may be controlled to stay for a certain period of time after receiving the 3D printed object, and after the liquid printing material flows into the material tray 12, the receiving component 141 is moved to the material-discharging position for discharging.

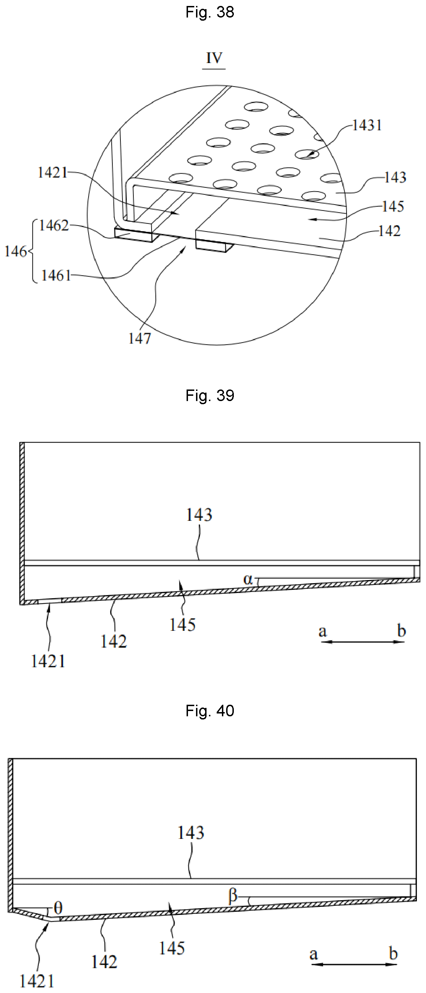

Fig. 37 is an exploded view of an object transferring assembly 14 according to an embodiment of the present disclosure. Fig. 38 is a partial enlarged view of a part IV in Fig. 37. As shown in Fig. 36 to Fig. 38, in this embodiment, the receiving component 141 comprises a bottom plate 142 and a side plate connected to the bottom plate 142, an accommodating cavity for storing the 3D printed object is enclosed by the bottom plate 142 and the side plate, a bearing plate 143 is disposed above the bottom plate 142, a liquid storage cavity 145 is formed between the bottom plate 142 and the bearing plate 143, the liquid discharging portion 1421 is disposed on the bottom plate 142 and nears a rear end of the bottom plate 142 in the material sending direction, and a plurality of liquid passing holes 1431 are provided in the bearing plate 143. In this embodiment, the liquid passing holes 1431 are circular holes; and the liquid passing holes 1431 are distributed on the bearing plate 143 in an array. Definitely, in some embodiments, the bearing plate 143 may not be disposed, the bottom plate 142 is used to directly receive the 3D printed object, and the liquid printing material is recycled through the liquid discharging portion 1421.

It can be appreciated that, when the bearing plate 143 is not disposed, if the liquid discharging portion 1421 is disposed on the rear end of the bottom of the receiving component 141 in the material sending direction, the 3D printed object is most likely not fall directly at the liquid discharging portion 1421 when falling at the bottom of the receiving component 141, such that the printing material first flows from the 3D printed object to the bottom of the receiving component 141, and then flows to the liquid discharging portion 1421 along the bottom of the receiving component 141. This results in more printing materials remaining around the 3D printed object for a long time. In other words, the speed of the 3D printed object separated from the liquid printing material is relatively slow, leading to more printing materials still adhering to the lower surface of the 3D printed object after the receiving component 141 reaches the material-discharging position. This portion of the material tends to leave the receiving component 141 with the 3D printed object, and thus is wasted. In this embodiment, by distributing the liquid passing holes 1431 on bearing plate 143, the 3D printed object can directly fall on the bearing plate 143 distributed with the liquid passing holes 1431, and the printing material rapidly permeates downward to the liquid storage cavity 145 by passing through the liquid passing holes 1431 when flowing onto the bearing plate 143, thereby realizing the rapid separation of the printing material from the 3D printed object. In this way, after the 3D printed object moves to the material-discharging position with the receiving component 141, less printing materials adhere to the lower surface, such that the printing material wasted is reduced accordingly. At the same time, the printing material in the liquid storage cavity 145 may further flow into the material tray 12 from the liquid discharging portion 1421 on the bottom plate 142, thereby realizing the recycling of the printing material.

In the optional embodiments, a shape of the liquid passing hole 1431 may be adjusted, for example, designed as a strip-shaped hole. The bearing plate 143 may be constituted by a plurality of ribs that are parallelly arranged at intervals, the liquid passing holes 1431 are formed between the adjacent two ribs. The bearing plate 143 with such structure can allow the printing material to pass through rapidly, thereby realizing the rapid separation of the printing material from the 3D printed object.

Referring to Fig. 36 and Fig. 37 again, in this embodiment, the side plate of the receiving component 141 comprises two first side plates 1433 parallelly spaced, and a second side plate 1434. The two first side plates 1433 extend in the material receiving direction and the material sending direction. The two first side plates 1433 are respectively arranged on two opposite sides of the bottom plate 142 assembly. The second side plate 1434 is disposed on the rear end of the bottom plate 142 assembly in the material sending direction, and is perpendicular to the material receiving direction and the material sending direction. In this embodiment, two ends of the first side plate 1433 are respectively connected to two second side plates 1434, such that the first side plate 1433, the second side plate 1434, and the bottom plate 142 assembly are jointly enclosed into the accommodating cavity. The accommodating cavity has a material-receiving opening that faces upward and is configured to receive the 3D printed object, and a front end in the material sending direction has a discharging opening configured to send the 3D printed object.

Further, in this embodiment, the object transferring assembly 14 further comprises a object pushing assembly 144; and the object pushing assembly 144 is configured to push out the 3D printed object in the receiving component 141 from the discharging opening when the receiving component 141 is in the discharging position. In this embodiment, the object pushing assembly 144 comprises the object pushing member 1441 and a material pushing driving member that is configured to drive the object pushing member 1441 (not shown in the figure) to move in the material receiving direction (i.e., the direction a in the figure) and the material sending direction (i.e., the b direction in the figure). Optionally, when the object pushing assembly 144 does not perform a discharging operation, the object pushing member 1441 is always located on the rear end of the accommodating cavity. When the receiving component 141 is in the discharging position, the object pushing assembly 144 performs the discharging operation, and the material pushing driving member drives the object pushing member 1441 to move in the material sending direction, so as to push out the 3D printed object from the receiving component 141 through the discharging opening, thereby completing discharging. In other optional embodiments, the object transferring assembly 14 may not include the object pushing assembly 144, and the 3D printed object in the receiving component 141 in the discharging position is taken out manually.

Fig. 39 is a cross-sectional view of a receiving component 141 according to an embodiment of the present disclosure. Optionally, the bottom plate 142 tilts relative to the horizontal plane, and an end of the bottom plate 142 that is provided with the liquid discharging portion 1421 is lower than the other end. In this embodiment, the rear end of the bottom plate 142 in the material sending direction is lower than the front end in the material sending direction. Through such arrangement, the liquid discharging portion 1421 may be in a lower position of the entire bottom plate 142, such that the printing material can flow to the liquid discharging portion 1421 more easily, and then flow into the material tray 12, thereby improving the recycling efficiency of the printing material. An included angle α of the bottom plate 142 relative to the horizontal plane may be 1°-30°.

Fig. 40 is a cross-sectional view of a receiving component 141 according to another embodiment of the present disclosure. Optionally, the bottom plate 142 has a first slope surface 1422 and a second slope surface 1423, which face toward the bearing plate 143; the first slope surface 1422 and the second slope surface 1423 are sequentially connected in the material receiving direction; an end of the first slope surface 1422 close to the second slope surface 1423 is lower than an end away from the second slope surface 1423; an end of the second slope surface 1423 close to the first slope surface 1422 is lower than an end away from the first slope surface 1422; and the liquid discharging portion 1421 is disposed at a junction of the first slope surface 1422 and the second slope surface 1423. Similar to the principle of the embodiments, in this embodiment, by disposing the liquid discharging portion 1421 at the junction of the first slope surface 1422 and the second slope surface 1423, the liquid discharging portion 1421 is located in the lowest position of the entire bottom plate 142, such that the printing materials in all positions on the bottom plate 142 all flow to the liquid discharging portion 1421, and are not stored in the liquid storage cavity 145 for a long time. Further, an included angle β between the first slope surface 1422 and the horizontal plane and an included angle θ between the second slope surface 1423 and the horizontal plane are optionally range from 1° to 30°.

In other optional embodiments, the entire bottom plate 142 may also be designed to be funnel-shaped, and the liquid discharging portion 1421 is arranged at the lowest point.

Referring to Fig. 36 to Fig. 38 again, in this embodiment, the receiving component 141 further comprises a filtering assembly 146 disposed at a liquid leakage port. Since the printing material may contain resin particles that have been cured or solid particle foreign matters falling in the printing material in an environment, by disposing the filtering assembly 146, these particles can be filtered, thereby prevent the particles from entering the material tray 12 to affect the printing operation.

In this embodiment, the filtering assembly 146 comprises a filter screen 1461 and a clamp plate 1462; the clamp plate 1462 is detachably connected to the bottom plate 142 assembly; the filter screen 1461 is clamped between the clamp plate 1462 and the bottom plate 142 assembly and covers the liquid discharging portion 1421; and an avoiding groove 147 corresponding to the position of the liquid discharging portion 1421 is provided in the clamp plate 1462. Specifically, the clamp plate 1462 may be fixed on an outer surface of the bottom plate 142 through a fastening member such as a screw, and at the same time, the filter screen 1461 is clamped and fixed between the bottom plate 142 and the clamp plate 1462. In other optional embodiments, the filtering assembly 146 may also be fixed by means of welding; and the filtering assembly 146 may also be disposed on an inner side of the bottom plate 142, that is, located in the liquid storage cavity 145.

The object transferring assembly 14 provided in the embodiments of the present disclosure comprises the receiving component 141 and the driving assembly; the receiving component 141 has the object receiving position; the receiving component 141 is configured to receive the 3D printed object separated from the forming platform 11 of the 3D printing device in the object receiving position; and the liquid discharging portion 1421 is provided at the bottom of the receiving component 141. After the 3D printing device completes printing, the 3D printed object adhering to the forming platform 11 is separated; and the 3D printed object separated from the forming platform 11 may be received when the receiving component 141 is in the object receiving position. After the receiving component 141 receives the 3D printed object in the object receiving position, the liquid printing material adhering to the surface of the 3D printed object is discharged through the liquid discharging portion 1421 and re-collected by (material tray 12 or other containers), such that the printing material is recycled, thereby preventing the printing material from being wasted as it is sent away with the 3D printed object.

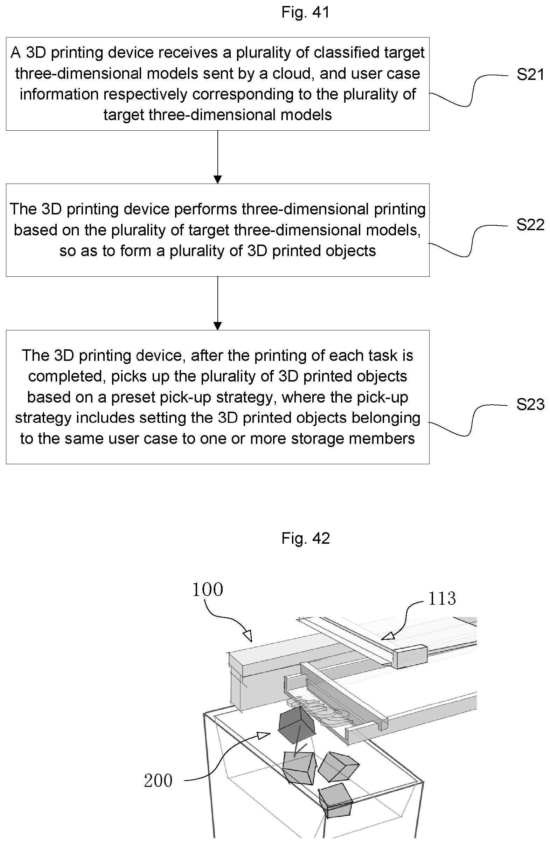

As shown in Fig. 41, in an optional embodiment of the present disclosure, the system for three-dimensional printing further comprises a 3D printing device. The 3D printing device comprises: a first controller, configured to receive the plurality of classified target three-dimensional models sent by the cloud, and user case information respectively corresponding to the plurality of target three-dimensional models; a printing mechanism, configured to perform three-dimensional printing based on the plurality of target three-dimensional models, so as to form a plurality of 3D printed objects; and a pick-up apparatus, configured to, after the printing of each task is completed, pick up the plurality of 3D printed objects based on a preset pick-up strategy, where the pick-up strategy comprises setting the 3D printed objects belonging to the same user case to one or more storage members. By setting the three-dimensional objects of the same user case to one or more storage members, the purpose of centralized printing and picking up of the three-dimensional objects of the same user case is achieved, such that sorting efficiency after printing is improved, the production and production scheduling efficiency of the three-dimensional objects is greatly improved, and processing time is shortened; and the technical effect of improving the printing efficiency of the three-dimensional objects is achieved, thereby solving the technical problem of time-consuming and labor-intensive sorting during 3D printing production, resulting in poor 3D printing production efficiency in the related art.

Fig. 42 is a schematic structural diagram of an optional 3D printing device according to an embodiment of the present disclosure. The 3D printing device 100 comprises the printing mechanism and the pick-up apparatus 200; the printing mechanism comprises a forming platform and a material tray, and the material tray is configured to hole a printing material; the forming platform has a forming surface, and is configured to adhere the printing material to the forming surface layer by layer, so as to obtain a printed member (i.e., the three-dimensional object); the pick-up apparatus comprises a separation apparatus, an object transferring assembly, and an object receiving assembly; the separation apparatus is configured to separate the 3D printed object from the forming surface; the object transferring assembly is configured to transfer the 3D printed object separated from the forming surface to the storage member; and the object transferring assembly has a first position moving above the material tray and a second position moving above the storage member, so as to transfer the 3D printed object into the storage member. The object receiving assembly is configured to dispose the printed member in the storage member, for example, packing the three-dimensional objects of the same user case in one or more storage boxes or storage bags.

Exemplarily, after the printing of each task is completed, the 3D printing device picks up the plurality of 3D printed objects based on a preset pick-up strategy. The pick-up strategy comprises setting the three-dimensional objects belonging to the same user case to one or more storage members. It can be appreciated that, the capacity of one storage member is limited, and when the number of the three-dimensional objects belonging to the same user case can be set to one storage member, the three-dimensional objects of the same user case may be packed in one storage member; and when there are more three-dimensional objects belonging to the same user case, the three-dimensional objects may also be set to the plurality of storage members.

In an optional embodiment, picking up the plurality of 3D printed objects based on the preset pick-up strategy comprises: the 3D printing device sequentially performs picking up based on layout information of more than two user cases when there are 3D printed objects respectively corresponding to more than two user cases in the same production sequence, so as to distinguish the 3D printed objects respectively corresponding to different user cases.

It can be appreciated that, after the 3D printing device completes the printing of one task, if there are 3D printed objects of only one user case in the task, picking up, discharging, and collection are directly performed; and if there are a plurality of user cases in the task, discharging and collection are performed by distinguishing the user cases, respectively.

Optionally, sequentially performing picking up based on the layout situations of the user case comprises: the 3D printing device controls a motion parameter of the pick-up apparatus of the 3D printing device according to layout information, and after completing the picking up of the 3D printed objects of one user case, picks up the 3D printed objects of the next user case, so as to realize the picking up of the 3D printed objects in a printing region in sequence.

Exemplarily, for the case where there are the plurality of user cases in the same task, as shown in Fig. 6c, the three-dimensional models of different users are placed different regions during layout. A, B, and C in Fig. 6c are the identifiers of different users, which may be in a length direction or a width direction or a certain direction, and then discharging is performed by a material picking-up apparatus in a partitioning direction, such that there may be a variety of discharging methods for executing the discharging process. For example, when the object transferring assembly is a shoveling blade assembly, a movement distance of the shoveling blade may be controlled according to the layout information during discharging. After three-dimensional objects of the user A is shoveled, the shoveling blade stops, and the object receiving assembly is controlled to perform collection and packing on the three-dimensional objects of the user A, and then three-dimensional objects of the user B are shoveled, collected and packed, and so on, so as to complete the picking up of the three-dimensional objects of all the users in the task.

In other embodiments, a push assembly may also be used to realize automated pickup. Push rods in the push assembly may be configured in different regions. The push rod corresponding to the user A region is pressed according to the layout information to push down the three-dimensional objects in the user A region, then the object receiving assembly is controlled to collect and pack the three-dimensional objects of the user A, the three-dimensional objects of the user B are then picked up, and so on, so as to complete the picking up of the three-dimensional objects of all the users in the task.

In other embodiments, a laser cutting assembly may also be used to realize automated pickup. A laser is controlled to first pick up the three-dimensional objects in the user A region according to the layout information, cut off the three-dimensional objects in the user A region, then the object receiving assembly is controlled to pack the three-dimensional objects of the user A, the three-dimensional objects in the user B region are then picked up, and so on, so as to complete the picking up of the three-dimensional objects of all the users in the task.

In an optional embodiment of the present disclosure, the pick-up apparatus 200 comprises: an object receiving assembly, comprising one or more storage members, where the storage member is configured to store the 3D printed object; and the object receiving assembly stores the 3D printed objects belonging to the same user case in one or more storage members. Through the above arrangement, 3D printed objects of the same user case can be stored together, and can be effectively classified, such that the 3D printed objects belonging to different user cases can be prevented from being stored together, thereby avoiding the subsequent need for a sorting operation, and thus effectively improving generation efficiency. Therefore, the system for three-dimensional printing may effectively solve the problem of time-consuming and labor-intensive sorting during 3D printing production, resulting in low 3D printing production efficiency in the related art.

In an embodiment, the object receiving assembly 20 comprises a conveying mechanism 22, the conveying mechanism 22 is configured to drive the storage member 21 to move to an object receiving position, and when the storage member 21 is located in the object receiving position, the 3D printed object enters into the storage member 21 through an opening of the storage member 21. In this way, the 3D printed objects can be stored. Specifically, the conveying mechanism 22 drives the storage member 21 to move to the object receiving position such that the storage process is simpler.

In an embodiment, the 3D printing device comprises the separation apparatus and the object transferring assembly. The separation apparatus is configured to separate the 3D printed object from the forming surface of the 3D printing device, and the specific implementation of the separation apparatus is referred to in the above-described embodiment and is not be described herein again. The object transferring assembly is configured to transfer the 3D printed object separated from the forming surface to the storage member 21; the object transferring assembly has the object receiving position moved above the material tray and the discharging position moved above the storage member, so as to transfer the 3D printed object in the storage member 21.

In an embodiment, the system for three-dimensional printing further comprises the object transferring assembly 14. The object transferring assembly 14 is configured to be moved between the first position and the second position, in the first position, the object transferring assembly 14 is configured to receive the 3D printed object 8 separated from the forming surface, in the second position, the object transferring assembly 14 rotates the 3D printed object 8 to the object receiving body 31, the driving mechanism can rotate the object receiving body 31 to move the 3D printed object 8 out from the object receiving body 31 and move the 3D printed object 8 into the storage member 21 through an opening of the storage member 21. Or, the object receiving body 31 is configured to be moved between the first position and the second position, the object receiving body 31 is configured to receive, in the first position, the 3D printed object 8 with the residual printing materials and separated from the forming surface, and the object receiving body 31 is rotated from the first state to the second state in the second position; and the driving mechanism can rotate the object receiving body 31 to move the 3D printed object 8 out from the object receiving body 31 and move the 3D printed object 8 into the storage member 21 through the opening of the storage member 21.

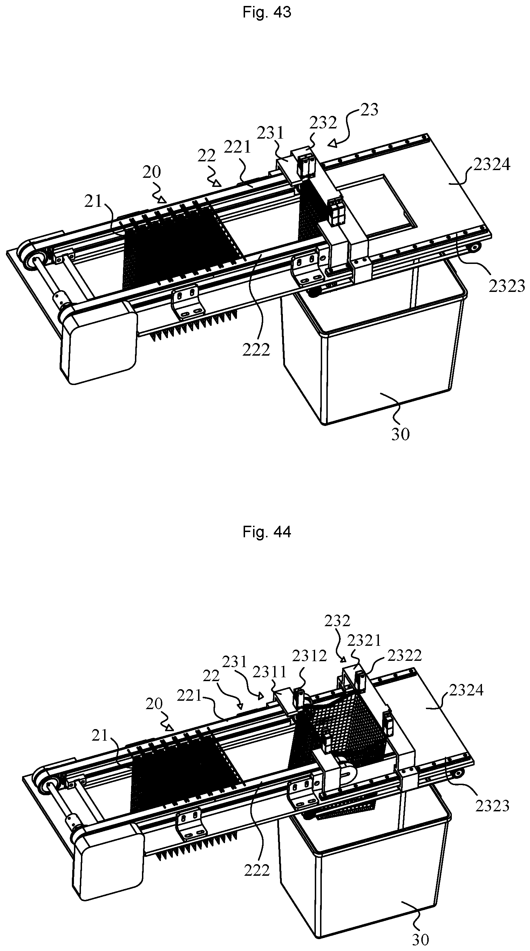

As shown in Fig. 43 to Fig. 47, in an embodiment, the object receiving assembly 20 further comprises an opening mechanism 23; and the opening mechanism 23 is disposed at an end portion of the conveying mechanism 22, and configured to drive the opening of the storage member 21 to switch between an open state and a closed state. The arrangement of the opening mechanism 23 can drive the storage member 21 to switch between the open state and the closed state, and can adjust the storage member 21.

As shown in Fig. 43 to Fig. 47, in an embodiment, the opening mechanism 23 comprises a first unit configured to drive a first end of the storage member 21 and a second unit configured to drive an opposite second end of the storage member 21. The first end of the storage member 21 and the second end of the storage member 21 can move relative to each other such that the opening of the storage member 21 is switched between the open state and the closed state. The first unit and the second unit can control the opening of the storage member, thereby realizing the switching of the opening of the storage member between the open state and the closed state.

As shown in Fig. 43 to Fig. 47, in an embodiment, the first unit comprises a fixed mechanism 231, and the second unit comprises a mobile mechanism 232; the mobile mechanism 232 is movably provided and has an initial position close to the fixed mechanism 231 and a pulling position away from the fixed mechanism 231; and when the storage member 21 moves to the object receiving position, the fixed mechanism 231 fixes the first end of the opening of the storage member 21, and the mobile mechanism 232 is connected to the second end of the opening of the storage member 21 and can pull open the opening of the storage member 21. The mobile mechanism 232 can move, and both the fixed mechanism 231 and the mobile mechanism 232 can fix the opening of the storage member 21, and when the mobile mechanism 232 moves, the opening of the storage member 21 can be pulled open, thereby causing the storage member 21 to switch from the closed state to the open state.

Specifically, the storage member 21 is a storage bag.

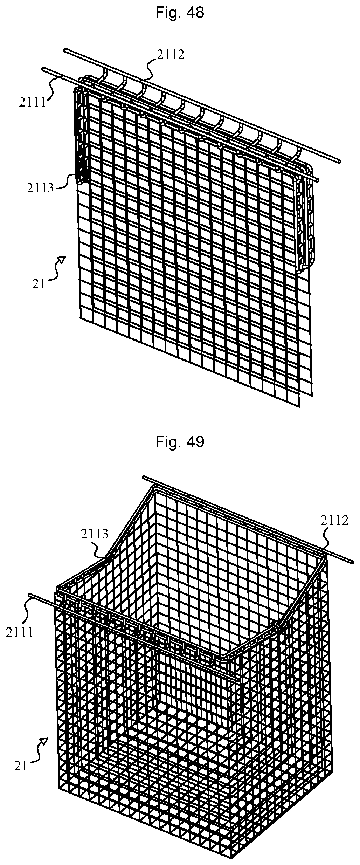

As shown in Fig. 43 to Fig. 50, in an embodiment, a skeleton 211 is provided at the opening of the storage member 21; the skeleton 211 can be supported on the conveying mechanism 22; and the fixed mechanism 231 and the mobile mechanism 232 can be mated with the skeleton 211. The skeleton 211 is connected to the opening of the storage member 21, such that the opening of the storage member 21 is easily closed and opened. Furthermore, both the fixed mechanism 231 and the mobile mechanism 232 can be mated with the skeleton 211, thereby realizing the adjustment of the opening of the storage member 21.

As shown in Fig. 43 to Fig. 50, in an embodiment, the skeleton 211 comprises a first skeleton body portion 2111 and a second skeleton body portion 2112; an elastic member 2113 is disposed between the first skeleton body portion 2111 and the second skeleton body portion 2112; the elastic member 2113 tends to cause the first skeleton body portion 2111 and the second skeleton body portion 2112 to be in attachment arrangement; and the arrangement of the first skeleton body portion 2111 and the second skeleton body portion 2112 can realize attachment separation. The elastic member 2113 can pull and drag the first skeleton body portion 2111 and the second skeleton body portion 2112, thereby causing the first skeleton body portion 2111 to be attached to the second skeleton body portion 2112. Specifically, the above elastic member 2113 is a torsional spring, which of course may also be a spring.

In other embodiments, the first skeleton body portion 2111 and the second skeleton body portion 2112 are connected by adhesive bonding. Initially, the opening of the storage member 21 is in the open state and moves on the conveying mechanism 22. When the storage member 21 stores the 3D printed object, the opening mechanism 23 pushes against the opening of the storage member 21, thereby causing the opening of the storage member 21 to be in the closed state; and the first skeleton body portion 2111 and second skeleton body portion 2112 can be bonded together, thereby realizing the closure of the storage member 21.

In other embodiments, the first skeleton body portion 2111 and the second skeleton body portion 2112 are connected in a clamped manner. Initially, the opening of the storage member 21 is in the open state and moves on the conveying mechanism 22. When the storage member 21 stores the 3D printed object, the opening mechanism 23 pushes against the opening of the storage member 21, thereby causing the opening of the storage member 21 to be in the closed state; and the first skeleton body portion 2111 and second skeleton body portion 2112 can be connected in a clamped manner, thereby realizing the closure of the storage member 21.

In other embodiments, the first skeleton body portion 2111 and the second skeleton body portion 2112 are connected through a magnetic structure. Initially, the opening of the storage member 21 is in the open state and moves on the conveying mechanism 22. When the storage member 21 stores the 3D printed object, the opening mechanism 23 pushes against the opening of the storage member 21, thereby causing the opening of the storage member 21 to be in the closed state; and the first skeleton body portion 2111 and second skeleton body portion 2112 can be connected in a magnetic manner, thereby realizing the closure of the storage member 21.

In other embodiments, the first skeleton body portion 2111 and the second skeleton body portion 2112 are connected by a ratchet structure. Initially, the opening of the storage member 21 is in the open state and moves on the conveying mechanism 22. When the storage member 21 stores the 3D printed object, the opening mechanism 23 pushes against the opening of the storage member 21, thereby causing the opening of the storage member 21 to be in the closed state; and the first skeleton body portion 2111 and second skeleton body portion 2112 can be connected together, thereby realizing the closure of the storage member 21. Furthermore, the first skeleton body portion 2111 and the second skeleton body portion 2112 cannot be separated due to the arrangement of the ratchet structure.

As shown in Fig. 43 to Fig. 50, in an embodiment, the conveying mechanism 22 comprises a first transmission element 221 and a second transmission element 222 spaced apart; the storage member 21 is disposed between the first transmission element 221 and the second transmission element 222; and the first transmission element 221 and the second transmission element 222 support the skeleton 211. An avoidance space is formed between the first transmission element 221 and the second transmission element 222; the storage member 21 is disposed within the avoidance space; and the first transmission element 221 and the second transmission element 222 support the skeleton 211. The storage member 21 can be in the avoidance space. The first transmission element 221 and the second transmission element 222 can support the skeleton 211; and when the first transmission element 221 and the second transmission element 222 move, the skeleton 211 can move with the first transmission element 221 and the second transmission element 222.

As shown in Fig. 43 to Fig. 50, in an embodiment, the fixed mechanism 231 is disposed at an end of the conveying mechanism 22 facing toward the mobile mechanism 232; the fixed mechanism 231 comprises a positioning frame 2311 and a first telescoping member 2312 disposed on the positioning frame 2311; and the first telescoping member 2312 can extend toward the conveying mechanism 22 and enter the hole of the skeleton 211. The first telescoping member 2312 can extend and be inserted into the hole of the skeleton 211, such that the fixed mechanism 231 can be connected to the skeleton 211.

As shown in Fig. 43 to Fig. 50, in an embodiment, the mobile mechanism 232 comprises a mobile member 2321 and a second telescoping member 2322 disposed on the mobile member 2321; in a conveying direction of the storage member 21, the mobile member 2321 is movably disposed downstream the conveying mechanism 22, and the second telescoping member 2322 can extend toward the conveying mechanism 22 and enter the hole of the skeleton 211. The second telescoping member 2322 can extend and be inserted into the hole of the skeleton 211, such that the mobile mechanism 232 can be connected to the skeleton 211, and when the mobile mechanism 232 moves, the opening of the storage member 21 can be pulled, so as to open the opening of the storage member 21.

As shown in Fig. 43 to Fig. 50, in an embodiment, the mobile mechanism 232 further comprises a guiding structure 2323, a fixed frame 2324, and a first driving member 2325; the fixed frame 2324 is disposed at an end portion of the conveying mechanism 22; the guiding structure 2323 is disposed between the fixed frame 2324 and the mobile member 2321; and the first driving member 2325 drives the mobile member 2321. The first driving member 2325 can drive the mobile member 2321 to move, and the arrangement of the guiding structure 2323 can cause the movement of the mobile member 2321 to be more stable.

As shown in Fig. 43 to Fig. 50, in an embodiment, the mobile mechanism 232 further comprises a first transmission assembly 2326; the first transmission assembly 2326 comprises a first transmission wheel 23261, a second transmission wheel 23262, and a first chain belt 23263 connected to the first transmission wheel 23261 and the second transmission wheel 23262; the mobile member 2321 is mated with the first chain belt 23263; the first driving member 2325 is mated with the first transmission wheel 23261; and the first driving member 2325 drives the first chain belt 23263 to move the mobile member 2321. The above arrangement of the first transmission assembly 2326 can realize transmission, and the first transmission assembly 2326 is relatively simple in structure and easy to arrange.

As shown in Fig. 43 to Fig. 50, in an embodiment, the mobile mechanism 232 further comprises a third transmission wheel 23264 and a second chain belt 23265; the second chain belt 23265 is connected between the third transmission wheel 23264 and the first driving member 2325; and the third transmission wheel 23264 and the first transmission wheel 23261 are coaxially arranged and move synchronously. The above arrangement causes the first driving member 2325 to be located under the fixed frame 2324, in this way, the entire structure can be more compact.

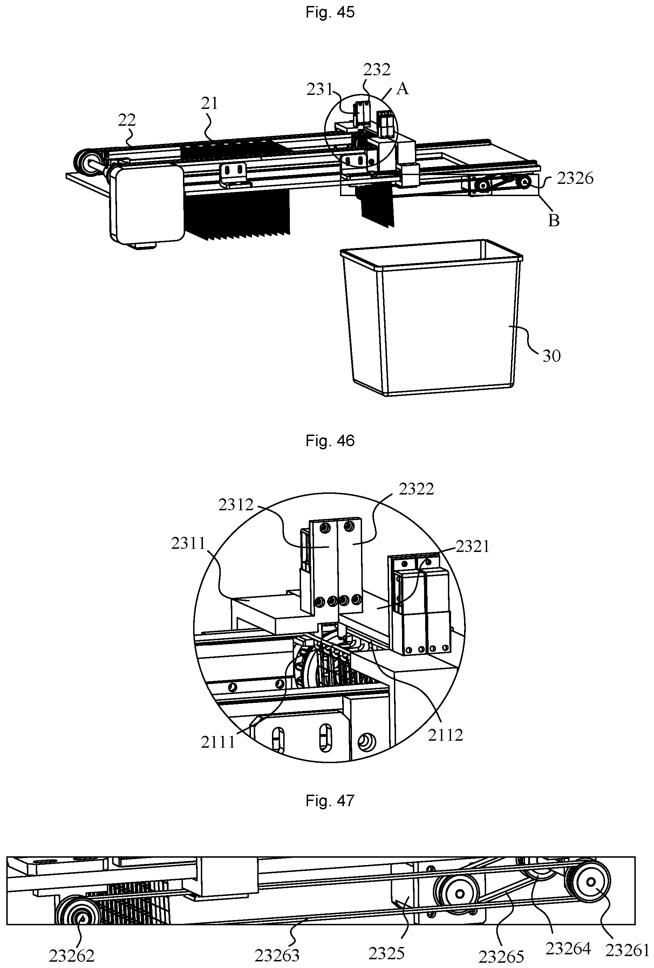

As shown in Fig. 45, in an embodiment, the pick-up apparatus further comprises an object receiving container 35, and the object receiving container 35 is configured to receive the storage member 21. The arrangement of the object receiving container 35 can realize the storage of the above storage member 21. Specifically, the object receiving container 35 is a material-receiving box.

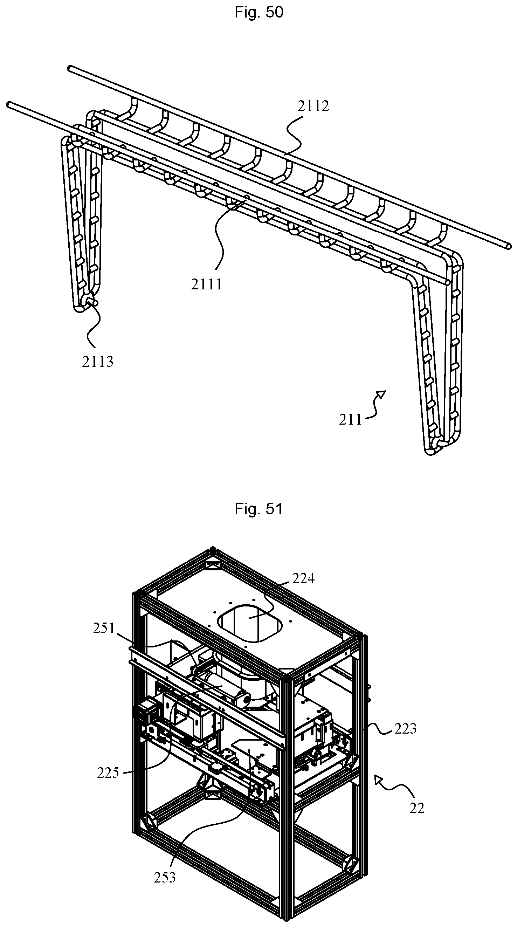

As shown in Fig. 51, in an embodiment, the storage member 21 is disposed on the conveying mechanism 22 and is configured to convey the storage member 21 in a vertical direction; the object receiving assembly 20 further comprises a sealing mechanism 24; the sealing mechanism 24 is disposed under the conveying mechanism 22; the sealing mechanism 24 has an avoidance position and a sealing position; the storage member 21 is located in the sealing mechanism 24; and when the sealing mechanism 24 moves from the avoidance position and the sealing position, the sealing mechanism 24 seals the storage member 21. The storage member 21 is sleeved on the conveying mechanism 22 and can move on the conveying mechanism 22, such that the sealing mechanism 24 can perform sealing after the 3D printed object enters into the storage member 21.

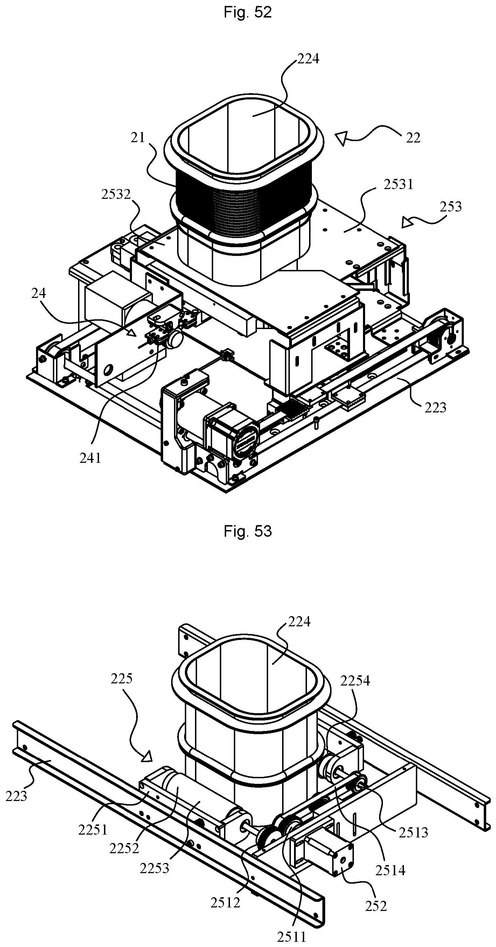

As shown in Fig. 51 to Fig. 53, in an embodiment, the conveying mechanism 22 further comprises a base frame 223 and a guiding cylinder 224; the guiding cylinder 224 is disposed on the base frame 223; the storage member 21 is sleeved on the guiding cylinder 224; and the sealing mechanism 24 is located below the guiding cylinder 224. The guiding cylinder 224 is fixed on the base frame 223, so as to cause a position of the guiding cylinder 224 to be more stable. The storage member 21 is sleeved on the guiding cylinder 224.

As shown in Fig. 51 to Fig. 53, in an embodiment, the conveying mechanism 22 further comprises a rolling member 225; the rolling member 225 is disposed on the outer side of the guiding cylinder 224 and in pressure contact with the storage member 21; and the rolling member 225 rotates to move the storage member 21. The rolling member 225 can extrude the storage member 21; and when the rolling member 225 is rotated forward or reversed, the storage member 21 can move up and down, such that the number of the 3D printed objects stored in the storage member 21 can be adjusted.

As shown in Fig. 51 to Fig. 53, in an embodiment, the rolling member 225 comprises a mounting rack 2251 and a rotary drum 2252 disposed on the mounting rack 2251, and the mounting rack 2251 is connected to the base frame 223 through a elastic member. The rotary drum 2252 is in abutment fit with the storage member 21. Furthermore, due to the arrangement of the elastic member, the rotary drum 2252 can achieve elastic movement, such that it can ensure that the rotary drum 2252 abuts against the storage member 21, and the storage member 21 can be driven.

As shown in Fig. 51 to Fig. 53, in an embodiment, the rolling member 225 comprises a first rolling member 2253 and a second rolling member 2254, and the first rolling member 2253 and the second rolling member 2254 are disposed on two opposite sides of the guiding cylinder 224. The arrangement of the first rolling member 2253 and the second rolling member 2254 can cause the movement of the storage member 21 to be more stable.

As shown in Fig. 51 to Fig. 53, in an embodiment, the conveying mechanism 22 further comprises a second transmission assembly 251 and a second driving member 252; the second transmission assembly 251 is disposed between the first rolling member 2253 and the second rolling member 2254; and the second driving member 252 drives the first rolling member 2253 and the second rolling member 2254 to rotate in the same direction through the second transmission assembly 251. The synchronized movement of the first rolling member 2253 and the second rolling member 2254 described above can thus ensure that the storage member 21 moves up and down.

As shown in Fig. 51 to Fig. 53, in an embodiment, the second transmission assembly 251 comprises a first gear 2511, a second gear 2512, a rotating wheel 2513, and a third chain belt 2514; the first gear 2511 is disposed on a drive shaft of the second driving member 252; the second gear 2512 is connected to the first rolling member 2253; the rotating wheel 2513 is connected to the second rolling member 2254; the third chain belt 2514 is connected between the rotating wheel 2513 and the first gear 2511; and the first gear 2511 meshes with the second gear 2512. The second transmission assembly 251 enables the first rolling member 2253 and the second rolling member 2254 to be connected together, and enables the first rolling member 2253 and the second rolling member 2254 to move in the same direction.

As shown in Fig. 51 to Fig. 53, in an embodiment, the rotary drum 2252 comprises a rolling post and a brush provided on the rolling post. The brush can come into contact with the storage member 21, thereby ensuring the stable position of the storage member 21.

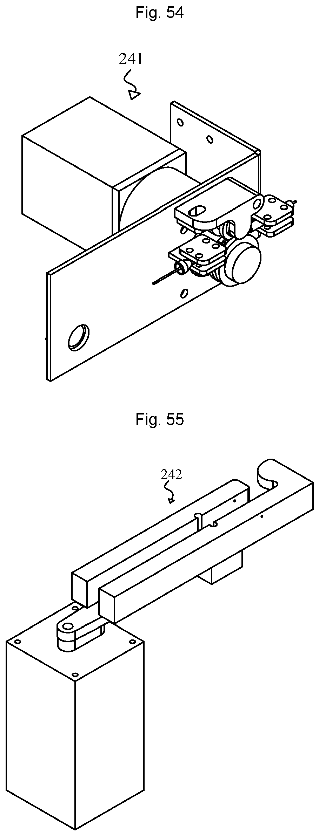

As shown in Fig. 51 to Fig. 55, in an embodiment, the sealing mechanism 24 comprises a wire feeding assembly 241 and a fastening assembly 242; the wire feeding assembly 241 and the fastening assembly 242 are disposed on the base frame 223 and are located under the guiding cylinder 224; the fastening assembly 242 can locking a wire fed by the wire feeding assembly 241 onto the storage member 21, thereby realizing the sealing of the storage member 21.

In other embodiments, the sealing mechanism 24 comprises an ultrasonic welding mechanism.

As shown in Fig. 51 to Fig. 55, in an embodiment, the object receiving assembly 20 further comprises a tightening assembly 253, the tightening assembly 253 is disposed between the sealing mechanism 24 and the guiding cylinder 224, the tightening assembly 253 comprises a first tightening member 2531 and a second tightening member 2532 disposed opposite to each other, and the first tightening member 2531 and the second tightening member 2532 can get close to each other relatively or be away from each other. The first tightening member 2531 and the second tightening member 2532 can be close to each other or away from each other, such that the storage member 21 can be contracted together, and then locked by the wire feeding assembly 241 and the fastening assembly 242, thereby ensuring the sealing.

As shown in Fig. 51 to Fig. 55, in an embodiment, the object receiving assembly 20 further comprises a cutting assembly 28, the cutting assembly 28 is disposed on a side of the tightening assembly 253 away from the guiding cylinder 224, and the cutting assembly 28 is configured to cut off the storage member 21 between two seals. The cutting assembly 28 can cut off the sealed storage member 21 to form a plurality of storage members 21, thereby effectively storing the 3D printed objects.

As shown in Fig. 51 to Fig. 55, in an embodiment, the cutting assembly 28 comprises a pedestal 281, and a first cutter body 282, a second cutter body 283, and a third driving member 284 disposed on the pedestal 281; the first cutter body 282 and the second cutter body 283 are arranged opposite to each other and have cutting positions and separation positions; the third driving member 284 is configured to drive the first cutter body 282 and the second cutter body 283 to move between the cutting position and the separation position; and when the first cutter body 282 and the second cutter body 283 are in the cutting position, the first cutter body 282 and the second cutter body 283 are arranged in a stacked manner. The first cutter body 282 and the second cutter body 283 mutually move to realize the cut-off, and the first cutter body 282 and the second cutter body 283 are arranged in a stacked manner, such that the first cutter body 282 and the second cutter body 283 can be prevented from colliding with each other to cause the first cutter body 282 or the second cutter body 283 to be damaged.

In other embodiments, the cutting assembly comprises only a first cutter body or only a second cutter body; the first cutter body is mated with a cutter holder, or the second cutter body is mated with the cutter holder, such that the cut-off can also be realized.

As shown in Fig. 51 to Fig. 55, in an embodiment, the pedestal 281 comprises a first pedestal body 2811 and a second pedestal body 2812; a first cutter body 282 is disposed on the first pedestal body 2811; a second cutter body 283 is disposed on the second pedestal body 2812; and a third driving member 284 is disposed between the first pedestal body 2811 and the second pedestal body 2812 such that the first pedestal body 2811 and the second pedestal body 2812 are close to each other or away from each other. The first pedestal body 2811 can cause a position of the first cutter body 282 to be more stable, the second pedestal body 2812 can cause a position of the second cutter body 283 to be more stable, and the arrangement of the first pedestal body 2811 and the second pedestal body 2812 can drive the third driving member 284 more easily.

As shown in Fig. 51 to Fig. 55, in an embodiment, the cutting assembly 28 further comprises an elastic support member 285, and the elastic support member 285 is disposed between the first pedestal body 2811 and the first cutter body 282. The arrangement of the elastic support member 285 causes the first cutter body 282 to be floatable, such that the first cutter body 282 can come into contact with the second cutter body 283, thereby achieving a better cutting effect.

Definitely, the elastic support member 285 may also be disposed between the second pedestal body 2812 and the second cutter body 283.

As shown in Fig. 51 to Fig. 56, in an embodiment, the second pedestal body 2812 is provided with a strip-shaped hole 28121, the second cutter body 283 is positionally-adjustably connected in the strip-shaped hole 28121, and a length direction of the strip-shaped hole 28121 is in the same direction as an axial direction of the guiding cylinder 224. The arrangement of the strip-shaped hole 28121 can realize the adjustment of the position of the second pedestal body 2812, such that the second cutter body 283 on the second pedestal body 2812 can be attached to the first cutter body 282.

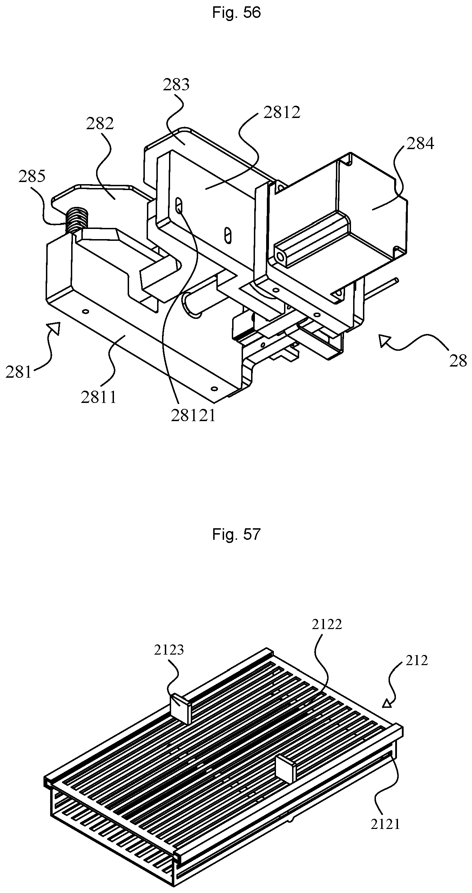

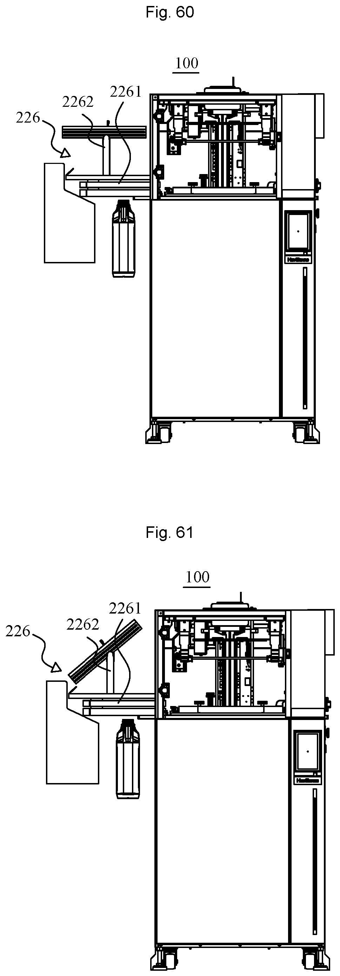

As shown in Fig. 57 to Fig. 61, in an embodiment, the storage member 21 has a first object receiving position and a second object receiving position; the conveying mechanism 22 can drive the storage member 21 to move between the first object receiving position and the second object receiving position; when the storage member 21 is located in the first object receiving position, the object transferring assembly 14 can cause the 3D printed object on the forming surface to enter the storage member 21; and when the storage member 21 is located in the second object receiving position, the conveying mechanism 22 clamps the storage member 21 in preparation for placing the storage member 21 on the storage rack 27, or the conveying mechanism transfers the 3D printed object in the storage member 21 to a container 261. Through the above arrangement, the conveying mechanism 22 can achieve a clamping function, that is, can clamp the storage member 21 for storage.

As shown in Fig. 57 to Fig. 61, in an embodiment, the conveying mechanism 22 comprises a sliding assembly 226, and the sliding assembly 226 can drive the storage member 21 to move between the first object receiving position and the second object receiving position. The sliding assembly 226 can drive the storage member 21 to move to convey the 3D printed object.

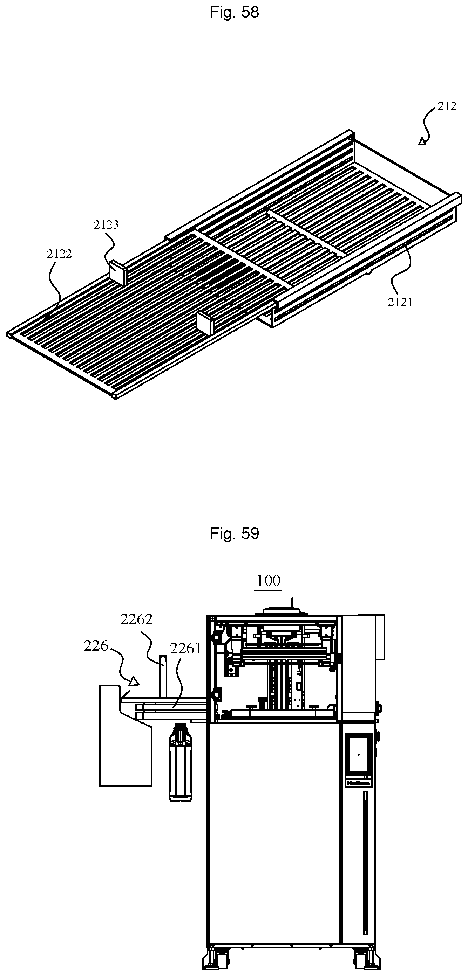

As shown in Fig. 57 and Fig. 58, in an embodiment, the storage member 21 comprises a storage box 212, the storage box 212 comprises a box body 2121 and a lid 2122 for opening and closing the box body 2121, and the lid 2122 is provided with a stopper 2123. The conveying mechanism 22 grasps the storage box 212 to move to the lower part of the forming surface, the stopper 2123 can abut against the side wall of the 3D printing device, causing the lid 2122 to be able to be opened, and in this case, the 3D printed object can fall into the box body 2121; and after storage is completed, a manipulator 29 clamps the storage box 212 to move and causes the storage box 212 to leave from the lower part of the forming surface, and the lid 2122 can close the box body 2121.

Specifically, the conveying mechanism 22 is a manipulator.

As shown in Fig. 57 and Fig. 58, in an embodiment, a magnetic member is disposed on the stopper 2123. The magnetic member can be magnetically mated with the 3D printing device, thereby causing the position of the lid 2122 to be more stable.

As shown in Fig. 57 and Fig. 58, in an embodiment, an opening portion is provided in the side wall of the box body 2121, the container 261 is provided on one side of the opening portion, and the sliding assembly 226 is further configured to transfer the 3D printed object in the storage member 21 into the container 261. The arrangement of the opening portion causes the 3D printed objects to be able to fall off therefrom. There are a plurality of containers 261, such that 3D printed objects belonging to the same user case may be stored in one or more containers 261, and 3D printed objects of different user cases are stored in different containers 261, thereby saving the subsequent sorting time and improving the production efficiency.

The object receiving position is located below the object transferring assembly 14. Therefore, material receiving can be realized.

As shown in Fig. 59 to Fig. 61, in an embodiment, the sliding assembly 226 comprises a first motor, a second motor, a sliding table 2261, and a connecting rod 2262; the first motor is configured to drive the sliding table 2261 to move between the first object receiving position and the second object receiving position; the connecting rod 2262 is disposed on the sliding table 2261; the box body is rotatably disposed on the connecting rod 2262; and the second motor is configured to drive the box body to rotate relative to the connecting rod 2262. The sliding table 2261 can slide and then can adjust a position of the connecting rod 2262, and the box body 2121 can swing relative to the connecting rod 2262, such that when the box body 2121 on the side close to the forming platform is lower than the box body 2121 on the side away from the forming platform, the 3D printed object can enter the box body 2121. When transportation is required, a swinging direction of the box body 2121 is adjusted by the second motor, so as to cause the side of the box body 2121 away from the forming platform to be in a lower position, in this way, the 3D printed object can fall out of the box body 2121.

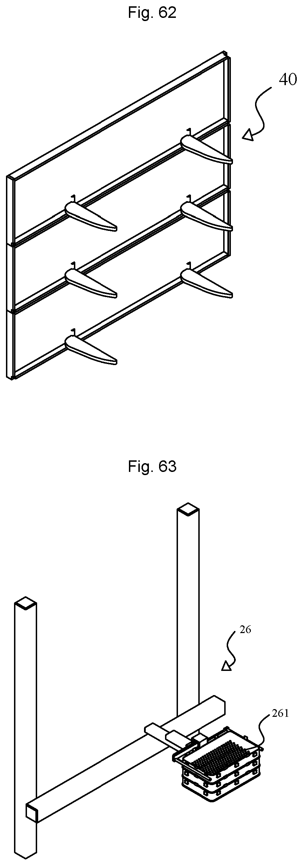

As shown in Fig. 62 and Fig. 63, in an embodiment, the object receiving assembly 20 further comprises a support frame 26, the plurality of containers 261 are movably provided on the support frame 26, and the sliding assembly 226 can place the 3D printed object from the storage box 212 in at least one of the plurality of containers 261. In this way, there is no need to replace the storage box 212 each time, such that transportation efficiency can be effectively improved.

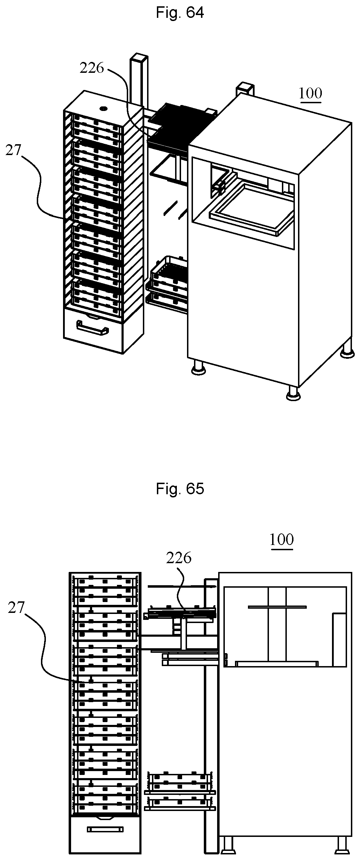

As shown in Fig. 64 and Fig. 65, in an embodiment, there are a plurality of storage boxes 212; the conveying mechanism 22 comprises the manipulator 29; the manipulator 29 can clamp one of the plurality of storage boxes 212 to move to the second object receiving position; and after the 3D printed objects are packed in the storage box 212, the manipulator 29 clamps the storage box 212 and places the storage box 212 on the storage rack 27. The above arrangement can effectively realize the classification and collection of 3D printed objects.

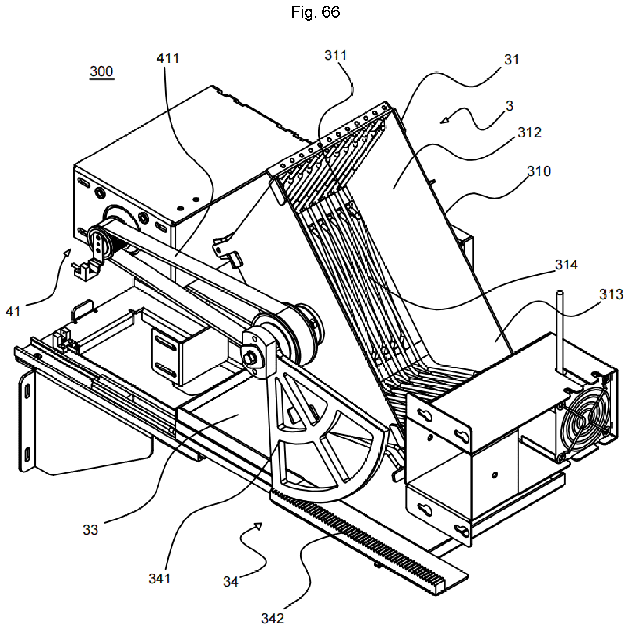

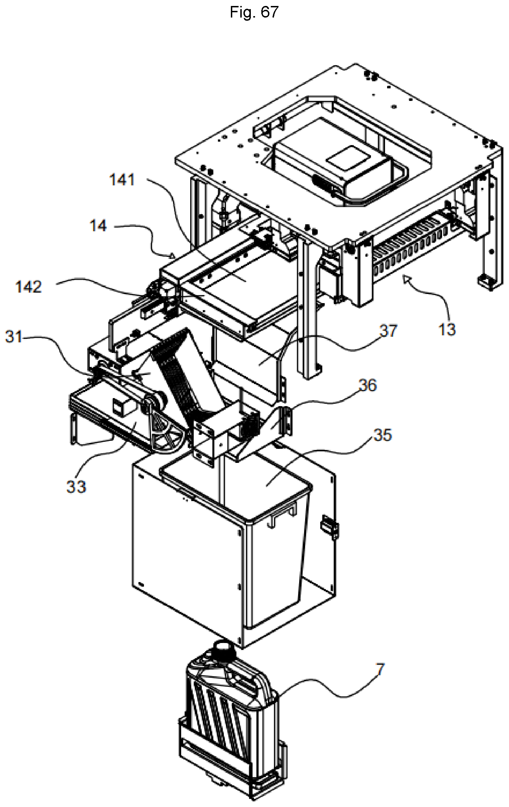

In an embodiment of the present disclosure, As shown in Fig. 66 and Fig. 67, the system for three-dimensional printing comprises a post-processing apparatus 300. The post-processing apparatus 300 comprises: an object receiving mechanism 3, comprising an object receiving body 31, the object receiving body 31 is configured to carry a 3D printed object 8 with residual printing materials 6; and a driving mechanism 41, configured to allow the object receiving mechanism 3 to rotate from a first state to a second state such that the residual printing materials 6 drip from the 3D printed object 8, wherein the 3D printed object 8 has at least two different tilt angles.

By using the technical solutions of the present disclosure, the post-processing apparatus 300 comprises: the object receiving mechanism 3, comprising an object receiving body 31, where the object receiving body 31 is configured to carry the 3D printed object 8 with residual printing materials 6; and the driving mechanism 41, configured to allow the object receiving mechanism 3 to rotate from the first state to the second state such that the residual printing materials 6 drip from the 3D printed object 8, wherein the 3D printed object 8 has at least two different tilt angles. By using the above method, by adjusting a dripping angle to cause an entire dripping process to be not fixed to a single dripping position, the residual printing materials 6 on the 3D printed object 8 can be better separated, and the efficiency of separating residual resins is improved. Furthermore, the apparatus provided by the present disclosure, a better resin separation effect can be achieved, solvent consumption and cleaning time during post cleaning are reduced, and the separated resins may also be recycled. By using the present solution, in certain scenarios, more than 70% of resin printing materials can be saved compared to a non-recycling case.

It is to be noted that, the post-processing apparatus 300 may be used independently. In this case, the object receiving mechanism 3 further comprises an object receiving container 35, the driving mechanism 41 is able to rotate the object receiving body to move the 3D printed object 8 out from the object receiving body 31 and move the 3D printed object into the object receiving container 35 through an opening of the object receiving container 35. The post-processing apparatus 300 may also be used before the pick-up apparatus 200, that is, post-processing the 3D printed object before picking up and storage, and in this case, the driving mechanism 41 can rotate the object receiving body 31 to move the 3D printed object 8 out from the opening of the object receiving body 31 and move the 3D printed object 8 into the storage member 21 through the opening of the storage member 21.

As shown in Fig. 66 to Fig. 67, an embodiment of the present disclosure provides a post-processing apparatus 300. The post-processing apparatus 300 comprises an object receiving mechanism 3 and a movable mechanism 4, and the object receiving mechanism 3 is configured to carry a 3D printed object 8 with residual printing materials 6. The movable mechanism 4 is configured to generate a change in a dripping position of the 3D printed object 8 to cause the residual printing materials 6 to drip off the 3D printed object 8, and the 3D printed object 8 has at least two different tilt angles during the changing of the dripping position; or, the movable mechanism 4 is configured to arrange the 3D printed object 8 in a first dripping position at a first time period to separate the residual printing materials 6 adhering to the 3D printed object 8, and the tilt angle of the 3D printed object 8 in the first dripping position is determined based on a preset angle value and/or a shape feature of the 3D printed object 8.

By using the post-processing apparatus 300 provided in this embodiment, the movable mechanism 4 is used to generate a change in the dripping position of the 3D printed object 8, so as to cause the residual printing materials 6 to drip off the 3D printed object 8. Or, the movable mechanism 4 is used to arranged the 3D printed object 8 in the first dripping position at the first time period, so as to separate the residual printing materials 6 adhering to the 3D printed object 8. By adjusting a dripping angle to cause an entire dripping process to be not fixed to a single dripping position, the residual printing materials 6 on the 3D printed object 8 can be better separated, and since the tilt angle of the 3D printed object 8 in the first dripping position is determined based on a preset angle value and/or a shape feature of the 3D printed object 8, the residual printing materials 6 on the 3D printed object 8 can be better separated, and the efficiency of separating residual resins is improved. Furthermore, by means of the apparatus provided in the present disclosure, a better resin separation effect can be achieved, solvent consumption and cleaning time during post cleaning are reduced, and the separated resins may also be recycled.

Specifically, the residual printing materials 6 on the 3D printed object 8 after dripping are reduced, such that post-processes (e.g., a cleaning step) may be easier, solvent consumption for post-cleaning may be saved, and the connection of solvent-free cleaning (centrifugation, vacuum, etc.) may also be realized definitely. Furthermore, in certain scenarios, most of the resin has been removed from the 3D printed object 8 after dripping, and secondary curing may also be directly performed on the 3D printed object 8, thereby reducing the post-processing process.

In the related art, the industry mostly uses the solution of self-weighted dripping, after printing is completed, the 3D printed object 8 is allowed to be placed on the platform for a period of time, and then the 3D printed object 8 is taken, or by placing the platform with the 3D printed object 8 in a tilting manner, the resin flows back to the material tray. However, the entire process is completed on the printer, which is not only low in efficiency and less in amount of the recycled resin, but also, due to the occupation of the printer and the platform, low in device utilization, thus affecting the overall production rhythm. The post-processing apparatus 300 provided in this embodiment can accelerate and increase the recycling of the resin while not occupying the 3D printing device. It is to be noted that, the post-processing apparatus 300 provided in this embodiment can automatically adjust multi-angle dripping, and the apparatus is available with or without the forming platform.

The movable mechanism 4 may use a toggle rod structure to directly toggle the 3D printed object 8 to change the angle of the 3D printed object 8, so as to drip the 3D printed object 8 at least more than two different angles, and this method does not need to drive the object receiving mechanism 3 to rotate. Or, the dripping of the resin is accelerated by partial external force, such as wind blowing, slight centrifugal vibration, shaking, rotational acceleration centrifugation, and yawing, with the goal of causing the dripping of the resin to be fuller, and the dripping of the resin is accelerated by only a slight movement, such that the structure is relatively simple, and automation may be realized. Or, the viscosity of the resin is reduced by means of heating, which makes resin dripping easier, and the heating mode comprises far-infrared light, a heated gas, and the like. A resin recycling structure may also be added: a sieve, a filter screen, etc., and the recycled resin may be selected to be mixed with fresh resin according to a certain ratio and used again, or used directly.

Specifically, the size of the angle of the object receiving mechanism 3 is adjusted according to a preset value each time, and angle matching may also be adjusted in conjunction with the shape of the 3D printed object 8. After the angle is adjusted each time, timing is started, and a next angle is switched after a set time is reached, causing the time for dripping at each angle to be constant. The set time may be 2, 3, 5 minutes, etc. Auxiliary heating may be performed before or after angle adjustment. By disposing a temperature sensor 54, the turn on or off of a heating source 52 is adjusted in time. Before or after angle adjustment, a blowing mechanism (an air knife, air gun, etc.) may be turned on to blow air on the 3D printed object 8. A time may also be set for blowing.

In this embodiment, the movable mechanism 4 is a driving mechanism 41, the driving mechanism 41 is configured to allow the object receiving mechanism 3 to rotate from a first state to a second state such that the residual printing materials 6 drip from the 3D printed object 8, where the 3D printed object 8 has at least two different tilt angles. When the object receiving mechanism 3 is rotated from the first state to the second state, the residual printing materials 6 can drip off the 3D printed object 8.

It is to be noted that, the rotation of the object receiving mechanism 3 from the first state to the second state comprises continuous switching, interval switching, and the like. The dripping positions or tilt angles of the 3D printed object 8 corresponding to the first state and the second state are different. In other words, during the rotation of the object receiving mechanism 3 from the first state to the second state, the dripping position of the 3D printed object 8 changes, and the 3D printed object 8 has at least two different tilt angles during the changing of the dripping position, such that the residual printing materials 6 drip off the 3D printed object 8. Exemplarily, the 3D printed object 8 is maintained in at least one dripping position for a preset time; or the 3D printed object 8 is switched continuously between a plurality of dripping positions; or the 3D printed object 8 is maintained in at least one dripping position for the preset time and switched continuously between the plurality of dripping positions.

In an implementation, the driving mechanism 41 may also be configured to maintain the object receiving mechanism 3 in the first state for a first time period, so as to separate the residual printing materials 6 adhering to the 3D printed object 8. It is to be noted that, that the driving mechanism 41 is configured to maintain the object receiving mechanism 3 in the first state for the first time period means that the driving mechanism 41 is configured to maintain the object receiving mechanism 3 immobile at a dripping position for a period of time.

It can be appreciated that, in an implementation, the first state corresponds to the first dripping position, that is, when the object receiving mechanism 3 is in the first state, the 3D printed object 8 is disposed in the first dripping position, so as to separate the residual printing materials 6 adhering to the 3D printed object 8, and the tilt angle of the 3D printed object 8 in the first dripping position is determined based on the preset angle value and/or the shape feature of the 3D printed object 8.

As shown in Fig. 66 and Fig. 67, an embodiment of the present disclosure provides a post-processing apparatus 300. The post-processing apparatus 300 comprises the object receiving mechanism 3 and the driving mechanism 41, the object receiving mechanism 3 is configured to carry the 3D printed object 8 with residual printing materials 6, and the driving mechanism 41 is configured to allow the object receiving mechanism 3 to rotate from the first state to the second state. When the object receiving mechanism 3 rotates from the first state to the second state, the residual printing materials 6 can drip off the 3D printed object 8, so as to cause an entire dripping process to be not fixed to a single dripping position, the residual printing materials 6 on the 3D printed object 8 can be better separated, and the efficiency of separating residual resins is improved.

As shown in Fig. 66 and Fig. 67, the object receiving mechanism 3 comprises an object receiving body 31, the object receiving body 31 has an opening 310, a liquid outlet 311, and an accommodating cavity 312 for accommodating the 3D printed object 8, and the opening 310 and the liquid outlet 311 are both in communication with the accommodating cavity 312. The 3D printed object 8 can enter the accommodating cavity 312 through the opening 310, and the residual printing materials 6 on the 3D printed object 8 can drip through the liquid outlet 311.

In an embodiment, the 3D printing device can automatically transfer the printed 3D printed object 8 into the object receiving body 31. Specifically, the 3D printing device further comprises a separation apparatus and an object transferring assembly, the separation apparatus is configured to separate the 3D printed object 8 from the forming surface, and the object transferring assembly is configured to transfer the 3D printed object 8 separated from the forming surface to the object receiving body 31. For ease of understanding, the following separation apparatus is described as an example as a shoveling mechanism, and in other embodiments, the separation apparatus may also be used as an extrusion mechanism, an ejection mechanism, or a laser cutting mechanism., etc., and is not limited thereto. The operating principles of the separation apparatus and the object transferring assembly have been described in the above embodiments and are not described herein again.

As shown in Fig. 66, the object receiving body 31 comprises a side portion 313 and a bottom portion 314, an end of the side portion 313 is connected to the bottom portion 314, the opening 310 of the object receiving body 31 is provided on a side of the object receiving body 31 opposite to the bottom portion 314, and the liquid outlet 311 is provided at the side portion 313 and/or the bottom portion 314. The 3D printed object 8 may enter through the opening 310 on one side of the object receiving body 31, and the residual printing materials 6 on the 3D printed object 8 may drip through the liquid outlet 311 at the side portion 313 and/or the bottom portion 314.

The driving mechanism 41 further comprises a first transmission mechanism 411, and the first transmission mechanism 411 is connected to the object receiving body 31 in a driving manner, so as to drive the object receiving body 31 to rotate around a transverse axis. During rotation of the object receiving body 31, or after the object receiving body 31 changes position through rotation, the residual printing materials 6 on the 3D printed object 8 can be separated.

In an embodiment, as shown in Fig. 66, the first transmission mechanism 411 comprises a motor, a synchronous belt, and a rotary shaft; the motor is disposed on a side of the object receiving body 31; an output end of the motor is connected to an end of the synchronous belt, and the other end of the synchronous belt is connected to the rotary shaft; and the rotary shaft is disposed on the object receiving body 31. The motor rotates to drive the synchronous belt to rotate, and the synchronous belt can drive the rotary shaft to rotate, such that the object receiving body 31 is driven to rotate by using the rotary shaft, and the object receiving body 31 is driven to rotate around the transverse axis.

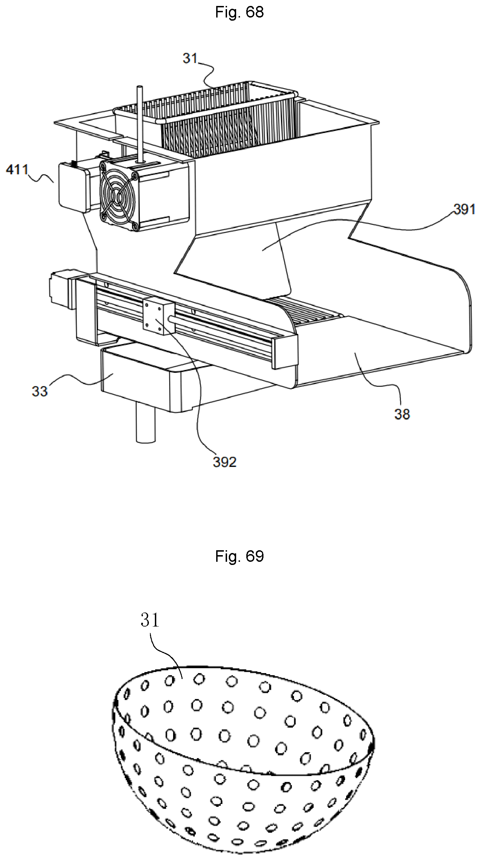

In an embodiment, as shown in Fig. 68, the first transmission mechanism 411 comprises the motor and the rotary shaft; the motor is disposed on a side of the object receiving body 31; the output end of the motor is connected to the rotary shaft; and the rotary shaft is disposed on the object receiving body 31. The motor directly drives the rotary shaft to rotate, such that the object receiving body 31 is driven to rotate by using the rotary shaft, and the object receiving body 31 is driven to rotate around the transverse axis. The use of direct driving of the motor can simplify a driving structure.

In other embodiments, the motor may be replaced with a rotating cylinder, or the first transmission mechanism 411 uses a combination of a screw and the motor, or an air cylinder, a synchronous wheel, a synchronous belt, a sprocket chain, a gear rack 342, a worm gear, etc., which can rotate the object receiving body 31, may also be used.

In an embodiment, a cross-sectional area of the object receiving body 31 gradually decreases in a direction from top to bottom. The residual printing materials 6 on the 3D printed object 8 may flow and drip along an inclined inner wall of the object receiving body 31, facilitating the dripping of the residual printing materials 6 through the liquid outlet 311.

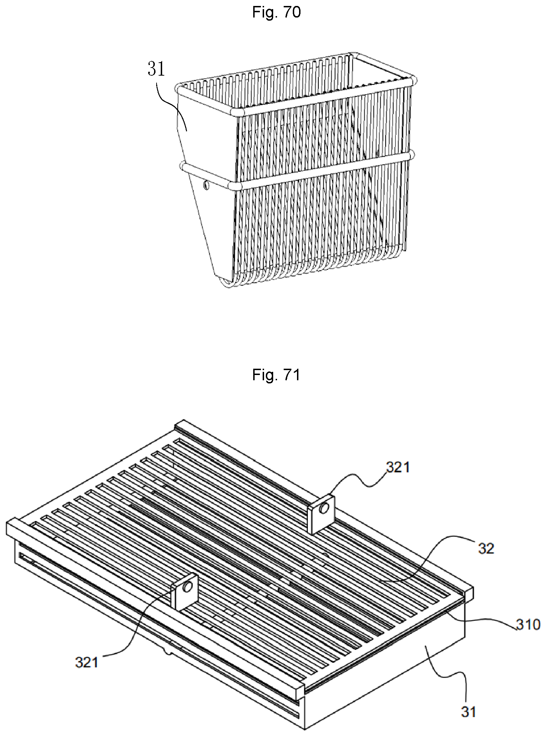

It is to be noted that, as shown in Fig. 69 and Fig. 70, the structure of the object receiving body 31 comprises one of a square, spherical, hemispherical, V-shaped, and funnel-shaped structure, and the liquid outlet 311 comprises one or more of a circular hole, a square hole, a triangular hole, and a strip-shaped opening 310. The structure type of the object receiving body 31 and the type of the liquid outlet 311 may be combined arbitrarily, as long as the 3D printed object 8 can be supported and the residual printing materials 6 can drip.

In an embodiment, the object receiving body 31 comprises an oleophobic layer or a hydrophobic layer. By adjusting material polarity, the polarity of a test printing consumable is repulsive to that of the object receiving body 31, for example, if the resin is oily, an oleophobic material may be provided on a surface of the object receiving body 31, that is, the oleophobic layer. If the resin is water-based, a hydrophobic material may be provided on the surface of the object receiving body 31, that is, the hydrophobic layer. Or, the object receiving body 31 is made directly from the oleophobic or hydrophobic material.

In an embodiment, the object receiving mechanism 3 further comprises a first liquid receiving container 33, and the first liquid receiving container 33 is configured to receive the printing material from the object receiving body 31. The residual printing materials 6 may enter the first liquid receiving container 33 after dripping through the liquid outlet 311.

In an embodiment, as shown in Fig. 66 and Fig. 67, the object receiving mechanism 3 further comprises an object receiving container 35 and a second transmission mechanism 34. The object receiving container 35 is located under the first liquid receiving container 33, and the first transmission mechanism 411 can rotate the object receiving body 31 to move the 3D printed object 8 out of the opening 310 of the object receiving body 31 and move the 3D printed object 8 into the object receiving container 35 through the opening 310 of the object receiving container 35, so as to use the object receiving container 35 to receive the 3D printed object 8 in the object receiving body 31, thereby completing a fully-automated process of picking-up-dripping-recycling. The second transmission mechanism 34 can drive the first liquid receiving container 33 to move relative to the object receiving container 35 and move the 3D printed object 8 into the object receiving container 35 through the opening 310 of the object receiving container 35, thereby preventing the 3D printed object 8 from being blocked by the first liquid receiving container 33 during the entering of the object receiving container 35.

It is to be noted that, the first transmission mechanism 411 and the second transmission mechanism 34 may be driven independently of each other (e.g., two motors drive the object receiving body 31 and the first liquid receiving container 33, respectively), or may also be synchronously driven through structural linkage.

As shown in Fig. 66, synchronous driving through linkage may be implemented by the following structure: the second transmission mechanism 34 comprises a fan-shaped gear 341 and a rack 342, which is fixed on the same shaft with the synchronous wheel through the fan-shaped gear 341, and the synchronous movement of the two transmission mechanisms is realized uniformly through one drive motor.

In an embodiment, the object receiving mechanism 3 further comprises a material recycling container 7, and the material recycling container 7 is configured to receive the printing material from the object receiving body 31.

In an embodiment, referring to Fig. 68, the object receiving mechanism 3 further comprises the object receiving container 35, a transfer receiving container 38, a toggle mechanism 391, and a third transmission mechanism 392. The object receiving container 35 is located on the side of the object receiving body 31, and the first transmission mechanism 411 can rotate the object receiving body 31 to move the 3D printed object 8 out of the opening 310 of the object receiving body 31 and move the 3D printed object 8 into the transfer receiving container 38. The toggle mechanism 391 is disposed in the transfer receiving container 38, and the third transmission mechanism 392 can drive the toggle mechanism 391 to move the 3D printed object 8 out of the transfer receiving container 38 and move the 3D printed object 8 into the object receiving container 35 through the opening 310 of the object receiving container 35, thereby completing the fully-automated process of picking-up-dripping-recycling. By providing the transfer receiving container 38, the 3D printed object 8 is transferred by using the transfer receiving container 38, which has the advantage of being flexible in transferring.

It is to be noted that, the object receiving container 35 may further be configured with a full material sensor, the full material sensor is configured to detect whether the printed object 8 in the object receiving container 35 is piled up to a predetermined height, or to detect whether the printed object 8 in the object receiving container 35 reaches a predetermined weight, such that whether the printed object 8 needs to be transferred can be determined based on the piling-up height or the total weight of the printed object 8 in the object receiving container 35.

In an embodiment, the object receiving mechanism 3 further comprises: a first liquid receiving container 33 and a second liquid receiving container 36. The first liquid receiving container 33 is configured to receive the printing material from the object receiving body 31, and the second liquid receiving container 36 separately communicates with the first liquid receiving container 33 and the material recycling container 7. Optionally, a liquid receiving track is disposed between the second liquid receiving container 36 and a 3D printing device.

As shown in Fig. 67, the object receiving mechanism 3 further comprises the second liquid receiving container 36, and the second liquid receiving container 36 is configured to communicate with the material recycling container 7. The opening 310 of the second liquid receiving container 36 communicates with the first liquid receiving container 33, and the residual printing materials 6 from the 3D printed object 8 received by the first liquid receiving container 33 may enter the second liquid receiving container 36, thereby realizing the recycling of the printing material. The liquid receiving track 37 is disposed between the second liquid receiving container 36 and the 3D printing device. The liquid receiving track 37 is configured to guide the resin dripping during shoveling and receiving into the second liquid receiving container 36. The recycled resin may be filtered and reused, or mixed proportionally with fresh resin and used.

Specifically, there may be various ways to recycle the resin. Since the resin recycled from resin drying is close to a reaction region, and its material performance is slightly different from that of the fresh resin, and during secondary utilization, the recycled resin may be mixed with the fresh resin and reused according to actual requirements of the 3D printed object 8, and when the method of centralized reuse after collection is used, the resin needs to be mixed in different ratios or reused without being mixed according to the actual requirements. When the resin is dried and directly conveyed back to the printer for recycling, and since there is already fresh resin in the material tray, mixing may not be additionally taken into consideration.

In an embodiment, as shown in Fig. 71-Fig. 73, the separation apparatus is configured to separate the 3D printed object 8 from the forming surface, the object receiving body 31 is configured to be moved between a first position and a second position, the object receiving body 31 is configured to receive, in the first position, the 3D printed object 8 with the residual printing materials 6, and the object receiving body 31 is rotated from the first state to the second state in the second position. It can be appreciated that, when the object receiving body 31 is moved to the first position, the object receiving body 31 is located under the separation apparatus, and the separation apparatus is used to separate the 3D printed object 8 from the forming surface, in this case, the object receiving body 31 may receive the 3D printed object 8 with the residual printing materials 6. Then, the object receiving body 31 is moved to the second position, in this case, the object receiving body 31 is located on one side of the 3D printing device, and the object receiving body 31 can rotate from the first state to the second state, thereby separating the residual printing materials 6 on the 3D printed object 8.

The object receiving body 31 comprises a cover plate 32, and the cover plate 32 is provided at the opening 310 of the object receiving body 31 in an open and close manner. A stopper 321 is provided on the cover plate 32, and a reset spring is disposed between the cover plate 32 and the object receiving body 31. When the object receiving body 31 is moved to the first position, the stopper 321 is in abutment fit with a housing of the 3D printing device, and the cover plate 32 stops moving such that the cover plate 32 opens. When the object receiving body 31 leaves the first position, the cover plate 32 closes under the spring action of the reset spring. In this case, the cover plate 32 may cover the opening 310 to prevent the 3D printed object 8 from falling from the opening 310 of the object receiving body 31.

In an optional embodiment, a magnetic member is disposed on the stopper 321. The magnetic member can be magnetically mated with the 3D printing apparatus, thereby causing the position of the cover plate 32 to be more stable. The opening and closing of the cover plate 32 are realized by using the stopper 321 and the magnetic method, thereby achieving the advantages of being simple in structure and high in reliability. In other embodiments, the cover plate 32 may also be driven to move by using pneumatic clamping jaws or electric clamping jaws, etc.

It is to be noted that, if the cover plate 32 is not added, a rotation angle and dripping angle of the object receiving body 31 need to be controlled during drying, and an angle during drying is limited through position detection to prevent the 3D printed object 8 from falling out during dripping.

In an embodiment, the driving mechanism 41 comprises a sliding assembly 412, and the sliding assembly 412 can drive the object receiving body 31 to move between the first position and the second position. By means of sliding, the smoothness of the object receiving body 31 during movement can be improved.

Specifically, as shown in Fig. 73, the sliding assembly 412 comprises a first motor, a second motor, a sliding table 4121, and a connecting rod 4122; the first motor is configured to drive the sliding table 4121 to drive the object receiving body 31 to move between the first position and the second position, thereby realizing the position switching of the object receiving body 31. The connecting rod 4122 is disposed on the sliding table 4121, the object receiving body 31 is rotatably disposed on the connecting rod 4122, and the second motor is configured to drive the object receiving body 31 to rotate relative to the connecting rod 4122, so as to rotate the object receiving body 31 from the first state to the second state in the second position, thereby causing the residual printing materials 6 to drip off the 3D printed object 8. A specific operation process of rotating from the first state to the second state is described in the above embodiments and is not be described herein again.

By using the above implementations, by adjusting a dripping angle to cause an entire dripping process to be not fixed to a single dripping position, the residual printing materials 6 on the 3D printed object 8 can be better separated, and the efficiency of separating residual resins is improved. Furthermore, by means of the apparatus provided in the present disclosure, a better resin separation effect can be achieved, solvent consumption and cleaning time during later cleaning are reduced, and the separated resins may also be recycled.

It is to be noted that, a correspondence relationship between the post-processing apparatus 300 and the printer may be provided separately or in a supporting manner. Specifically, the configuration of the post-processing apparatus 300 and the printer may be varied, and integrated production is realized by cooperating with the printer. A single printer corresponds to a single set of post-processing apparatus 300. In addition to being automatically poured into the post-processing apparatus 300 after printing, after the 3D printed objects 8 of the plurality of printers are collected, the 3D printed objects 8 may also be put into the material-receiving main bodies 31 of one or more sets of post-processing apparatuses 300 manually or by the device, or the 3D printed objects 8 of the plurality of printers may also be put into the material-receiving main bodies 31 of one or more sets of post-processing apparatuses 300.

In this embodiment, the object receiving mechanism further comprises a pipeline, configured to convey the printing material to the material tray, one end of the pipeline communicates with the material recycling container 7 of the post-processing apparatus 300, and the other end of the pipeline communicates with the material tray, such that the printing material is recycled and saved, thereby reducing costs.

An embodiment of the present disclosure further provides a method for three-dimensional printing. The method comprises: an object receiving mechanism is controlled to carry a 3D printed object with residual printing materials; and the object receiving mechanism is rotated from a first state to a second state such that the residual printing materials drip from the 3D printed object, where the 3D printed object has at least two different tilt angles.

Optionally, the method further comprises: the object receiving mechanism in the first state is maintained for a first time period.

For ease of better understanding of the present disclosure, the inventive principles of the present disclosure are further described below.

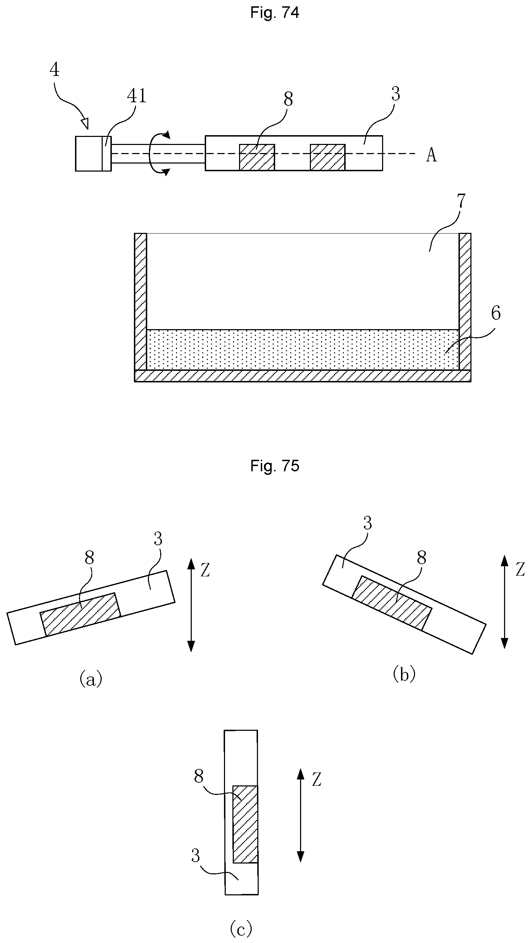

As shown in Fig. 74 and Fig. 75, in the present disclosure, the residual printing materials 6 drip off the 3D printed object 8 primarily by the gravity or a combined force of gravity and other forces (e.g., the force of wind blowing, the force of vibration, etc.), and the gravity or the combined force of the gravity and other forces drives the residual printing materials 6 to separate from the surface of the 3D printed object 8.

It is to be noted that, the 3D printed object 8 comprises a solid or a semi-solid polymer, and the residual printing materials 6 include uncured polymer resin. After completing 3D printing, due to the performance of the printing material itself, for example, the resin material has certain viscosity, such that the resin material may adhere to the surface of the 3D printed object 8, causing the surface of the 3D printed object 8 to be covered with unused polymer resin that is brought from a printing region; or, due to the structure of the 3D printed object 8 itself, which is in a fixed position during formation, there are more liquid accumulation regions on the 3D printed object 8, such as an inverted cup structure, a C-shaped dental mold, a hollow dental mold, etc., and the uncured resin materials are easily present in these liquid accumulation regions. The presence of these resins may cause significant material losses and increase subsequent processing difficulty, such that these residual resins need to be separated from the 3D printed object 8.

In an embodiment of the present disclosure, the dripping position of the 3D printed object 8 changes, and the tilt angle of the 3D printed object 8 can also change, so as to cause the residual printing materials 6 to drip off the 3D printed object 8. By adjusting a dripping angle to cause an entire liquid dropping process to be not fixed to a single dripping position, the residual printing materials on the 3D printed object 8 can be better separated, and the efficiency of separating residual resins is improved. Furthermore, by means of the apparatus provided in the present disclosure, a better resin separation effect can be achieved, solvent consumption and cleaning time during later cleaning are reduced, and the separated resins may also be recycled. In some application scenarios, the 3D printed object 8 may be cured directly after dripping, and the present disclosure is not limited thereto.

As shown in Fig. 75(a), Fig. 75(b) and Fig. 75(c), the 3D printed object 8 is disposed in the object receiving mechanism 3, and the position of the 3D printed object 8 varies with the object receiving mechanism 3. Three different dripping positions of the object receiving mechanism 3 and the 3D printed object 8 are shown in the figure, recorded as a dripping position a, a dripping position b, and a dripping position c. It can be appreciated that, the object receiving mechanism 3 and the 3D printed object 8 have different tilt angles in different dripping positions. The tilt angle represents an included angle of the 3D printed object 8 with respect to the vertical direction (the Z direction in the figure), and a value range of the tilt angle is -180°-+180°. Exemplarily, the tilt angle is determined on the basis of a bottom edge of the 3D printed object 8 in contact with the object receiving mechanism 3. Exemplarily, the dripping position may be customized based on user requirements, for example, the dripping position corresponds to the tilt angle on a one-to-one basis, and the tilt angle changes once when the dripping position changes each time; or the dripping position and the tilt angle are set separately, and when the dripping position changes each time, the tilt angle changes for a plurality of times. In specific applications, by changing the tilt angle for a plurality of times, the dripping position of the 3D printed object 8 changes, such that the residual printing materials on different surfaces of the 3D printed object 8 and liquid accumulation regions are separated.

Further, the movable mechanism 4 is further configured to perform the following: the 3D printed object 8 is maintained in at least one dripping position for a preset time; or the 3D printed object 8 is switched continuously between a plurality of dripping positions; or the 3D printed object 8 is maintained in at least one dripping position for the preset time and switched continuously between the plurality of dripping positions. The preset time t may be 10 s, 30 s, 1 min, 3 min, 5 min, etc., and the present disclosure is not limited thereto.

It can be appreciated that, the movable mechanism 4 in the present disclosure is configured to control the dripping position of the 3D printed object 8, and after the dripping position changes, the 3D printed object 8 can also be maintained in any dripping position, that is, the whole dripping process is not singularly fixed at a certain dripping position. Exemplarily, the preset time for different dripping positions may be set to be the same or different, for example, after the 3D printed object 8 is maintained in the dripping position a for 1 min, the 3D printed object 8 changes to the dripping position b at an arbitrary speed, and then the 3D printed object 8 is maintained in the dripping position c for 1 min. The 3D printed object 8 may also be continuously switched among the dripping positions a, b, and c, for example, the 3D printed object 8 is continuously switched according to a-b-c-a or a-c-b-c-a. The 3D printed object 8 may also be continuously switched between the dripping positions a and c and maintained in the dripping position b for a time t, for example, the 3D printed object 8 is continuously switched between the dripping positions a and c at an arbitrary speed according to a-c-c-a within the time period of t1-t2, and then the 3D printed object 8 is changed to the dripping position c for 3 min at a t2 moment, and then maintained for the time t.

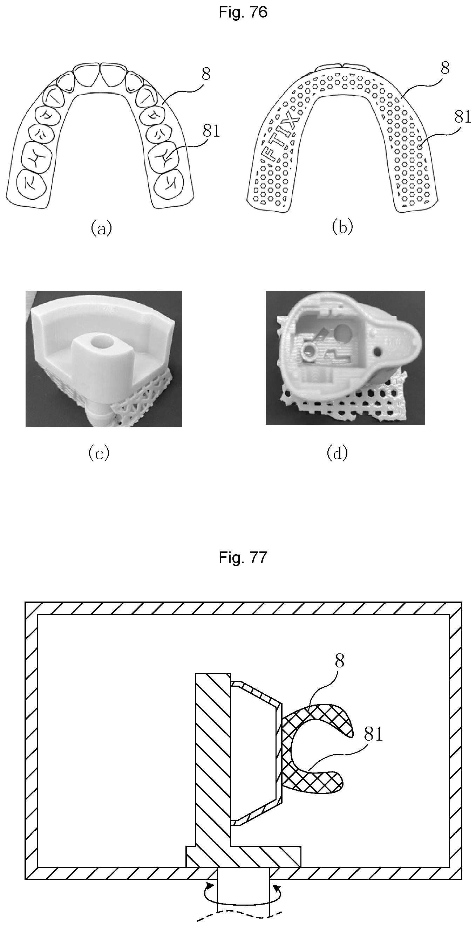

Referring to Fig. 76, in an embodiment, the movable mechanism 4 is further configured to maintain the 3D printed object 8 in the downward dripping position of the opening portion of the liquid accumulation region 81 for a preset time; and the liquid accumulation region 81 is formed by the structure of the 3D printed object 8 itself. In the specific applications, if the 3D printed object 8 has a liquid accumulation region 81 caused by a special structure, such as the inverted cup structure, the dripping position that is downward from a cup opening portion of the inverted cup structure may be recorded as the dripping position b, and then the time t is stayed in the dripping position b, and dripping is performed by means of continuous switching in other positions, such that the efficiency of separating the residual printing materials can be further improved.

Fig. 77 shows a method for cleaning residual resins through centrifugation in the related art. A rotor rotates to generate a centrifugal force that drives the residual printing materials away from the center of rotation and away from a surface of an object, and the tilt angle of the 3D printed object 8 is unchanged during centrifugation. In combination with Fig. 76 and Fig. 77, it may be learned that, for some 3D printed objects 8 with special structures, such as the inverted cup structure, the C-shaped dental mold, the hollow dental mold, etc., there are some liquid accumulation regions 81. When the resin is removed by means of centrifugation, if the opening in the liquid accumulation region 81 is small or the opening is not provided facing downward, the resin in the liquid accumulation region 81 is not easily removed. Thus, centrifugation cannot well clean the above liquid accumulation region 81, and it is easy to cause the resin material in the liquid accumulation region to not be removed, and the effect of centrifugal cleaning is poor. Furthermore, the speed and time of centrifugal cleaning are not easy to control, and objects with fragile structures are easily damaged when being subjected to a prolonged centrifugal force. Excess centrifugal force leads to excessive vibration and noise, the device is unstable, and the resin splashes and is not easy to collect. As shown in Fig. 85, a direction of the centrifugal force during centrifugation is along a tangent line, and the resin material flies out along the tangent line when being subjected to the centrifugal force.

By using the apparatus in the present disclosure, by adjusting a dripping angle to cause an entire dripping process to be not fixed to a single dripping position, the residual printing materials drip off the 3D printed object primarily by the gravity or a combined force of gravity and other forces (e.g., the force of wind blowing, the force of vibration, etc.), the residual printing materials on the 3D printed object 8 can be better separated, and the efficiency of separating residual resins is improved without causing damages to the 3D printed object. In the process of dripping the resin material, the resin material may fall vertically, or may also fall in a parabola under the action of a wind force, similar to the process of raining, such that the resin material does not fly out.

In an embodiment, the movable mechanism 4 comprises: a driving mechanism 41; and the object receiving mechanism 3 is connected to the driving mechanism 41 to drive the object receiving mechanism 3 by the driving mechanism 41 and generate a change in the dripping position of the 3D printed object 8.

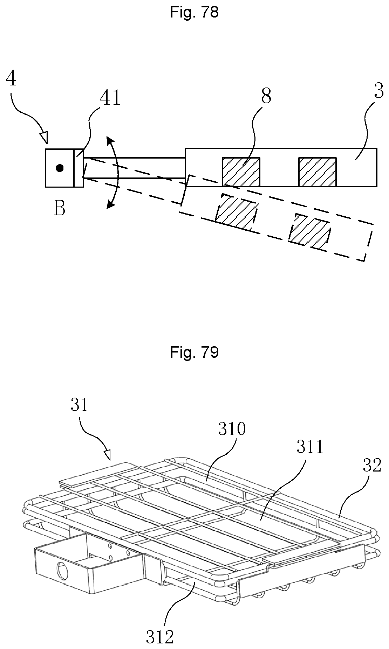

Specifically, the driving mechanism 41 comprises a rotary shaft, such as a rotary shaft of a motor, the rotary shaft of the motor is connected to the object receiving mechanism 3. The 3D printed object 8 is driven by the motor to rotate along an A-axis to realize the change in the dripping position of the 3D printed object 8, as shown in Fig. 74. In some embodiments, the motor drives the 3D printed object 8 to rotate along a point B to change the dripping position of the 3D printed object 8, as shown in Fig. 78. A rotary speed of the rotary shaft of the motor may be set to a slow speed, that is, much less than a rotary speed of a centrifugal device, for example, 50 r/min or less than 50 r/min or less, for example, 5 r/min, 10 r/min, 15 r/min, 20 r/min, 30 r/min, etc. The residual printing materials drip mainly by gravity during rotation, and the centrifugal force is not basically used. Definitely, the rotary speed may also be set to above 50 r/min according to requirements, and the residual printing materials drip by a combined force of the gravity superimposed on a slight centrifugal force, and the rotary speed is not limited in the present disclosure.

It is to be noted that, the rotary shaft of the driving mechanism 41 in this embodiment is configured to be not parallel to the vertical direction (gravitational direction). Optionally, the rotary shaft of the driving mechanism 41 is perpendicular to the vertical direction (gravitational direction), such that the dripping position of the 3D printed object 8 can be changed, that is, the tilt angle with respect to the vertical direction is changed. The residual printing materials in the present disclosure are mainly separated by the gravity, such that the structure is simpler, and separation efficiency is higher.

Referring to Fig. 79, the object receiving mechanism 3 comprises an object receiving body 31, the object receiving body 31 has an opening 310, a liquid outlet 311, and an accommodating cavity 312 for accommodating the 3D printed object, the opening 310 communicates with the accommodating cavity 312, and the liquid outlet 311 communicates with the accommodating cavity 312. One or more 3D printed objects 8 are placed in the accommodating cavity 312, such that the residual printing materials may be separated either individually or in large batches at the same time. Further, the object receiving mechanism 3 further comprises a cover plate 32, the cover plate 32 is arranged opposite to the opening 310, and the cover plate 32 is disposed on the object receiving body 31, so as to open or close the opening 310. The cover plate 32 may be connected to the object receiving body 31 in a magnetic and snapping manner, and the present disclosure is not limited thereto.

It can be appreciated that, when the cover plate 32 is added, the cover plate 32 causes the 3D printed object 8 not to be separated from the object receiving mechanism 3 during rotation, thereby increasing the range of tilt angles of the 3D printed object 8. Exemplarily, the object receiving mechanism 3 comprises a mesh bag structure, a mesh bag may be made of a metal material, the top of the mesh bag has an opening 310 and a cover plate 32, and a plurality of liquid outlets 311 are provided in the bottom and side wall of the mesh bag.

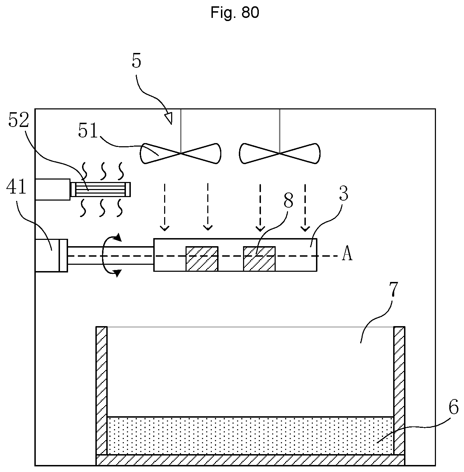

Referring to Fig. 80, in some embodiments, the post-processing apparatus further comprises a temperature regulation mechanism 5; and the temperature regulation mechanism 5 is configured to generate dynamic temperature distribution and/or regulate, based on a pre-configured temperature control strategy, a temperature of the region in which the 3D printed object 8 is located, so as to reduce the viscosity of the residual printing materials 6. Specifically, the temperature regulation mechanism 5 regulates the region temperature by one or more of the following: a quartz heating pipe, a PTC heating source, an infrared heating source, a heated fluid, a heated gas, a heating plate, or a heat exchanger.

Specifically, the dynamic temperature distribution comprises controlling the temperature of the region in which the 3D printed object 8 is located to be maintained at a first temperature at least during a first time period, and controlling the temperature of the region in which the 3D printed object 8 is located to be maintained at a second temperature at least during a second time period, where the first temperature is greater than or less than the second temperature.

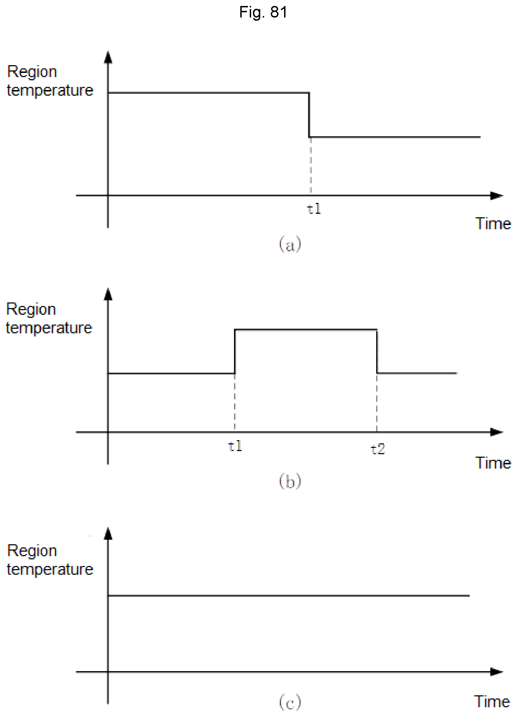

It is to be noted that, the 3D printed object 8 in this embodiment is a solid or semi-solid polymer that has not undergone a curing process, and is prone to deformation if being exposed to a high temperature environment for a long period of time. Through dynamic temperature control, the viscosity of the residual printing material can be reduced, and deformation of the 3D printed object 8 caused by high temperatures can be avoided at the same time. Exemplarily, as shown in Fig. 81(a), the region temperature is controlled to be first high and then low, and the region temperature is increased within the time period of 0-t1, so as to reduce the viscosity of the resin material and improve the separation efficiency of the resin material, and then the temperature is decreased after the time t1, so as to avoid the deformation of the 3D printed object 8 caused by excessive temperature due to prolonged heating; or, as shown in Fig. 81(b), if there are more resin adhering to the surface when the 3D printed object 8 leaves the printing region, since more resin flows faster under the action of a force, a low temperature may be used within the time period of 0-t1, then the region temperature is increased within a time period of t1-t2, so as to reduce the viscosity of the resin material, and then the temperature is decreased after the time t2, so as to avoid prolonged heating. The region temperatures in Figs. 81(a) and 81(b) indicate temperature setting values, and since the time of temperature changing depends on the power of a heater or a cooler, the time of the heating or cooling process is not shown in the figures. The figures are examples of set temperatures, and the heating process may be slow in a specific application.

Specifically, the temperature control strategy comprises one or more of the following: the temperature of the region in which the 3D printed object 8 is located is controlled to be maintained at a preset temperature value interval; or a temperature control parameter is determined based on a material type and a pre-configured mapping relationship between the material type and the temperature control parameter.

Exemplarily, as shown in Fig. 81(c), for certain 3D printed objects 8 that are not easy to deform or do not require high precision, the temperature of the region in which the 3D printed objects 8 are located may be controlled to be maintained in the preset temperature value interval throughout the dripping, so as to improve the separation efficiency of the residual printing materials. In some embodiments, a database may also be established based on the mapping relationship between the type of printing material and the temperature control parameter. Different temperature control parameters are configured for different printing materials. The temperature control parameters comprises one or more of a heating start time, a heating end time, a heating duration, a temperature setting value, and a heat dissipation or cooling time. For example, a full temperature control shown in Fig. 81(c) is used for materials with high viscosity.

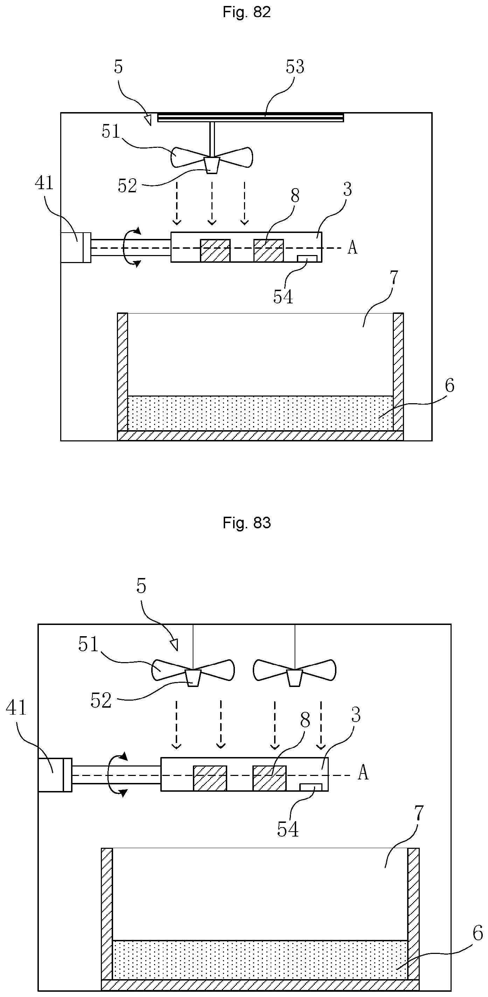

In an embodiment, the post-processing apparatus further comprises a temperature sensor 54. The temperature sensor 54 is configured to detect a region temperature or an ambient temperature. An operating state of the temperature regulation mechanism 5 is controlled based on detection data of the temperature sensor 54. The temperature sensor 54 may be mounted on the object receiving mechanism 3 or near the heat source 52, as shown in Fig. 82. By detecting the region temperature through the sensor, feedback adjustment can be performed on the temperature in real time, thereby controlling the region temperature more accurately.

Referring to Fig. 82 and Fig. 83, the temperature regulation mechanism 5 comprises the heat source 52 and an air outlet assembly 51; and the heat source 52 and the air outlet assembly 51 are configured to generate a heated gas to cause the 3D printed object 8 in the heated gas. The air outlet assembly 51 has a plurality of air outlets, and a blowing region formed by the plurality of air outlets covers the 3D printed object 8; or the plurality of air outlets are moved to cause the blowing region to cover the 3D printed object 8. Exemplarily, the air outlet of the air outlet assembly 51 is provided above the 3D printed object 8, and the heat source 52 is provided at the air outlet. The air outlet assembly 51 comprises a fan, a guide rail 53, and a driving member, and the driving member can drive the fan in a direction of the guide rail 53 such that a blowing region of the fan covers all of the 3D printed object 8, as shown in Fig. 82. Or, a plurality of fans or fans with a plurality of air outlets are provided, in this case, the blowing region of the fans can completely cover the 3D printed object 8 without moving the fans, for example, two fans are arranged to cover the 3D printed object 8 in an overlapping manner, as shown in Fig. 83. It can be appreciated that, in the present disclosure, the region temperature is controlled by the heated gas, such that the temperature of the region in which the 3D printed object 8 is located is uniformly distributed, the separation efficiency of the resin is improved, and at the same time, the deformation of the object caused by high temperatures in some regions is avoided. In other embodiments, the air outlet of the air outlet assembly 51 may also be provided on the side of the 3D printed object 8, the heat source 52 may also be disposed on the side of the 3D printed object 8, and the present disclosure is not limited thereto. In other embodiments, the temperature regulation mechanism 5 may also use a quartz heating pipe, a PTC heating source, an infrared heating source, a heated fluid, a heated gas, a heating plate, or a heat exchanger to adjust the region temperature, and the present disclosure is not limited thereto.

In another embodiment, the post-processing apparatus further comprises an air outlet mechanism, and the air outlet mechanism is configured to generate a flowing gas to accelerate the flowing of the residual printing materials 6 by placing the 3D printed object 8 in the flowing gas. For example, a high-pressure air gun or a high-pressure air knife is used to blow compressed air, and the flowing of the resin material is accelerated through the force generated by a high-pressure air stream, thereby improving the separation efficiency.

In another embodiment, the post-processing apparatus further comprises a vibration mechanism, and the vibration mechanism is configured to vibrate the 3D printed object 8, so as to accelerate the flowing of the residual printing materials 6. For example, a vibrator is mounted on the object receiving mechanism 3 to drive the object receiving mechanism 3 and the 3D printed object 8 to vibrate, and the flowing of the resin material is accelerated by the force of the vibration, thereby improving the separation efficiency.

In some embodiments, as shown in Fig. 82 and Fig. 83, the post-processing apparatus further comprises a material recycling container 7, and the material recycling container 7 is configured to collect at least a portion of the residual printing materials 6. When the 3D printed object 8 leaves the printing region, more resin materials are brought, and by arranging the material recycling container 7 to recycle the residual printing materials, the recycled resin material may be used in subsequent 3D printing, thereby avoiding the waste of materials and saving the printing costs.

In another embodiment, the post-processing apparatus for a 3D printed object comprises the object receiving mechanism 3, which is configured to carry the 3D printed object 8 with the residual printing materials 6. The movable mechanism 4 is configured to generate a change in a dripping position of the 3D printed object 8 to cause the residual printing materials 6 to drip off the 3D printed object 8, and the 3D printed object 8 has at least two different tilt angles during the changing of the dripping position; or, the movable mechanism 4 is configured to arrange the 3D printed object 8 in a first dripping position at a first time period to separate the residual printing materials 6 adhering to the 3D printed object 8, and the tilt angle of the 3D printed object 8 in the first dripping position is determined based on a preset angle value and/or a shape feature of the 3D printed object 8.

In this embodiment, after the object receiving mechanism 3 carries the 3D printed object 8, the 3D printed object 8 is moved by the movable mechanism 4 to a first dripping position, such as the dripping position shown in Fig. 75(a). It is to be noted that, for different 3D printed objects 8, the first dripping position may be different, and the movable mechanism 4 may cause different 3D printed objects 8 in different dripping positions. Exemplarily, for a certain type of 3D printed objects 8, the preset angle value in the first dripping position is set based on an empirical value, such as 45°, that is, the tilt angle of the 3D printed object 8 is set at 45° for dripping.

Optionally, the process of determining the tilt angle in the first dripping position comprises: an optimal dripping angle is determined based on a preset angle matching model and the shape feature of the 3D printed object 8; and the tilt angle of the 3D printed object 8 in the first dripping position is obtained based on the optimal dripping angle. Exemplarily, a machine learning model is established, shape data of the 3D printed object 8 and corresponding historical angle data are input, and the optimal dripping angle corresponding to the 3D printed object 8 is automatically identified through machine learning. The optimal dripping angle indicates an angle that enables the most efficient dripping of the resin material or the largest amount of resin material dripping in the 3D printed object 8, for example, an angle when a cup opening in the inverted cup structure faces downward.

Optionally, the first dripping position is a dripping position that is downward from the opening portion of the liquid accumulation region; and the liquid accumulation region is formed by the structure of the 3D printed object itself. In the specific applications, if the 3D printed object 8 has a liquid accumulation region 81 caused by a special structure, such as the inverted cup structure, the dripping position that is downward from the cup opening portion of the inverted cup structure may be recorded as the first dripping position, and dripping is performed by means of staying in the first dripping position for the time t, such that the efficiency of separating the residual printing materials can be further improved.

In this embodiment, the above apparatus may also use the above temperature regulation mechanism 5, material recycling container 7, air outlet mechanism, vibration mechanism, etc. for the separation of the residual printing materials 6, which is implemented on the same principle as described above, and is not described herein again.

The present disclosure further provides a post-processing method for a 3D printed object. The post-processing method comprises a 3D printed object 8 with residual printing materials 6 is carried; and a dripping position of the 3D printed object 8 is changed to separate the residual printing materials 6 from the 3D printed object 8. The 3D printed object 8 has different tilt angles in the different dripping positions.

It is to be noted that, the 3D printed object 8 comprises a solid or a semi-solid polymer, and the residual printing materials 6 include uncured polymer resin. After 3D printing is completed, due to the performance of a printing material itself, for example, a resin material has certain viscosity, such that the resin material may adhere to a surface of a 3D printed object 8, causing the surface of the 3D printed object 8 to be covered with unused liquid resin that is brought from a printing region. Or, due to the structure of the 3D printed object 8 itself, such as an inverted cup structure, a C-shaped dental mold, a hollow dental mold, etc., uncured resin materials are likely to be present inside these structures. The presence of these resins may cause significant material losses and increase subsequent processing difficulty, such that these residual resins need to be separated from the 3D printed object 8.

In the embodiments of the present disclosure, changes in the tilt angle of the 3D printed object 8 can change the dripping position of the 3D printed object 8. Through multi-angle dripping, the residual printing materials on the 3D printed object 8 can be separated, and the efficiency of separating residual resins is improved. Furthermore, the method provided in the present disclosure uses non-single angles for dripping, and is suitable for special structures such as the inverted cup structure, a depression structure, etc., such that a better resin separation effect can be achieved, solvent consumption and cleaning time during later cleaning are reduced, and the separated resins may also be recycled. In some application scenarios, the 3D printed object 8 may be cured directly after dripping, and the present disclosure is not limited thereto.

In some embodiments, as shown in Fig. 75(a), Fig. 75(b) and Fig. 75(c), the 3D printed object 8 is disposed in the object receiving mechanism 3, and the position of the 3D printed object 8 varies with the object receiving mechanism 3. Three different dripping positions of the object receiving mechanism 3 and the 3D printed object 8 are shown in the figure, recorded as a dripping position a, a dripping position b, and a dripping position c. It can be appreciated that, the object receiving mechanism 3 and the 3D printed object 8 have different tilt angles in different dripping positions. The tilt angle represents an included angle of the 3D printed object 8 with respect to the vertical direction (the Z direction in the figure), and a value of the tilt angle is -180°-+180°. Exemplarily, the tilt angle is determined on the basis of a bottom edge of the 3D printed object 8 in contact with the object receiving mechanism 3. In specific applications, by changing the tilt angle for a plurality of times, the dripping position of the 3D printed object 8 changes, such that the residual printing materials on different surfaces of the 3D printed object 8 and special structures are separated.

Further, the method further comprises: the 3D printed object 8 is maintained in at least one dripping position for a preset time; or the 3D printed object 8 is switched continuously between a plurality of dripping positions; or the 3D printed object 8 is maintained in at least one dripping position for the preset time and switched continuously between the plurality of dripping positions. The preset time t may be 10 s, 30 s, 1 min, 3 min, 5 min, etc., and the present disclosure is not limited thereto.

It can be appreciated that, in the present disclosure, the dripping position of the 3D printed object 8 is controlled, and after the dripping position changes, the 3D printed object 8 can also be maintained in any dripping position, that is, the whole dripping process is not singularly fixed at a certain dripping position. Exemplarily, the preset time for different dripping positions may be set to be the same or different, after the 3D printed object 8 is maintained in the dripping position a for 1 min, the 3D printed object 8 changes to the dripping position b, and then the 3D printed object 8 is maintained in the dripping position c for 1 min. The 3D printed object 8 may also be continuously switched among the dripping positions a, b, and c, for example, the 3D printed object 8 is continuously switched according to a-b-c-a or a-c-b-c-a. The 3D printed object 8 may also be continuously switched between the dripping positions a and c and maintained in the dripping position b for a time t, for example, the 3D printed object 8 is continuously switched between the dripping positions a and c according to a-c-c-a within the time period of t1-t2, and then the 3D printed object 8 is changed to the dripping position c for 3 min at a t2 moment, and then maintained for the time t.

In the specific applications, if the 3D printed object 8 has a special structure, such as the inverted cup structure and the depression structure, the downward dripping position of a cup opening portion of the inverted cup structure may be recorded as the dripping position b, and then the time t is stayed in the dripping position b, and dripping is performed by means of continuous switching in other positions, such that the efficiency of separating the residual printing materials can be further improved.

In an embodiment, the method further comprises: dynamic temperature distribution is generated and/or a temperature of the region in which the 3D printed object 8 is located is regulated based on a pre-configured temperature control strategy.

The dynamic temperature distribution comprises controlling the temperature of the region in which the 3D printed object 8 is located to be maintained at a first temperature at least during a first time period, and controlling the temperature of the region in which the 3D printed object 8 is located to be maintained at a second temperature at least during a second time period, where the first temperature is greater than or less than the second temperature.

It is to be noted that, the 3D printed object 8 in this embodiment is a solid or semi-solid polymer that has not undergone a curing process, and is prone to deformation if being exposed to a high temperature environment for a long period of time. Through dynamic temperature control, the viscosity of the residual printing material can be reduced, and deformation of the 3D printed object 8 caused by high temperatures can be avoided at the same time. Exemplarily, as shown in Fig. 81(a), the region temperature is controlled to be first high and then low, and the region temperature is increased within the time period of 0-t1, so as to reduce the viscosity of the resin material and improve the separation efficiency of the resin material, and then the temperature is decreased after the time t1, so as to avoid prolonged heating; or, as shown in Fig. 81(b), if there are more resin adhering to the surface when the 3D printed object 8 leaves the printing region, since more resin flows faster under the action of a force, a low temperature may be used within the time period of 0-t1, then the region temperature is increased within a time period of t1-t2, so as to reduce the viscosity of the resin material, and then the temperature is decreased after the time t2, so as to avoid prolonged heating. The region temperatures in Figs. 81(a) and 81(b) indicate temperature setting values, and since the time of temperature changing depends on the power of a heater or a cooler, the time of the heating or cooling process is not shown in the figures. The figures are examples of set temperatures, and the heating process may be slow in a specific application.

The temperature control strategy comprises one or more of the following: the temperature of the region in which the 3D printed object 8 is located is controlled to be maintained at a preset temperature value interval; or a temperature control parameter is determined based on a material type and a pre-configured mapping relationship between the material type and the temperature control parameter.

Exemplarily, as shown in Fig. 81(c), for certain 3D printed objects 8 that are not easy to deform or do not require high precision, the temperature of the region in which the 3D printed objects 8 are located may be controlled to be maintained in the preset temperature value interval throughout the dripping, so as to improve the separation efficiency of the residual printing materials. In some embodiments, a database may also be established based on the mapping relationship between the type of printing material and the temperature control parameter. Different temperature control parameters are configured for different printing materials. The temperature control parameters include one or more of a heating start time, a heating end time, a heating duration, a temperature setting value, and a heat dissipation or cooling time. For example, a full temperature control shown in Fig. 81(c) is used for materials with high viscosity.

The method further comprises: the region temperature is regulated by one or more of the following: a quartz heating pipe, a PTC heating source, an infrared heating source, a heated fluid, a heated gas, a heating plate, or a heat exchanger.

In an embodiment, the method further comprises: temperature detection data is acquired; and an operating state of a temperature regulation mechanism 5 is controlled based on the temperature detection data.

Specifically, the temperature sensor 54 is configured to detect a region temperature or an ambient temperature. An operating state of the temperature regulation mechanism 5 is controlled based on detection data of the temperature sensor 54. The temperature sensor 54 may be mounted on the object receiving mechanism 3 or near the heat source 52, as shown in Fig. 82. By detecting the region temperature through the sensor, feedback adjustment can be performed on the temperature in real time, thereby controlling the region temperature more accurately.

In an embodiment, the method further comprises: a heated gas is applied to cause the 3D printed object 8 to be in the heated gas.

Referring to Fig. 82 and Fig. 83, the temperature regulation mechanism 5 is arranged and comprises a heat source 52 and an air outlet assembly 51; and the heat source 52 and the air outlet assembly 51 are configured to generate a heated gas to cause the 3D printed object 8 in the heated gas. The air outlet assembly 51 has a plurality of air outlets, and a blowing region formed by the plurality of air outlets covers the 3D printed object 8; or the plurality of air outlets are moved to cause the blowing region to cover the 3D printed object 8. Exemplarily, the air outlet of the air outlet assembly 51 is provided above the 3D printed object 8, and the heat source 52 is provided at the air outlet. The air outlet assembly 51 comprises a fan, a guide rail 53, and a driving member, and the driving member can drive the fan in a direction of the guide rail 53 such that a blowing region of the fan covers all of the 3D printed object 8, as shown in Fig. 82. Or, a plurality of fans or fans with a plurality of air outlets are provided, in this case, the blowing region of the fans can completely cover the 3D printed object 8 without moving the fans, for example, two fans are arranged to cover the 3D printed object 8 in an overlapping manner, as shown in Fig. 83. It can be appreciated that, in the present disclosure, the region temperature is controlled by the heated gas, such that the temperature of the region in which the 3D printed object 8 is located is uniformly distributed, the separation efficiency of the resin is improved, and at the same time, the deformation of the object caused by high temperatures in some regions is avoided. In other embodiments, the air outlet of the air outlet assembly 51 may also be provided on the side of the 3D printed object 8, the heat source 52 may also be disposed on the side of the 3D printed object 8, and the present disclosure is not limited thereto.

In an embodiment, the method further comprises: a flowing gas is applied to accelerate the flowing of the residual printing materials 6 by placing the 3D printed object 8 in the flowing gas.

Specifically, an air outlet mechanism is arranged, and the air outlet mechanism is configured to generate a flowing gas to accelerate the flowing of the residual printing materials 6 by placing the 3D printed object 8 in the flowing gas. For example, a high-pressure air gun or a high-pressure air knife is used to blow compressed air, and the flowing of the resin material is accelerated through the force generated by a high-pressure air stream, thereby improving the separation efficiency.

In an embodiment, the method further comprises: the 3D printed object 8 is vibrated, so as to accelerate the flowing of the residual printing materials 6.

Specifically, a vibration mechanism is arranged, and the vibration mechanism is configured to vibrate the 3D printed object 8, so as to accelerate the flowing of the residual printing materials 6. For example, a vibrator is mounted on the object receiving mechanism 3 to drive the object receiving mechanism 3 and the 3D printed object 8 to vibrate, and the flowing of the resin material is accelerated by the force of the vibration, thereby improving the separation efficiency.

In an embodiment, the method further comprises: at least a portion of the residual printing materials 6 is collected.

Further, the method further comprises: the collected residual printing materials 6 are filtered.

Further, the method further comprises: the filtered residual printing materials 6 are reused in subsequent 3D printing; or the filtered residual printing materials 6 are mixed with a new printing material to reuse the mixed printing material in subsequent 3D printing.

In some embodiments, as shown in Fig. 82-Fig. 84, a material recycling container 7 is arranged, and the material recycling container 7 is configured to collect at least a portion of the residual printing materials 6. When the 3D printed object 8 leaves the printing region, more resin materials are brought, and by arranging the material recycling container 7 to recycle the residual printing materials, the recycled resin material may be used in subsequent 3D printing, thereby avoiding the waste of materials and saving the printing costs.

It is to be noted that, all process steps of the post-processing method for a 3D printed object provided by the embodiments of the present disclosure are implemented based on the post-processing apparatus for a 3D printed object of the above embodiments, and the working principles and beneficial effects of the two are in one-to-one correspondence, and thus are not described again.

The present disclosure further provides a post-processing method for a 3D printed object. The method comprises the following operations.

A 3D printed object 8 with residual printing materials 6 is carried.

The 3D printed object 8 is disposed in a first dripping position at a first time period, so as to separate residual printing materials 6 adhering to the 3D printed object 8, and an tilt angle of the 3D printed object 8 in the first dripping position is determined based on a preset angle value and/or a shape feature of the 3D printed object 8.

In an embodiment, the process of determining the tilt angle in the first dripping position comprises: an optimal dripping angle is determined based on a preset angle matching model and the shape feature of the 3D printed object 8; and the tilt angle of the 3D printed object 8 in the first dripping position is obtained based on the optimal dripping angle.

In an embodiment, the first dripping position is a dripping position that is downward from the opening portion of the liquid accumulation region; and the liquid accumulation region is formed by the structure of the 3D printed object itself.

It is to be noted that, all process steps of the post-processing method for a 3D printed object provided by the embodiments of the present disclosure are implemented based on the post-processing apparatus for a 3D printed object of the above embodiments, and the working principles and beneficial effects of the two are in one-to-one correspondence, and thus are not described again.

The present disclosure further provides a 3D printing system, comprising a 3D printing device, and the post-processing apparatus for a 3D printed object as described in any one of the above embodiments; and the post-processing apparatus is disposed independently or integrated with the 3D printing device.

It is to be noted that, the post-processing apparatus may be integrated in the 3D printing device, and after the 3D printing is completed, the 3D printed object 8 is moved to an object receiving mechanism 3 by an automatic shoveling mechanism, and then dripping is performed, such that the automatic shoveling and automatic dripping can be realized, thereby greatly saving labor costs. Definitely, the post-processing apparatus may also be disposed independently, and the present disclosure is not limited thereto.

It may be seen from the above description that, in the above embodiments of the present disclosure, the following technical effects are realized.
(1) In the embodiments of the present disclosure, the dripping position of the 3D printed object 8 changes, and the tilt angle of the 3D printed object 8 can also change. By adjusting a dripping angle to cause an entire dripping process to be not fixed to a single dripping position, the residual printing materials on the 3D printed object can be better separated, and the efficiency of separating residual resins is improved.
(2) In the embodiments of the present disclosure, the method is suitable for special structures such as the inverted cup structure, a depression structure, etc., such that a better resin separation effect can be achieved, solvent consumption and cleaning time during later cleaning are reduced. In some application scenarios, the 3D printed object 8 may be cured directly after dripping, and the present disclosure is not limited thereto.
(3) In the embodiments of the present disclosure, by dynamic temperature control, the viscosity of the residual printing materials can be reduced, the deformation of the 3D printed object 8 caused by excessive temperatures is avoided while the separation efficiency of the residual printing materials 6 is improved, and different printing materials can be adapted as well. In some embodiments, the region temperature is controlled by the heated gas, such that the temperature of the region in which the 3D printed object 8 is located is uniformly distributed, the separation efficiency of the resin is improved, and at the same time, the deformation of the object caused by high temperatures in some regions is avoided.
(4) In the embodiments of the present disclosure, by arranging the material recycling container 7 to recycle the residual printing materials, the recycled resin material may be used in subsequent 3D printing, thereby avoiding the waste of materials and saving the printing costs.

In some embodiments, the 3D printing device further comprises a heat dissipation mechanism for dissipating heat from materials in the material tray, and the heat dissipation mechanism comprises at least one of: a fan, a cooling medium, or a scraper. The fan of the heat dissipation mechanism blows air to the material in the material tray that is heated by exposure. The cooling medium for the heat dissipation mechanism is, for example, a cold water pipe, a metal tube for heat conduction, etc. The scraper of the heat dissipation mechanism may allow the material in the material tray to flow, so as to allow a lower temperature material at a higher position in the material tray to flow to the bottom of the material tray, and a high temperature material previously at the bottom of the material tray is carried to the higher position. The heat dissipation mechanism may operate during a curing phase of the material and/or during a resting phase when the material is not cured.

In some embodiments, the 3D printing device further comprises the heat dissipation mechanism for a material in the material tray, and the heat dissipation mechanism comprises the fan and the scraper. The fan may be disposed above or under the material tray, preferably under the material tray. During 3D printing, a forming platform of the 3D printing device descends in the material tray, and an optical machine projects a light (e.g., UV light) to the bottom of the material tray to cure and form a resin with a preset layer thickness onto the forming platform. The UV curing process of the resin releases heat, raising the temperature of the resin at the bottom of the material tray, and a high temperature shortens the service life of a release film at the bottom of the material tray. Therefore, by using the fan to blow air to the bottom of the material tray, and scraping away the high temperature material at the bottom of the material tray through scraper movement, the lower temperature material at a higher position in the material tray flows to the bottom of the material tray, thereby achieving a better heat dissipation effect.

It is to be noted that, terms used herein are intended to describe specific implementations only and are not intended to limit exemplary embodiments according to the present disclosure. As used herein, unless the context clearly indicates otherwise, a singular form is also intended to include a plural form. In addition, it is further understood that when the terms "including" and/or "comprising" are used in this specification, the terms indicate the presence of features, steps, operations, devices, components, and/or a combination thereof.

In the description of the present disclosure, it is to be understood that, terms such as "front, rear, up, down, left or right", "transverse, longitudinal, vertical, or horizontal", "top or bottom", and the like are usually based on the orientation or positional relationships shown in the drawings and are used only to facilitate and simplify the description of the present disclosure. In the absence of any indication to the contrary, these orientation words do not indicate and imply that the device or component referred to must have a particular orientation or be constructed and operated in a particular orientation, and therefore cannot be construed as limiting the scope of protection of the present disclosure. The orientation words "inside or outside" refer to the inside and outside relative to the contours of the components themselves.

For ease of description, spatially relative terms such as "on...", "above...", "on an upper surface of...", "upper", and the like may be used here to describe the spatial position relationship between a device or feature and other devices or features as shown in the figure. It is to be understood that, the spatially relative terms are intended to cover different orientations in use or operation other than the orientation of the device described in the figure. For example, if the devices in the drawings are inverted, the devices described as "above" or "on" other devices or configurations will later be positioned as "below" or "under" other devices or configurations. Therefore, the exemplary term "above..." may include both orientations of "above..." and "below...". The device may also be positioned in other different ways (rotating 90 degrees or in other orientations), and the spatially relative descriptions used here are explained accordingly.

In addition, it is to be noted that, the use of words such as "first" and "second" to limit the parts is only to facilitate the distinguishing of corresponding parts, if not otherwise stated, the above words do not have a special meaning, and therefore cannot be understood as a limitation of the scope of protection of the present disclosure.

The above are only the preferred embodiments of the present disclosure and are not intended to limit the present disclosure. For those skilled in the art, the present disclosure may have various modifications and variations. Any modifications, equivalent replacements, improvements and the like made within the spirit and principle of the present disclosure shall fall within the scope of protection of the present disclosure.

### Industrial Applicability

The solutions provided in the embodiments of the present disclosure may be applied in the field of three-dimensional printing technology. In the embodiments of the present disclosure, the post-processing apparatus of the provided system for three-dimensional printing comprises the object receiving mechanism and the driving mechanism. The object receiving mechanism comprises the object receiving body, and the object receiving body is configured to carry a 3D printed object with residual printing materials. The driving mechanism is configured to allow the object receiving mechanism to rotate from the first state to the second state such that the residual printing materials drip from the 3D printed object, where the 3D printed object has at least two different tilt angles. By using the above method, by adjusting a dripping angle to cause an entire dripping process to be not fixed to a single dripping position, the residual printing materials on the 3D printed object can be better separated, and the efficiency of separating residual resins is improved. Furthermore, by means of the method provided in the present disclosure, a better resin separation effect can be at least achieved, solvent consumption and cleaning time during later cleaning are reduced, and the separated resins may also be recycled.

## Claims

1. A system for three-dimensional printing, comprising a post-processing apparatus, wherein the post-processing apparatus comprises:
an object receiving mechanism, comprising an object receiving body, wherein the object receiving body is configured to carry a 3D printed object with residual printing materials; and
a driving mechanism, configured to allow the object receiving mechanism to rotate from a first state to a second state such that the residual printing materials drip from the 3D printed object, wherein the 3D printed object has at least two different tilt angles.

2. The system according to claim 1, wherein the driving mechanism is configured to maintain the object receiving mechanism in the first state for a first time period.

3. The system according to claim 1, wherein the post-processing apparatus further comprises at least one of a temperature regulation mechanism, an air outlet mechanism, or a vibration mechanism;
wherein the temperature regulation mechanism is configured to generate dynamic temperature distribution and/or regulate, based on a pre-configured temperature control strategy, a temperature of a region in which the 3D printed object is located; the air outlet mechanism is configured to generate a flowing gas such that the 3D printed object is placed in the flowing gas to accelerate a flowing of the residual printing materials; and the vibration mechanism is configured to vibrate the 3D printed object to accelerate the flowing of the residual printing materials.

4. The system according to claim 1, the system further comprising a 3D printing device, wherein the 3D printing device comprises a forming platform, a material tray, and a separation apparatus, the forming platform has a forming surface, the forming surface is configured to adhere the 3D printed object, and the separation apparatus is configured to separate the 3D printed object from the forming surface.

5. The system according to claim 4, wherein the object receiving body is configured to be allowed to move between a first position and a second position, the object receiving body is configured to receive, in the first position, the 3D printed object with the residual printing materials separated from the forming surface, and the object receiving body is allowed to rotate from the first state to the second state in the second position.

6. The system according to claim 4, the system further comprising an object transferring assembly, wherein the object transferring assembly is configured to be allowed to move between a first position and a second position, in the first position, the object transferring assembly is configured to receive the 3D printed object separated from the forming surface, and in the second position, the object transferring assembly transfers the 3D printed object to the object receiving body.

7. The system according to claim 1, wherein the object receiving body has an opening, a liquid outlet, and an accommodating cavity for accommodating the 3D printed object, and the opening and the liquid outlet are both in communication with the accommodating cavity.

8. The system according to claim 1, wherein the driving mechanism further comprises a first transmission mechanism, and the first transmission mechanism is connected to the object receiving body in a driving manner, so as to drive the object receiving body to rotate around a transverse axis.

9. The system according to claim 1, wherein the object receiving mechanism further comprises a material recycling container, and the material recycling container is configured to receive a printing material from the object receiving body.

10. The system according to claim 9, wherein the object receiving mechanism further comprises:
a first liquid receiving container and a second liquid receiving container, wherein the first liquid receiving container is configured to receive the printing material from the object receiving body, and the second liquid receiving container communicates with the first liquid receiving container and the material recycling container; and
optionally, a liquid receiving track is provided between the second liquid receiving container and a 3D printing device.

11. The system according to claim 9, wherein the object receiving mechanism further comprises a pipeline configured to convey the printing material to a material tray, one end of the pipeline communicates with the material recycling container, and the other end of the pipeline communicates with the material tray.

12. The system according to claim 1, wherein the object receiving mechanism further comprises an object receiving container, the driving mechanism is able to rotate the object receiving body to move the 3D printed object out from the object receiving body and move the 3D printed object into the object receiving container through an opening of the object receiving container.

13. The system according to claim 4, wherein the separation apparatus comprises a shoveling mechanism, the shoveling mechanism comprises: a mounting rack; a shoveling blade, movably provided on the mounting rack, wherein the shoveling blade has an initial position relative to the mounting rack; and a shoveling driving assembly, configured to drive at least one of the shoveling blade or the forming platform such that the shoveling blade and the forming platform move relative to each other, so as to separate the 3D printed object from the forming surface by the shoveling blade.

14. The system according to claim 13, wherein the shoveling mechanism further comprises a cleaning member, the cleaning member is disposed on a side close to the shoveling blade, and in a process of the shoveling blade moving from the initial position, an end of the cleaning member abuts against a surface of the shoveling blade and slides along the surface of the shoveling blade.

15. The system according to claim 14, wherein when the shoveling blade is located in the initial position, an end of the cleaning member protrudes or is flush with the surface of the shoveling blade; and/or
when the shoveling blade is located in the initial position, an end of the cleaning member tilts towards a direction close to the shoveling blade; and/or
the shoveling blade has a cutter edge, and when the shoveling blade is located in the initial position, the cutter edge abuts against a side wall of the cleaning member; and/or
a side surface of the shoveling blade has an inclined plane, the inclined plane extends to an end portion of the shoveling blade, and in the process of the shoveling blade moving from the initial position, an upper end of the cleaning member abuts against the inclined plane and slides along the inclined plane; and/or
in a direction that the shoveling blade moves from the initial position, the shoveling blade tilts upwards.

16. The system according to claim 13, wherein the shoveling mechanism further comprises a liquid receiving member, which is provided on the mounting rack; the liquid receiving member has a liquid receiving port; and the liquid receiving port corresponds to at least one position of the shoveling blade such that the liquid receiving member receives the printing material adhering to the shoveling blade.

17. The system according to claim 6, wherein the object transferring assembly comprises a receiving component and an object transferring driving assembly; the receiving component is configured to receive, in the first position, the 3D printed object separated from the forming platform; the object transferring driving assembly is configured to drive the receiving component from the second position to the first position in a material receiving direction, and drive the receiving component from the first position to the second position in a material sending direction; and the receiving component is provided with a liquid discharging portion such that the printing material is able to be discharged from the receiving component through the liquid discharging portion during an object receiving process of the receiving component.

18. The system according to claim 17, wherein the receiving component comprises a bottom plate and a side plate connected to the bottom plate, an accommodating cavity for storing the 3D printed object is enclosed by the bottom plate and the side plate, and the liquid discharging portion is disposed on the bottom plate.

19. The system according to claim 18, wherein the liquid discharging portion has an outlet, and the outlet is opposite to at least partial opening of the material tray in a vertical direction; and/or
the receiving component further comprises a bearing plate disposed above the bottom plate, a liquid storage cavity is formed between the bottom plate and the bearing plate, and the bearing plate is provided with a plurality of liquid passing holes.

20. The system according to claim 4, wherein the 3D printing device further comprises a locking mechanism for the forming platform, and the locking mechanism comprises:
a locking assembly, comprising a fixed frame, a fixed plate, and a movable block, wherein the movable block is movably provided on the fixed frame, the fixed plate has a mounting groove, and the mounting groove has an opening; and
a platform fixing member, configured to be connected to the forming platform, wherein the platform fixing member is able to extend into the mounting groove through the opening;
the fixed plate has a first engagement element, a first end of the platform fixing member has a second engagement element mated with the first engagement element in an engagement manner, and the movable block has a locking position in which the movable block abuts against a second end of the platform fixing member and an unlocking position in which the movable block separates from the second end of the platform fixing member.

21. The system according to claim 20, wherein the first engagement element comprises an engagement groove, the second engagement element comprises a wedge-shaped block, and the wedge-shaped block extends into the engagement groove and is cooperated with the engagement groove in an engagement manner.

22. The system according to claim 20, wherein the movable block has a first limiting slope; the second end of the platform fixing member has a second limiting slope; when the movable block is located in the locking position, the first limiting slope abuts against the second limiting slope; and when the movable block is located in the unlocking position, the first limiting slope is separated from the second limiting slope.

23. The system according to claim 4, wherein the 3D printing device further comprises a floating material tray mechanism, and the floating material tray mechanism comprises:
a base plate, having a material tray mounting groove, wherein the material tray mounting groove is provided on the base plate, and a side portion of the material tray mounting groove has an opening for inserting the material tray;
a floating block, vertically disposed below the base plate in a floatable manner, wherein when the floating block floats upward, an upper end of the floating block is able to extend into the material tray mounting groove, so as to push against the material tray; and
a latching assembly, comprising a driving member and a latching member, wherein the driving member and the latching member are provided on a side of the base plate or the floating block, the driving member is able to drive the floating block to rise upward; and the latching member is able to maintain the floating block rising upward to lock the material tray, or the latching member is able to maintain the floating block descending lower such that the material tray is able to be taken and placed through the opening.

24. The system according to claim 23, wherein the latching member comprises an electromagnet and a magnetic plate; one of the electromagnet and the magnetic plate is arranged on the base plate, and the other one of the electromagnet and the magnetic plate is arranged on a side of the floating block away from the base plate; when the electromagnet is in a power-off state, the driving member drives the floating block to rise upward, and the material tray is able to be taken and placed through the opening; and when the electromagnet is in a power-on state, the electromagnet is able to be cooperated with the magnetic plate in a magnetic manner such that the floating block locks the material tray.

25. The system according to claim 23, wherein the floating block has an upper position and a lower position; when the floating block is located in the upper position, the floating block extends into the material tray mounting groove, so as to push against and lock the material tray; when the floating block moves from the upper position to the lower position, the floating block is separated from the material tray;
the latching member comprises a moving member; the moving member is movably provided on the base plate; the moving member has a contact state in which it is in contact with the floating block and a separation state in which it is separated from the floating block; when the moving member is in the contact state, the floating block maintains in the lower position; and when the moving member is in the separation state, the driving member drives the floating block to move from the lower position to the upper position.

26. The system according to claim 4, wherein the 3D printing device further comprises a liquid addition mechanism, and the liquid addition mechanism comprises:
a liquid addition box, having an inner cavity, and a liquid inlet and a liquid outlet communicated with the inner cavity;
a liquid inlet pump, wherein one end of the liquid inlet pump communicates with the liquid inlet, the other end of the liquid inlet pump communicates with a feeding container, and the liquid inlet pump is configured to convey the printing material from the feeding container to the liquid addition box;
a liquid outlet pump, wherein one end of the liquid outlet pump communicates with the liquid outlet, the other end of the liquid outlet pump communicates with a material tray of the 3D printing device, and the liquid outlet pump is configured to convey the printing material from the liquid addition box to the material tray of the 3D printing device; and
a controller, communicatively connected to the liquid inlet pump and the liquid outlet pump, wherein the controller is configured to start or stop the liquid inlet pump and the liquid outlet pump.

27. The system according to claim 26, wherein the liquid addition mechanism further comprises a collection tank, an overflow port is provided on a side wall of the liquid addition box, and the collection tank is located on a side of the liquid addition box and is disposed corresponding to the overflow port.

28. The system according to claim 27, wherein the liquid addition mechanism further comprises a base, the liquid addition box and the collection tank both are disposed on the base, a baffle plate extending upward is provided on an edge of the base, and an upper edge of the baffle plate is higher than a notch of the collection tank; and/or a liquid leakage sensor configured to detect liquid leakage is disposed in the collection tank.

29. The system according to claim 4, further comprising a cloud, wherein the cloud is configured to:
acquire a plurality of three-dimensional models to be printed, and user case information corresponding to the plurality of three-dimensional models in the cloud, respectively;
classify the plurality of three-dimensional models based on the user case information, so as to obtain a target three-dimensional model matching a target user case; and
allocate the plurality of classified target three-dimensional models to the 3D printing device and/or a post-processing device according to a preset production strategy, so as to produce three-dimensional objects, wherein the production strategy comprises setting the target three-dimensional models belonging to a same user case in a same production sequence.

30. The system according to claim 29, wherein the cloud is further configured to:
determine case identifiers respectively corresponding to the plurality of three-dimensional models according to the user case information, use a case identifier indicated by the target user case information as a target case identifier; and determine from the case identifiers respectively corresponding to the plurality of three-dimensional models, a target three-dimensional model matching the target case identifier, so as to obtain the target three-dimensional model matching the target user case; or
determine, according to the user case information, model uploading times respectively corresponding to the plurality of three-dimensional models; and determine the three-dimensional models uploaded within a same time interval as the target three-dimensional models of the same user case.

31. The system according to claim 29, wherein after obtaining the target three-dimensional model matching the target user case, the cloud is further configured to:
provide layout of the target three-dimensional models belonging to the target user case, so as to obtain a target layout result matching the target user case; and
send the target layout result to the 3D printing device for three-dimensional printing.

32. The system according to claim 29, wherein the production sequence comprises one or more printing tasks, and the production strategy is configured to:
incorporate the target three-dimensional models belonging to the same user case to a same printing task for printing; or
set the target three-dimensional models belonging to the same user case to a plurality of printing tasks, and send the plurality of printing tasks to the same 3D printing device for printing; or
set the target three-dimensional models belonging to the same user case to a plurality of printing tasks, and send the plurality of printing tasks to different 3D printing devices for printing, respectively.

33. The system according to claim 29, wherein the production sequence comprises one or more printing tasks, and the production strategy is configured to:
acquire the number of models of the target three-dimensional models matching any user case, and when the number of models is greater than a first preset number, divide all the target three-dimensional models into a plurality of tasks and send them to the same 3D printing device for printing; or
acquire an estimated printing time matching any user case, and when the estimated printing time is longer than a preset time, send unprinted target three-dimensional models corresponding to the user case to other 3D printing devices for printing; or
acquire operating states of all 3D printing devices, and when there is a 3D printing device in an idle state, send the unprinted target three-dimensional models in the 3D printing device with the largest number of tasks to the 3D printing device in the idle state for printing; or
acquire the number of models of the target three-dimensional models matching any user case, and when the number of models is less than a second preset number, set the target three-dimensional models and target three-dimensional models of other user cases in the same layout and sends them to the same 3D printing device for printing.

34. The system according to claim 29, wherein the production strategy is configured to:
determine production priorities corresponding to target user case information, and allocate the plurality of classified target three-dimensional models to the 3D printing device for three-dimensional object production according to a sequence of the production priorities; and/or
adjust, in response to a priority setting operation triggered by a user, the production priorities corresponding to the target user case information, so as to obtain updated production priorities, and produce the three-dimensional objects based on the updated production priorities.

35. The system according to claim 29, wherein the 3D printing device comprises:
a first controller, configured to receive the plurality of classified target three-dimensional models sent by the cloud, and user case information respectively corresponding to the plurality of target three-dimensional models;
a printing mechanism, configured to perform three-dimensional printing based on the plurality of target three-dimensional models, so as to form a plurality of 3D printed objects; and
a pick-up apparatus, configured to, after the printing of each task is completed, pick up the plurality of 3D printed objects based on a preset pick-up strategy, wherein the pick-up strategy comprises setting the 3D printed objects belonging to the same user case to one or more storage members.

36. The system according to claim 35, wherein the 3D printing device is further configured to:
control a motion parameter of the pick-up apparatus of the 3D printing device according to layout information, when 3D printed objects respectively corresponding to more than two user cases are the same production sequence of the 3D printing device, and after completing the picking up of the 3D printed objects of one user case, pick up the 3D printed objects of the next user case, so as to realize the picking up of the 3D printed objects in a printing region in sequence.

37. The system according to claim 35, wherein the pick-up apparatus comprises:
an object receiving assembly, comprising one or more storage members, wherein the storage member is configured to store the 3D printed object; and
the object receiving assembly stores the 3D printed objects belonging to the same user case in one or more storage members.

38. The system according to claim 37, wherein the object receiving assembly comprises a conveying mechanism, the conveying mechanism is configured to drive the storage member to move to an object receiving position, and when the storage member is located in the object receiving position, the 3D printed object enters into the storage member through an opening of the storage member.

39. The system according to claim 38, further comprising an object transferring assembly, wherein the object transferring assembly is configured to be moved between a first position and a second position, in the first position, the object transferring assembly is configured to receive the 3D printed object separated from the forming surface, in the second position, the object transferring assembly transfers the 3D printed object to the object receiving body, the driving mechanism is able to rotate the object receiving body to move the 3D printed object out from the object receiving body and enter the storage member through an opening of the storage member; or
the object receiving body is configured to be moved between the first position and the second position, the object receiving body is configured to receive, in the first position, the 3D printed object with the residual printing materials separated from the forming surface, and the object receiving body is rotated from the first state to the second state in the second position; and the driving mechanism is able to rotate the object receiving body to move the 3D printed object out from the object receiving body and move the 3D printed object into the storage member through the opening of the storage member.

40. The system according to claim 38, wherein
the object receiving assembly further comprises an opening mechanism, and the opening mechanism is disposed at the end portion of the conveying mechanism; and
the opening mechanism comprises a first unit configured to drive a first end of the storage member and a second unit configured to drive an opposite second end of the storage member, wherein the first end of the storage member and the second end of the storage member are movable relative to each other such that the opening of the storage member is switched between an open state and a closed state.

41. The system according to claim 40, wherein the first unit comprises a fixed mechanism, and the second unit comprises a mobile mechanism, the mobile mechanism is movably provided and has an initial position close to the fixed mechanism and a pulling position away from the fixed mechanism; and when the storage member moves to the object receiving position, the fixed mechanism fixes the first end of the opening of the storage member, and the mobile mechanism is connected to the second end of the opening of the storage member and is able to pull open the opening of the storage member.

42. The system according to claim 38, wherein the storage member is disposed on the conveying mechanism and is configured to convey the storage member in a vertical direction; the object receiving assembly further comprises a sealing mechanism; the sealing mechanism is disposed below the conveying mechanism; the sealing mechanism has an avoidance position and a sealing position; the storage member is located in the sealing mechanism; and when the sealing mechanism moves from the avoidance position to the sealing position, the sealing mechanism seals the storage member.

43. The system according to claim 42, wherein the conveying mechanism further comprises a base frame and a guiding cylinder; the guiding cylinder is disposed on the base frame, and the storage member is sleeved on the guiding cylinder; the conveying mechanism is disposed outside the guiding cylinder; and the sealing mechanism is located below the guiding cylinder.

44. The system according to claim 43, wherein the conveying mechanism further comprises a rolling member, the rolling member is disposed outside the guiding cylinder and is in pressure contact with the storage member, and the rolling member rotates to move the storage member.

45. The system according to claim 43, wherein the object receiving assembly further comprises a tightening assembly, the tightening assembly is disposed between the sealing mechanism and the guiding cylinder, the tightening assembly comprises a first tightening member and a second tightening member disposed opposite to each other, and the first tightening member and the second tightening member are able to get close to each other relatively or be away from each other; and
the object receiving assembly further comprises a cutting assembly, the cutting assembly is disposed on a side of the tightening assembly away from the guiding cylinder, and the cutting assembly is configured to cut off the storage member between two seals.

46. The system according to claim 38, wherein
the storage member has a first object receiving position and a second object receiving position, and the conveying mechanism is able to drive the storage member to move between the first object receiving position and the second object receiving position;
when the storage member is located in the first object receiving position, the separation apparatus enables the 3D printed object on the forming surface to enter the storage member; and
when the storage member is located in the second object receiving position, the conveying mechanism clamps the storage member to prepare for placing the storage member on a storage rack, or the conveying mechanism transfers the 3D printed object in the storage member to a container.

47. The system according to claim 46, wherein the conveying mechanism comprises a sliding assembly, and the sliding assembly is able to drive the storage member to move between the first object receiving position and the second object receiving position.

48. The system according to claim 47, wherein the storage member comprises a storage box, the storage box comprises a box body and a lid configured to open and close the box body, and the lid is provided with a stopper.

49. The system according to claim 48, wherein an opening portion is provided on a side wall of the box body, the container is disposed on a side of the opening portion, and the sliding assembly is further configured to transfer the three-dimensional object in the storage member to the container.

50. The system according to claim 49, wherein the object receiving assembly further comprises a support frame, the plurality of containers are movably provided on the support frame, and the sliding assembly is able to place the three-dimensional objects from the storage box in at least one of the plurality of containers.

51. The system according to claim 49, wherein there are a plurality of storage boxes; the conveying mechanism comprises a manipulator; the manipulator is able to clamp and move one of the plurality of storage boxes to the object receiving position; and after the three-dimensional object is packed in the storage box, the manipulator clamps the storage box and place the storage box on the storage rack.

52. The system according to claim 4, wherein the 3D printing device further comprises a heat dissipation mechanism for dissipating heat from materials in the material tray, and the heat dissipation mechanism comprises at least one of: a fan, a cooling medium, or a scraper.

53. A method for three-dimensional printing, comprising:
controlling an object receiving mechanism to carry a 3D printed object with residual printing materials; and
rotating the object receiving mechanism from a first state to a second state such that the residual printing materials drip from the 3D printed object, wherein the 3D printed object has at least two different tilt angles.

54. The method according to claim 53, wherein the object receiving mechanism in the first state is maintained for a first time period.
